# EUROPEAN PATENT APPLICATION

(11) **EP 1 757 342 A2**
(43) Date of publication of application: **28.02.2007**
(21) Application number: 06017162.6
(22) Date of filing: 17.08.2006
(51) Int. Cl.: A63F 13/02, A63F 13/12, A63F 13/08

(54) **Gaming machine**

(30) Priority: 23.08.2005 JP 2005241779; 12.10.2005 JP 2005298048; 04.11.2005 JP 2005321579; 23.08.2005 JP 2005241780; 24.10.2005 JP 2005309032; 04.11.2005 JP 2005321580; 23.08.2005 JP 2005241781; 24.10.2005 JP 2005309033; 04.11.2005 JP 2005321581
(71) Applicant: Aruze Corp., Tokyo 135-0063 (JP)
(72) Inventor: Okada, Kazuo, Tokyo 135-0063 (JP); Fujimoto, Jun, Tokyo 135-0063 (JP)
(74) Representative: HOFFMANN EITLE

(57) **Abstract**

It is an object of the present invention to provide a highly convenient game machine whereby a player can safely play a game. In the game machine of the present invention, the individual data of a player is read from a card inserted into a card reception part (721), and a game program is executed together with game input data that is input from input means (71). In this machine, the card is detected and a notification is issued if the player is not seated in the seat.

## Description

### FIELD OF THE INVENTION

The present invention relates to a game machine.

### RELATED ART

In a first aspect of the background art, conventionally, in game machines for commercial use, not only game machines which perform games separately, but also those commonly referred to as multi-player game machines, are known. In recent years, there has been a horse-racing game machine as such a multi-player game machine. A multi-player game machine such as this includes, for example, a main game machine body to which a large main display part is provided and a plurality of terminal devices to which sub-display parts which are attached to the main game machine body are provided (for example, see Patent Reference 1).

In this multi-player game machine, race horses and the odds thereof are shown in the main display part and the sub display part. Each player selects an arbitrary race horse from the race horses shown and bets with medals. Subsequently, a horse race is performed by these race horses in the main display part, and according to the results, each player is paid medals based on the predetermined odds.

In addition, the gaming history of the player can be stored in a memory device, such as a card. Furthermore, continuous playing is made possible through enjoyment of a training process, by training race horses and jockeys during the game and storing the data thereof in a card, and therefore, a new form of enjoyment is provided.

Furthermore, the card can be used as a prepaid card by purchasing gaming rights by paying a predetermined amount of money and storing this as credit. This is not limited to multi-player games and applies to ordinary game machines as well.

Patent Reference 1: Japanese Patent Application Laid-Open Publication Heisei 10-314450

In a second aspect of the background art, conventionally, multi-player-type game machines for commercial use, in which numerous players participate, commonly referred to as multi-player game machines, are known. There has been, for example, a horse-racing game machine as such a multi-player game machine. A multiple player game machine such as this includes a main game machine body to which a large main display part is provided and a plurality of terminal devices to which sub-display parts are provided.

These plural terminal devices include seats, respectively, which seat the players and face the main display part. In this terminal device, each player sits in the seat and performs various operations while viewing the sub-display part.

In this multi-player game machine, race horses and the odds thereof are shown in the main display part and the sub display part. Each player selects an arbitrary race horse from the race horses shown and bets with medals. Subsequently, a horse race is performed by these race horses in the main display part, and according to the results, each player is paid medals based on the predetermined odds.

In a multi-player game machine such as this, a realistic feeling of being at the racetracks can be enjoyed by listening to the sounds output from a speaker while viewing a video shown in the main display part.

In addition, as a multi-player game, there is an integrated gaming system which includes a cockpit for seating a plurality of players within a theater which is provided with a large screen (refer to Patent Reference 1).

In this integrated game system, a personal computer device provided in each cock pit is connected to an integrated computer device for gaming, and these devices operate together to run a game. Thus, a realistic feeling and tension which cannot be attained through a privately-owned game machine is provided by generating loud sounds and vibrating sensations among the players within the theater.

In a third aspect of the background art, conventionally, a game hall includes a large number of various game machines called arcade games. These game machines are activated (enters a state enabling a game to be played) when a customer inserts a coin, such as a hundred yen coin, an original game hall medal or the like into respective game machines. Therefore, in each game machine, a large amount of medals, such as coins and the like, were thrown into medal boxes placed within each game machine and stored.

Incidentally, in recent years, the reduction in the cost of liquid crystal display devices has continued, and liquid crystal display devices are starting to be used widely in place of CRT (tube) display devices, even in game machines such as this, for the monitor part of the main game machine body. This is because liquid crystal display devices are advantageous in that they are more power-saving compared to the CRT display devices, capable of providing flat images, and space-saving.

However, because a liquid crystal display device such as this is structured to enclose a special liquid between two glass plates, change the direction of the liquid crystal molecules by applying electrical pressure, and display an image by increasing and reducing the transmission of light, it was softer and more fragile than the conventional CRT display device.

Therefore, when a conventional CRT display device is replaced with a liquid crystal display device, if a medal box is provided within the main game machine body and the main game machine body and the monitor part are formed integrally, as in the game machine implementing the CRT display device, there is a risk that the medal from within the medal box will be stolen from the monitor part by breaking the monitor part in the main game body. Thus, there was a problem in that, in order to replace the CRT display screen of a conventional game machine directly with a flat display, such as a liquid crystal device, security on the display device had to be tightened.

In response, a technology for reinforcing the monitor surface by using a protective cover glass which is not easily broken, such has reinforcing glass, on the monitor surface of a liquid crystal display device has been disclosed (for example, refer to Patent Reference 2). This is a technology in which the liquid crystal film of the liquid crystal display is sandwiched between a pair of glass plates.

Patent Reference 2: Japanese Patent Application Laid-Open Publication Heisei 08-33759

### DISCLOSURE OF THE INVENTION

### SUMMARY OF THE INVENTION

However, if a game is played using a card, as in the first aspect of the background art, instances in which the player forgets the card and leaves his seat after the game occur often. In this case, there is risk the forgotten card will be misused by another person, and a problem occurs in that the stored credit is used. In addition, there was also a problem in that the process for re-issuing the card is troublesome and costly. Furthermore, when the card is not re-issued, the game and credits stored in the card are lost, and instances in which the player's sense of enjoyment diminishes significantly and the player gives up on continuing the game also occur.

Furthermore, the card insertion slot is often provided in a device which is separate from the terminal device. Because it is sometimes in a location which is difficult to see when the player is seated in the seat, the possibility of the card being forgotten increases.

In light of the forgoing circumstances, as a first issue of the present invention, a first object of the invention is to provide a game machine that prevents a reduction in a player's sense of enjoyment by preventing the player from leaving the card behind, and preventing the card that has been left behind from being stolen.

Another problem is that, for example, a game machine provided with the above-described plurality of terminal devices occupies a considerable space in a game area. Yet another problem is that the terminal device occupies a considerable space in a storage area if the terminal devices are stored in a designated storage area when not in use.

In light of the forgoing circumstances, as a first issue of the present invention, a second object of the invention is to provide a game machine that can be made more compact.

### MEANS USED TO SOLVE THE ABOVE-MENTIONED PROBLEMS

The present invention provides the following game machine in order to attain the first object of the invention as the first issue of the present invention.

In a first aspect of the present invention, a game machine includes: a game controller (for example, an input operation part 72, described hereafter) for receiving input from a player; a monitor (for example, a main display device 22 and a sub-display part 61, described hereafter) for receiving externally or generating internally and showing a game screen, generated according to a game program; a control means (for example, a CPU 81, described hereafter) for executing a game program; a seat part (for example, a seat 31, described hereafter) for seating the player; and a card reception part (for example, a card slot 712, described hereafter) for receiving a card for playing a game; in which the seat part includes a seating detection means (for example, seating sensors 525, which are embedded in a seating part 52 and a back rest 53, described hereafter) for detecting that a player is seated; and a notification means (for example, speakers 75, lamps 76, and an input and output part 94) for performing notification when a seated player is not detected and a card is inserted into the card reception part.

According to the first aspect of the present invention, the game machine has a notification for performing notification when the seating detection does not detect seating and a card is inserted into the card reception part.

In this way, because notification is given if a card is in the card reception part regardless of the player leaving the seat, it is possible to prevent a card from being left behind. In addition, a game machine which can enable the player's sense of enjoyment to continue by preventing the card from being left behind can be provided.

In a second aspect of the present invention, the game machine according to the first aspect of the present invention has a card which includes a memory for storing credit data to which subtraction processing is performed when the game program is executed, and a control means which executes the game program by performing subtraction processing on the credit data read by the card reception part included in the seat part.

According to the second aspect of the present invention, in addition to the first aspect, a game is started by performing a subtraction processing on the credit data when starting the execution of a game program, by storing credit data in a memory included within the card.

In this way, the card is given monetary value and the importance of the card to the player increases, thus, encouraging players to keep the card in mind so as to eliminate cards being left behind.

In a third aspect of the present invention, a game machine includes: a main game machine body (for example, a main game machine body 20) which includes a memory means (for example, a database 84, described hereafter) for storing a game program and a main control means (for example, a CPU 81, described hereafter) for executing the game program stored in the memory means; a plurality of terminal devices (for example, a terminal device 30, described hereafter) which includes an input means (for example, an input operation part 72, described hereafter) for receiving input from a player, and a sub-control means (for example, a CPU 91 described hereafter), connected to the main game machine body through wireless connection, for transmitting game input data according to input from the input means to main control means of said main game machine body; a display means (for example, a main display device 22 and a sub-display part 61, described hereafter) for displaying image based on image data output from the main control means; in which the main control means receives a plurality of game input data from a plurality of terminal devices, generates a single game data according to the game program based on this plurality of game input data, and generates and outputs to the display means image data which is shared by all terminal devices based on this single game data; the terminal device includes a seat part (for example, a seat 31, described hereafter) for enabling the player to be seated; the seat part includes a card reception part (for example, a card slot 712, described hereafter) to which a card storing individual data of a player is inserted, for reading the individual data, and a seat detection part (for example, seating sensors 525, which are embedded in a seating part 52 and a back rest 53, described hereafter) for detecting that a player is seated; the card reception part includes a card detection part (for example, a card sensor 723) for detecting that a card is inserted into the card reception part; the sub-control means executes the game program based on the individual data read from the card reception part and/or game input data received by the input means; and the sub-control means includes a notification means (for example, speakers 75, lamps 76, and an input and output part 94) for giving notification when the card detection part detects the card and the seating detection part does not detect seating.

According to the third aspect of the present invention, in a game machine which includes a main game machine body and a plurality of terminal devices which are connected by wireless connection, the game machine which reads individual data of a player from a card inserted into the card reception part and executes a game program, in addition to the game input data input from the input means, gives notification by the notification means when the card is detected and that the player is not seated in the seat is detected.

In this way, because the game machine gives notification when the card is in the card reception part regardless of the player having left the seat, the game, cards being left forgotten can be prevented. Furthermore, because individual data and credit information of the player regarding the game are stored, the game can be continued using this individual data. In addition, it is also possible, in some instances, to enable a player's enjoyment to continue by preventing the card from being left behind, such as this.

In a fourth aspect of the present invention, the game machine according to the third aspect of the present invention has a card which includes a memory for storing credit data to which subtraction processing is performed when the execution of the game program starts, in which the sub-control executes the game program by performing subtraction processing on the credit data read by the card reception part.

According to the fourth aspect of the present invention, in addition to the third aspect, the game machine starts the game by performing subtraction processing on the credit data when the execution of the game program starts, by storing the credit data in the memory included in the card.

In this way, the card is given so-called monetary value and the importance of the card to the player increases, thus, encouraging players to keep the card in mind so as to eliminate cards being left behind.

In a fifth aspect of the present invention, the game machine according to one of the third and fourth aspect of the present invention has: a sub-control means which includes a time measurement means (for example, a time measurement part 98, described hereafter) for measuring time; a notification which further includes a lamp part (for example, lamps 76, described hereafter) for emitting light, a sound (ex, voice) output part (for example, an input and output part 94 and speaker 75, described hereafter) for performing notification by sound, and a sub-display part (for example, a sub-display part 61, described hereafter) for showing image data generated by the sub-control means; in which, when the seating detection part does not detect seating and the card detection part detects the card, the sub-control means transmits a first notification start signal, the sub-display part shows at least one part of the data read by the card reception part in response to receiving the first notification start signal, the time measurement means measures the time from the first notification start signal, and after a predetermined amount of time passes, if the seating detection does not detect seating and the card detection part detects the card, the sub-control means transmits a second notification start signal, the lamp part is illuminated in response to receiving the second notification start signal, and the sound output part gives second notification by sound in response to receiving the second notification start signal.

According to the fifth aspect of the present invention, in addition to one of the third and fourth aspect, the game machine has a lamp part, a sound output part, and a sub-display part as the notification, gives notification by displaying at least one part of the information in the card in the sub-display part and through sound as the first notification, and if the card is still detected thereafter, gives notification by light from the lamp and sound as the second notification.

In this way, notification can be given in two stages such as, for example, the player is alerted of the card being left behind by the first notification, and if the card is still detected, other people are also notified by sound and lights. Then, the possibility of the card being left behind can be reduced.

In a sixth aspect of the present invention, the game machine according to the fifth aspect of the present invention has a sub-display part which includes a support part (for example, a support arm 611 and 612, described hereafter), fixed at one end to the seat part and connected at the other end to the sub-display part, for supporting the sub-display part to enable positional changes, and a fixation driving mechanism (for example, a connection part 615 and 616 and a display part fixation driving control device 63, described hereafter) for fixing the sub-display part with the support part so as to face the player in a state enabling viewing; in which the sub-control means transmits a sub-display fixation release signal to the fixation driving mechanism if the card detection part does not detect the card on the card reception part, and the fixation driving mechanism releases the sub-display fixation part.

According to the sixth aspect of the present invention, in addition to the fifth aspect, the sub-display part is fixed by the fixation driving mechanism by the reception of the sub-display fixation signal, and the fixation of the sub-display part is released by receiving the sub-display fixation release signal.

In this way, because the display part is fixed when the player attempts to leave the seat without removing the card when the game is completed, it can be made so that the player cannot leave the seat because the display part is in the way. The player can be prevented from forgetting to remove the card because there are instances in which the player can realize he has forgotten his card, in this way.

In a seventh aspect of the present invention, a game machine according to the fifth aspect of the present invention has a card reception part which further includes a card holding part (for example, a card holding part 724, described hereafter) for holding the card and a card transfer part (for example, a card transfer device 725, described hereafter) for transferring the card to the card holding part; in which the time measurement means measures the amount of time from the second notification, and the card transfer part transfers the card to the card holding part, when the time measured by the time measurement reaches a predetermined amount of time and the card detection part detects the card.

According to the seventh aspect of the present invention, in addition to the sixth aspect, the card transfer part holds the card in the card holding part if the card is detected even after the time measured by the time measurement means passes a predetermined amount of time.

In this way, if the player leaves behind the card, regardless of the notifications, the card can be held in the card holding part after a predetermined amount of time has passed. Thus, the possibility of the card being stolen by another person can be reduced because the card is held in the card holding part even if it is left behind.

In an eighth aspect of the present invention, the game machine according to the seventh aspect of the present invention has a card holding part which includes a holding detection part (for example, a card holding sensor, described hereafter) for detecting that the card transfer part has transferred the card to the card holding part and transmitting a holding completion signal, in which the sub-control means gives notification through the notification means in response to receiving the holding completion signal.

According to the eighth aspect of the present invention, in addition to the seventh aspect, the notification means gives notice when the card transfer part has stored the card in the card holding part.

In this way, because notification can be given when the card is held in the card holding part, it can be made clear which terminal device is holding the card if, for example, there is a plurality of terminal devices. Therefore, for example, arcade staff or the like can collect the card without searching when collecting the card. In addition, by giving notification, the staff can be encouraged to collect the card and the possibility of the card being left in the card holding part for a long period of time can be reduced, thus, reducing the possibility of theft even further.

In a ninth aspect of the present invention, the game machine according to the fifth aspect of the present invention has said sub-display part comprises a support part, joined by more than two support bodies (for example, support arms 611,612, described hereafter), for supporting said sub-display part to enable stretching and contracting, and a fixation part (for example, connection part 614,615, described hereafter) for fixing a joining part of said more than two support bodies, in which said sub-control means transmits a sub-display fixation signal if said sub-control means transmits a game completion signal to said main control means and said card detection part detects said card ; in which said fixation part fixes said sub-display part by receiving a sub-display fixation signal; in which said sub-control means transmits a sub-display fixation release signal if said card detection part does not detect said card inserted into said card reception part; and in which said sub-display part releases fixation by receiving said sub-display fixation release signal.

According to the ninth aspect of the present invention, in addition to the fifth aspect, the sub-display part is fixed by the fixation driving mechanism by the reception of the sub-display fixation signal, and the fixation of the sub-display part is released by receiving the sub-display fixation release signal.

In this way, because the display part is fixed when the player attempts to leave the seat without removing the card when the game is completed, it can be made so that the player cannot leave the seat because the display part is in the way. The player can be prevented from forgetting to remove the card because there are instances in which the player can realize he has forgotten his card, in this way.

In a tenth aspect of the present invention, the game machine according to the ninth aspect of the present invention has the card reception part which further includes a card holding part (for example, a card holding part 724, described hereafter) for holding the card and said time measurement means for measuring the amount of time from the second notification, and said card reception part holds the card, after a predetermined amount of time passes and the card detection part detects the card.

According to the tenth aspect of the present invention, in addition to the ninth aspect, the game machine holds the card in the card holding part if the card is detected even after a predetermined amount of time passes and the card detection part detects the card.

In this way, if the player leaves behind the card, regardless of the notifications, the card can be held in the card holding part after a predetermined amount of time has passed. Thus, the possibility of the card being stolen by another person can be reduced because the card is held in the card holding part even if it is left behind.

In a eleventh aspect of the present invention, the game machine according to the ninth aspect of the present invention has said terminal devices include a movement means (for example, a traveling part 32, described hereafter), which is provided on the lower part of the seat part, for moving the seat part; and said sub-control means includes a movement control means (for example, a driving control device 322, described hereafter) for driving said movement means.

According to the eleventh aspect of the present invention, in addition to the ninth aspect, including a movement means, the terminal devices moves by a movement control means.

In this way, the terminal device enables to move around, therefore the game machine provides a new interest to the player, and prevents to reduce the motivation toward the game.

According to the present invention, a reduction in a player's sense of enjoyment can be prevented by preventing the player from leaving a card behind, and preventing the card that has been left behind from being stolen.

The present invention provides the following game machine in order to attain the second object of the invention as the first issue of the present invention.

In a twelfth aspect of the present invention, a game machine (for example, a terminal device 30, described hereafter) includes: an input reception part (for example, an input operation part 72, described hereafter) for receiving input from a player, and a control part (for example, a CPU 91, described hereafter) for controlling game input data that corresponds to input from the input reception part; the game machine further including: a seat (for example, a main seat body 50, described hereafter) for seating the player; a seat shell (for example, a seat shell 70, described hereafter) which surrounds the seat; a card reception part (for example, a card slot 721, described hereafter) into which a card provided with memory for storing the individual data of the player is inserted from the outside and which reads the individual data of the player, wherein the seat includes a leg rest (for example, a leg rest 521, described hereafter) linked to the seating part of the seat and connected via a hinge part (for example, a leg rest hinge part 530, described hereafter); a card detection part (for example, a card sensor 723) for detecting that the card has not been inserted into the card reception part; a leg rest driving part (for example, a leg rest driving part 510, described hereafter) for collapsing and storing the leg rest via the hinge part in response to the card detection part detecting that a card has not been inserted; and a reconfiguring drive part (for example, a reconfiguring drive 200, described hereafter) for contracting the seat shell in the longitudinal direction when the leg rest is collapsed and stored by the leg rest driving part.

According to the twelfth aspect of the present invention, a game machine includes: a card reception part to which a card provided with memory for storing the individual data of a player is inserted from the outside and which reads the individual data; a leg rest connected via a hinge part to the seating part of a seat; a card detection part for detecting that a card is not inserted in the card reception part; a leg rest driving part for collapsing and storing the leg rest via the hinge part in response to the card detection part detecting that a card has not been inserted; and a reconfiguring drive part for contracting the seat shell in the longitudinal direction when the leg rest is collapsed and stored by the leg rest driving part. Therefore, when a memory card on which the individual data of a player is stored has not been inserted into the card reception part, the leg rest can be collapsed and stored by the leg rest driving part, and the seat shell can be contracted in the longitudinal direction by the reconfiguring drive part. Since the game machine can thereby be made more compact, the game space can be used efficiently by, for example, reducing the size of the game machine when the game is not being played by a player. In addition, since the game machine can be made more compact and stored, a designated storage space can be used efficiently, for example, when the game machine is stored in the storage space.

A machine that can be made more compact can be provided according to the present invention.

In a terminal device of a multi-player game machine such as that according to the second aspect of the background art, in most instances, there is no space for the player to place his belongings when playing a game. Thus, in most cases, the player had no choice but to place his belongings at his feet or near the seat. In addition, although there are instances in which a hook for hanging belongings or a bag for holding belongings is provided within the terminal device, the hooks and the like cannot be locked to fix the belongings. Therefore, this sometimes causes a reduction in the player's sense of enjoyment because the player cannot concentrate on the game due to fear that his belongings will be stolen while he is playing a game.

In addition, if a wall is placed around the seat of the terminal device, like a shelter, for the effect of playing the game in a private room, in most cases, sufficient space is not provided for placing belongings. Then, the player must play the game while fearing theft because his belongings get in the way it is placed at his feet and are, thus, placed where the player cannot see during the game. Therefore, instances occur in which the player's sense of enjoyment diminishes.

Furthermore, if belongings are stored in a locker or the like beforehand, the player must keep the locker key. Because the locker key is often small, the player often loses the key while concentrating on the game or cannot concentrate on the game because he is worried about the key.

In light of the forgoing circumstances, as a second issue of the present invention, a first object of the invention is to provide a game machine terminal device that can enhance the player's sense of enjoyment by preventing the theft of belongings and allowing the player to concentrate on the game with ease of mind.

In light of the forgoing circumstances, as a second issue of the present invention, a second object of the invention is to provide a gaming machine wherein a holding part for belongings and the like is provided underneath the seat part.

In a thirteenth aspect of the present invention, a game machine includes: a game controller (for example, an input operation part A72, described hereafter) for receiving input from a player; a display part (for example, a main display device A22 and a sub-display part A61, described hereafter) for receiving externally or generating internally and showing a game image, generated according to a game program; a seat part (for example, a seat A31, described hereafter) for seating the player; and a control means (for example, a main control device 80 (A80), described hereafter) for executing a game program; and a lock means (for example, a hook 40 (A40), described hereafter) which has an anti-theft mechanism for hanging or holding the player's belongings, which is normally in an unlocked state and enters a locked state in response to the start of a game.

According to the thirteenth aspect of the present invention, the lock means which is normally in an unlocked state can enter a locked state when the control means receives a game start signal and can enter an unlocked state when a game completion signal is received. In this way, because a key or the like for locking is not required, the player can concentrate on the game without thinking about the whereabouts of the key or theft of his belongings and the player's sense of enjoyment can be enhanced.

In a fourteenth aspect of the present invention, the game machine according to the thirteenth aspect of the present invention has: said lock means which includes a U-shaped hook part (for example, a hook A40, described hereafter) having an upper aperture and connected to the seat part, a stopper (for example, a stopper A413, described hereafter) for closing the upper aperture and preventing the object-to-be-hung hooked to the hook part from being removed, a lock control part (for example, a hook control device A412, described hereafter) for switch-controlling the upper aperture to both closed and open state by engaging the stopper to the upper aperture or releasing the engagement, and a load detection part (for example, a sensor A415, described hereafter) for detecting that an object-to-be-hung is hung on the hook part; in which the lock control part changes the upper aperture from an open-state to a closed-state by the stopper, in response to the load detection part detecting that a object-to-be-hung is hung on the hook part and a predetermined excessive load is applied.

According to the thirteenth aspect of the present invention, when a hook for hanging belongings is provided and the player hangs his belongings on the hook, the load detection can detect this and place the stopper in a closed-state. In this way, the risk of theft of belongings during a game can be reduced. In addition, because this operation is performed automatically and a key for locking is not necessary, the player can concentrate on the game without thinking about the whereabouts of the key or theft of his belongings and the player's sense of enjoyment can be enhanced.

In a fifteenth aspect of the present invention, the game machine according to the thirteenth aspect has: the lock means which includes a U-shaped hook part (for example, a hook A40, described hereafter) having an upper aperture and connected to the seat part, a stopper (for example, a stopper A413, described hereafter) for closing the upper aperture and preventing the object-to-be-hung hooked to the hook part from being removed, a lock control part (for example, a hook control device A412, described hereafter) for switch-controlling the upper aperture to both closed and open state by engaging the stopper to the upper aperture or releasing the engagement; in which the game machine includes a game medium insertion part (for example, a medal insertion part A734, described hereafter) for inserting a predetermined game medium; the game medium insertion part includes a game medium insertion detection part (for example, a sensor A525, embedded in the medal insertion part A734 or a sensor embedded in the card slot A721, described hereafter) for detecting that a predetermined game medium has been inserted; the seat part includes a seating detection part (for example, a seating sensor A525), for detecting that the player is seated; and the lock control part changes the upper aperture from an open-state to a closed-state by the stopper, in response to the game medium insertion detection part detecting the insertion of the predetermined game medium or the seating detection part detecting that the player is seated.

According to the fifteenth aspect of the present invention, in addition to the thirteenth aspect, the lock control part changes the upper aperture to a closed-state by the stopper, in response to the detection of the insertion of the game medium or the seating of the player.

In this way, the upper aperture part can enter a closed state by the stopper by not only applying load of the belongings to the hook, but also by detecting the insertion of the game medium or the seating of the player. In addition, because a key for locking is not necessary, the player can concentrate on the game without thinking about the whereabouts of the key or theft of his belongings and the player's sense of enjoyment can be enhanced.

In a sixteenth aspect of the present invention, the game machine according to the fifteenth aspect has a seating detection part which transmits a lock release signal when the seating of the player is not detected and a lock control part which changes the upper aperture from an open-state to a closed-state by the stopper, in response to receiving the lock release signal.

According to the sixteenth aspect of the present invention, in addition to the fifteenth aspect, the seating detection part transmits a lock release signal when the seating of the player is not detected and the stopper enters an open-state in response to the reception of the lock release signal. In this way, because the stopper automatically enters an open-state when the seating is not detected, such as by the player leaving the seat, the player can remove his belongings from the hook part easily, just by standing up from this seat. In addition, because the conventional action of opening the lock and removing the belongings becomes unnecessary, the player can concentrate on the game without thinking about the whereabouts of the key, and the player's sense of enjoyment can be enhanced.

In a seventeenth aspect of the present invention, the game machine according to a sixteenth aspect of the present invention further includes: a time measurement part (for example, a timer A98, described hereafter) for measuring time; in which the time measurement part measures time in response to the transmission of the lock release signal from the seating detection part, and the lock control part receives the lock release signal and changes the upper aperture from an open-state to a closed-state by the stopper, in response to the passage of a predetermined amount of time measured by the time measurement part.

According to the seventeenth aspect of the present invention, in addition to the sixteenth aspect, the lock control part releases the stopper lock after the time measurement part measures the passage of a predetermined amount of time from the transmission of the lock release signal. In this way, the stopper enters an open-state after a predetermined amount of time has passed since the player stood up from the seat part. In addition, because the stopper can remain in a closed-state until the player stands up from the seat part and reaches the hook part, theft of belongings until the player reaches the hook part can be prevented. Furthermore, the player can concentrate on the game without thinking about the theft of belongings, and the player's sense of enjoyment can be enhanced.

In a eighteenth aspect of the present invention, the game machine according to any one of the fourteenth to seventeenth aspects has the seat part which includes a seat shell (for example, a seat shell A70 described hereafter) for covering the surrounding area of the seat part, in which the hook part is attached to the outside of the seat shell.

According to the eighteenth aspect of the present invention, because a hook is attached to the outside of the seat shell which covers the seat part, it is not necessary to place belongings inside the seat shell. In this way, the belongings do not get in the way of the game, and an environment enabling the player to concentrate on the game further can be provided.

In a nineteenth aspect of the present invention, the game machine according to any one of the fourteenth to seventeenth aspect of the present invention includes: a photographing means (for example, a belongings camera A42, described hereafter) for photographing an image of the object-to-be-hung when the hook part is in a closed-state; in which the display part shows the image of the object-to-be-hung taken by the photographing means.

According to the nineteenth aspect of the present invention, in addition to any one of the fourteenth to seventeenth aspect, the image of the object-to-be-hung is taken when the upper aperture of the hook part is in a closed-state and the image is shown in the display part.

In this way, because the player can confirm the state of his belongings at all times, fear of the theft of his belongings can be reduced. In addition, an environment enabling the player to concentrate on the game can be provided and the player's sense of enjoyment can be enhanced.

In a twentieth aspect of the present invention, the game machine according to any one of the thirteenth to seventeenth aspect of the present invention has: a seat part which includes a movement (for example, a traveling part A32, described hereafter), which is provided on the lower part of the seat part, for moving the seat part; and a control which includes a movement control means (for example, a CPU A91, described hereafter) for driving the movement means.

According to the twentieth aspect of the present invention, in addition to any one of the thirteenth to seventeenth aspect, because a lockable hook is attached to a mobile seat part, a game can be played without the belongings getting thrown down, even when the terminal device moves. In this way, because the risk of theft due to the belongings getting thrown down is reduced, the player can concentrate on the game further, and the sense of enjoyment can be enhanced.

According to the present invention, a game machine is provided whereby a player's sense of enjoyment can be enhanced by preventing the theft of belongings and allowing the player to concentrate on the game with ease of mind.

In an twenty-first aspect of the present invention, a game machine includes: a main game machine body (for, example a main game machine body A20) having storage means (for example, a database A84, described hereafter) for storing a game program, and main control means (for example, a main control device 80 (A80), described hereafter) for executing the game program stored in the storage means; a plurality of terminal devices (for example, terminal devices A30, described hereafter) having input means (for example, an input control part A72, described hereafter) for receiving input from a player, and sub-control means (for example, a sub-control device A90, described hereafter) wirelessly connected to the main game machine body and used to transmit to the main control means game input data that corresponds to the input received from the input means; and display means (for example, a main display device A22 and a sub display part A61, described hereafter) for displaying an image based on image data output from the main control means; wherein the main control means receives the plurality of game input data transmitted from the plurality of terminal devices, generates a single piece of game data in accordance with the game program on the basis of the plurality of game input data, generates image data common to all of the plurality of terminal devices based on the single piece of game data, and outputs the image data to the display means; the terminal devices include a seat (for example a seat A31, described hereafter) which allows the input means to be operated while the player is seated, a hook part (for example, a hook A40, described hereafter) mounted on the seat, a stopper (for example, a stopper A413, described hereafter) for blocking the support portion of the hook part, and a lock control part (for example, a hook control device A412, described hereafter) for locking the stopper; the hook part includes the support portion (for example, a support portion A417, described hereafter), a storage part (for example, a hook control device A412 and a stopper storage part A414, described hereafter) for storing the lock control part and the stopper disposed on the support portion, and a load detection part (for example, a sensor A415, described hereafter) for detecting the loading of the hook part; the stopper is capable of extending from the storage part to the tip of the support portion; the tip of the stopper has a contact part (for example, a contact part A419, described hereafter) for making contact with the inside of the support portion; the load detection part transmits a lock signal when the load detection part has detected that the hook part has been loaded; and the lock control part extends and locks the stopper in response to receiving the lock signal.

According to the twenty-first aspect of the present invention, a hook for hanging belongings on the terminal device is provided. It is possible to reduce the risk of belongings being stolen during gameplay because the hook is locked in conjunction with actions of the player, such as hanging belongings on the hook, sitting in the seat, or inserting a predetermined card or game medium. In addition, a lock key is not required since the lock is released in response to the game ending or the player leaving his seat. Moreover, a game machine can be provided wherein the player can retrieve belongings without performing an action to release the lock.

In a twenty-second aspect of the present invention, the game machine according to the twenty-first aspect of the present invention includes: the terminal device having a game medium insertion part (for example, a medal insertion part A734, described hereafter) for inserting a predetermined game medium; the game medium insertion part having a game medium insertion detection part (for example, a sensor not shown in the drawing, housed in a medal insertion part A734) for detecting the insertion of the predetermined game medium; the sub-control means transmitting a game start signal to the main game machine body in response to the game medium insertion detection part detecting that the predetermined game medium has been inserted; the seat having a seating detection part (for example a seating sensor 525, described hereafter) for detecting that the player is seated; the seating detection part transmitting a lock signal in response to detection that the player is seated; and the game medium insertion detection part transmitting a lock signal in response to detection that the game medium has been inserted.

According to the twenty-second embodiment of the present invention, the sub-control means transmits a game start signal to the main game machine body to start a game in response to the insertion of a predetermined game medium. The seating detection part transmits a lock signal when it detects that a player has sat down or that a predetermined game medium has been inserted, and the hook stopper extends to lock the hook. The hook can thereby be locked automatically, making it possible to provide a game machine A1 in which there is no need for the player to manually lock the hook, and in which theft of belongings is less likely to occur.

In a twenty-third aspect of the present invention, the game machine according to one of the twenty-first and twenty-second aspect includes: the terminal device having a card insertion part (for example, a card slot A721, described hereafter) for inserting a card used to activate the terminal device; the card insertion part having a card insertion detection part for detecting that the card has been inserted; the sub-control means transmitting a game start signal to the main game machine body in response to the card insertion detection part detecting that the card has been inserted; and the card insertion detection part transmitting a lock signal in response to detection that the card has been inserted.

According to the twenty-third aspect of the present invention, the terminal device is activated by the insertion of a card, and a lock signal is transmitted in response to detection that a card has been inserted. The hook can thereby be locked automatically, making it possible to provide a game machine in which there is no need for the player to manually lock the hook, and in which theft of belongings is less likely to occur.

In a twenty-fourth aspect of the present invention, the game machine according to one of the twenty-first and twenty-second aspect of the present invention includes: the load detection part transmitting a lock release signal when it is not detected that the hook part is loaded; the seating sensor transmitting a lock release signal when it is not detected that the player is seated; the sub-control means transmitting a lock release signal in response to the end of the game; and the lock control part releasing the lock of the stopper in response to any of the aforementioned lock release signals being received.

According to the twenty-fourth aspect of the present invention, a lock release signal is transmitted in response to the player attempting to remove his belongings from the hook part, the player leaving the seat, or the game ending; and the lock on the hook stopper can be released. Then, because the player does not have to release the lock manually, a key or the like for disengaging the lock is not required, and the player is free from the management of a key, whereby a game machine which enables the player to concentrate further and enjoy the game more can be provided.

In a twenty-fifth aspect of the present inventions, the game machine according to one of the twenty-first and twenty-second aspect of the present invention includes: the terminal device having a seat shell (for example, a seat shell 70, described hereafter) which covers the area surrounding the main seat body; and the main hook body being attached to the outside of the seat shell.

According to the twenty-fifth aspect of the present invention, there is no need to store belongings inside the seat shell, since a hook is attached not only to the main terminal device body, but also to the outside of the seat shell which covers the terminal device. A game machine can thereby be provided that is capable of eliminating the interference to a game caused by belongings, and, moreover, of providing an environment in which a player can concentrate on the game.

In a twenty-sixth aspect of the present invention, the game machine according to one of the twenty-first and twenty-second aspect includes: the terminal device having movement means (for example, a traveling part A32, described hereafter) attached to the bottom of the main seat body and used to move the seat; and the sub-control means having movement control means (for example, CPU A91, described hereafter) for driving the movement means.

According to the twenty-sixth aspect of the present invention, games can be played without belongings falling down even if the terminal device moves, since a lockable hook is attached to a mobile terminal device. A game machine can thereby be provided that is capable of allowing a player to further concentrate on a game, and thus enhancing the player's sense of enjoyment, because the risk of theft posed by belongings falling down is decreased.

According to the present invention, a game machine is provided that allows players to concentrate on a game with ease of mind, and thus enhances the player's sense of enjoyment by preventing belongings from being stolen.

The present invention provides the following game machine in order to attain the second object of the invention as the second issue of the present invention.

In a twenty-seventh aspect of the present invention, a game machine includes: an input reception part (for example, an input operation part A72, described hereafter) for receiving input from a player, a control part (for example, a CPU A91, described hereafter) for controlling game input data according to input from the input reception part, and a seat part (for example a main seat body A50, described hereafter) for seating the player; wherein the seat part further includes a seating part (for example, a seating part A52, described hereafter) whose lower side is provided with a pointed hook part (for example, a hook A57, described hereafter); a hollow holder (for example, a holder A56, described hereafter) which is disposed on the bottom of the seating part, which forms a hook reception part (for example, a hook reception part A58, described hereafter) capable of receiving the hook part, and which opens on the upper surface; a hinge part (for example, a hinge part A561, described hereafter) for pivotally supporting the seating part so that the opening can be opened and closed; an urging part (for example, a holder-side urging part A565, and a hinge-side urging part A566) for urging the seating part in the opening direction; a lock part (for example, a lock part A581, described hereafter) for fixing the hook part and the hook reception part in a fitted state; and a lock control part (for example, a lock control part A567, described hereafter) for controlling the lock part and establishing a fixed or unfixed state; and wherein the control part is capable of transmitting a lock release signal to the lock control part to change the lock part from a fixed state to an unfixed state; and the lock control part changes the lock part from a fixed state to an unfixed state in response to the lock release signal being received.

According to the twenty-seventh aspect of the present invention, a game machine includes a seat part that has a seating part whose lower side is provided with a pointed hook part; a hollow reception part which forms a hook reception part capable of receiving the hook part, which is disposed on the bottom of the seating part, and which opens on the upper surface side; a hinge part that pivotally supports the opening and closing of the aperture of the seating part; an urging part for urging the seat in the opening direction; a lock part for fastening the hook part and hook reception part in a fitted state; and a lock control part for controlling the lock part and establishing a fixed or unfixed state; wherein the lock control part is capable of transmitting a lock release signal to the lock control part to change the lock part from a fixed state to an unfixed state; and the lock control part changes the lock part from a fixed state to an unfixed state in response to a lock release signal being received. Therefore, a player places belongings or the like into the reception part disposed below the seating part and then closes the aperture of the reception part with the seating part, and this seating part can be locked so that it does not open. There are instances in which, for example, belongings and the like can be stored at a location that does not interfere with the player, and the risk of belongings being stolen during game play can be reduced. In addition, the seating part can be configured so as to be opened around the hinge, for example, in accordance with a lock release signal from the control part. Belongings stored in the reception part can thereby be retrieved after the lock is released, and the belongings may be prevented from being left behind.

According to the present invention, a game machine can be provided in which a reception part for belongings or the like is disposed below a seating part.

The protective cover glass, such as that according to the third aspect of the background art, was not preferable because it was expensive and heavy. In addition, the foregoing protective cover glass was often thick and it was necessary to implement backlight for the liquid crystal display device with a higher luminance than normal. Furthermore, this caused new problems to arise, such as the narrowing of the viewing angle due to thickness.

Recently, in particular, a touch panel is provided on the surface of the monitor screen of a liquid crystal device and the liquid crystal device and the touch panel is often sold as an integrated module. In these instances, if a protective cover glass is placed between the touch panel and the liquid crystal screen, this causes the manufacturing process to become complicated, and because this cannot be implemented as is, this can lead to increased costs.

In light of the forgoing circumstances, as a third issue of the present invention, a first object of the invention is to provide a game machine in which a liquid crystal display device or other display of the game machine within which a plurality of game media are stored is provided separately from a game medium storage part within which the game media are stored, and in which theft of the game media by misconduct occurring from the destruction of display or the like can be prevented.

Another issue is that in cases in which the liquid crystal display is provided with a touch panel without the use of protective cover glass such as that described above, the liquid crystal display will more likely be broken by the player's actions if the player inputs all the game data to the game machine via the touch panel. In addition, the operations of a player may become difficult when the player inputs game-related data via a touch panel. In other words, when an action character within a game is controlled via a touch panel, the player may feel that the action character is difficult to operate since it is necessary to quickly press a plurality of buttons on the touch panel. The player may consider there to be a risk of breaking the touch panel when action character input is received from a touch panel, and the player will therefore moderate the force used during input, or will experience other such psychological constraints.

In light of the foregoing circumstances, as a third issue of the present invention, a second object of the invention is to provide a game machine which includes an input part that a player can easily see to make selections, wherein breaking of this input part and liquid crystal display is prevented, and the player can easily control a character's actions.

The present invention provides the following game machine in order to attain the first object of the invention as the third issue of the present invention.

In a twenty-eighth aspect of the present invention, a game machine includes: a game controller (for example, an input operation part B72, described hereafter) for receiving input from a player; a flat display (for example, a liquid crystal monitor B613, described hereafter) for receiving externally or generating internally and showing a game image, generated according to a game program; and a seat (for example, a seat B50, described hereafter) for seating the player; in which the flat display is provided separately from the game machine, is normally stored within a storage part (for example, a liquid crystal monitor storage part B62, described hereafter) for storing the flat display, and includes a driving mechanism (for example, a liquid crystal monitor driving control device B63, described hereafter) for moving the flat display to a predetermined position and into a state enabling play when the game is started, and on the other hand, automatically stores the flat display into the storage part when the game is completed.

According to the twenty-eighth aspect of the present invention, the flat display, provided separately from the game machine, is automatically moved to a predetermined position by the driving mechanism when the game starts and automatically stored in the storage part in the main game machine body when the game is completed.

In this way, theft of the flat display itself can be reduced when in a normal state, and problems such as the flat display getting in the way when the player is seated in the seat or forgetting to store the flat display can be prevented. Furthermore, the automatic actions of the flat display such as these can, as a result, enhance a sense of high-quality regarding the game machine. When movement-operating the flat display which is connected to the connection device, a method for automatic movement can be implemented, as in the foregoing, and a method for manual movement can be implemented, as well.

In a twenty-ninth aspect of the present invention, a game program includes: a main game machine body which includes a memory means (for example, a database 84 (B84), described hereafter) for storing a game program, a control means (for example, a main control device 80 (B80), described hereafter) for executing the game program stored in the memory means, an input means (for example, an input operation part B72, described hereafter) for receiving input from the player, and a game medium storage means (for example, a medal collection part B73, described hereafter), having a game medium insertion part and a game medium payout part, for storing game media inserted from the game medium insertion part; a flat display (for example, a liquid crystal monitor B613, described hereafter) for showing game image generated by the control means according to input from the input means; and a transmitting part (for example, a transmitting part B64, described hereafter) for transmitting the game image to the flat display; in which the flat display part is provided separately from the main game machine body via a connection device (for example, a first support arm B611 and a second support arm B612).

According to the twenty-ninth aspect of the present invention, because the flat display and the main game machine body, having a game medium storage means within which a plurality of game media is stored, are provided separately by placing a connection device therebetween, theft by misconduct occurring from destruction of the flat display or the like can be prevented without providing a protective cover glass, such as that described earlier. In addition, because game media, such as medals and coins, cannot be stolen even if the flat display itself is destroyed since it is separate from the main game machine body, destruction of the flat display itself can also be prevented.

In a thirtieth aspect of the present invention, the game machine according to the twenty-ninth aspect of the present invention has; a main game machine body, to which a seat (for example, a seat B50, described hereafter) for enabling the player to play in a seated state is provided integrally, which includes a storage part (for example, a liquid crystal monitor storage part B62, described hereafter) for storing the flat display; and a connection device which includes, at the least, a connection rod (for example, a first support arm B611 and a second support arm B612, described hereafter) of which one end is fixed to the main game machine body and the other end is connected to the flat display; in which the connection device moves the flat display part to a predetermined position and into a state enabling play from a state of storage within the storage part during a normal state, with the reception of a game start signal from the control means as a trigger, and on the other hand, is connected to a driving mechanism (for example, a liquid crystal monitor driving control device B63, described hereafter) for automatically storing the flat display into the storage part, with the reception of a game completion signal from the control means as a trigger.

Here, the predetermined position is a position placed facing the player seated in the seat, and can be adjusted by the player.

According to the thirtieth aspect of the present invention, because the player can move the flat display automatically by the driving mechanism according to the start of the game and can store it to the storage part of the main game machine body automatically at the completion of the game, theft of the flat device itself can be reduced and problems such as the flat display getting in the way when the player is seated in the seat or forgetting to store the flat display can be prevented. Furthermore, the automatic actions of the flat display such as these can, as a result, enhance a sense of high-quality regarding the game machine. When movement-operating the flat display which is connected to the connection device, a method for automatic movement can be implemented, as in the foregoing, and a method for manual movement can be implemented, as well.

In a thirty-first aspect of the present invention, the game machine according to one of the twenty-ninth and thirtieth aspect of the present invention has a game medium storage which includes a level sensor (for example, a remaining amount sensor B76, described hereafter) for transmitting an empty signal, in response to detecting that the storage level of the game media stored within the game medium storage is below a predetermined level.

According to the thirty-first aspect of the present invention, the game machine includes a sensor for determining whether the storage level of the game media stored within the game medium storage is below a predetermined level and transmitting an empty signal when it is below a predetermined level.

In this way, because the empty signal can be transmitted outside, such as to the arcade staff, when the remaining amount of the game media is below a predetermined level, the staff can be prompted to replenish the game media before the game medium storage level reaches zero.

In a thirty-second aspect of the present invention, a game machine includes: a main game machine body which includes a memory means (for example, a database B84, described hereafter) for storing a game program, and a main control means (for example, a main control device 80 (B80), described hereafter) for executing the game program stored in the memory means; a main terminal device body which includes an input means (for example, an input operation part B72, described hereafter) for receiving input from the player, a game medium storage means (for example, a medal collection part B73, described hereafter), having a game medium insertion part and a game medium payout part, for storing inserted game media, and a sub-control means (for example, a sub-control device B90, described hereafter) for transmitting game input data according to input from the input means, connected by wireless connection to the main game machine body, to the main control means of the main game machine body; a plurality of terminal devices which includes a flat display (for example, a liquid crystal monitor B613, described hereafter) for showing game image generated by the main control means according to input means from the input and the game program and a transmitting part (for example, a transmitting part B64, described hereafter) for transmitting the game image to the flat display; and a main display means (for example, a main display device B22, described hereafter) for showing images based on the image data output from the main control means; in which the main control receives a plurality of game input data from the plurality of terminal devices, generates a single game data according to the game program, based on these plural game input data, generates image data which is shared with all of the terminal devices , based on the generated single game data, and outputs this data to the main display means; and the flat display part is provided separately from the main terminal device body via a connection device (for example, a first support arm B611 and a second support arm B612).

According to the thirty-second aspect of the present invention, in a multi-player-type game machines in which numerous players participate, such as a multi-player game, because the flat display and the main terminal device body, having a game medium storage part within which a plurality of mage media is stored, are provided separately with a connection part therebetween, theft by misconduct occurring from destruction of the flat display or the like can be prevented without providing a protective cover glass, such as that described earlier. In addition, because game media, such as medals and coins, cannot be stolen even if the flat display itself is destroyed, since it is a separate device, destruction of the flat display itself can also be prevented.

In a thirty-third aspect of the present invention, the game machine according to the thirty-second aspect of the present invention has: a main terminal device body, to which a seat (for example, a seat B50, described hereafter) for enabling the player to play in a seated state is provided integrally, which includes a storage part (for example, a liquid crystal monitor storage part B62, described hereafter) for storing the flat display; a connection device which includes, at the least, a connection rod (for example, a first support arm B611 and a second support arm B612, described hereafter) of which one end is fixed to the main terminal device body and the other end is connected to the flat display; in which the connection device moves the flat display part to a predetermined position and into a state enabling play from a state of storage within the storage part during a normal state, with the reception of a game start signal from the main control means as a trigger, and on the other hand, is connected to a driving mechanism (for example, a liquid crystal monitor driving control device B63, described hereafter) for automatically storing the flat display into the storage part, with the reception of a game completion signal from the main control means by the sub-control means as a trigger.

According to the thirty-third aspect of the present invention, in a multi-player-type game machines in which numerous players participate, such as a multi-player game, because the player can move the flat display automatically by the driving mechanism according to the start of the game and can store it to the storage part of the main game machine body automatically at the completion of the game, theft of the flat device itself can be reduced and problems such as the flat display getting in the way when the player is seated in the seat or forgetting to store the flat display can be prevented. Furthermore, the automatic actions of the flat display such as these can, as a result, enhance a sense of high-quality regarding the game machine. When movement-operating the flat display which is connected to the connection device, a method for automatic movement can be implemented, as in the foregoing, and a method for manual movement can be implemented, as well.

In a thirty-fourth aspect of the present invention, the game machine according to one of the thirty-second and thirty-third aspect of the present invention has a game medium storage means which includes a level sensor (for example, a remaining amount sensor B76, described hereafter) for transmitting an empty signal, in response to detecting that the storage level of the game media stored within the game medium storage means is below a predetermined level.

According to the thirty-fourth aspect of the present invention, the game machine includes a sensor for determining whether the storage level of the game media stored within the game medium storage means is below a predetermined level and transmitting an empty signal when it is below a predetermined level.

In this way, because the empty signal can be transmitted outside, such as to the arcade staff, when the remaining amount of the game media is below a predetermined level, the staff can be prompted to replenish the game media before the game medium storage level reaches zero.

According to the third aspect of the present invention, because a liquid crystal display device of the game machine within which a plurality of game media are stored is provided separately from a game medium storage part within which the game media are saved, with a connection device placed therebetween, theft of game media by misconduct occurring from destruction of the display or the like can be prevented.

The present invention provides the following game machine in order to attain the second object of the invention as the third issue of the present invention.

In a thirty-fifth aspect of the present invention, a game machine includes: a seating part (for example, a seating part B52, described hereafter) for seating a player; storage means (for example, a database 84 (B84), described hereafter) for storing a game program; control means (for example, a sub-control device B90, described hereafter) for executing the game program stored in the storage means; input operation means (for example, an input operation B part 325, described hereafter) in which tilting in multiple directions is performed, whereby an input signal that corresponds to the tilting is transmitted to the control means, and the control means makes it possible to move an action character within a game space realized by the execution of the game program; and a flat display (for example, a liquid crystal monitor B613, described hereafter) for displaying a game image generated by the control means based on the game program and on the input signal from the input operation means; wherein a touch panel (for example a touch panel B326, described hereafter) for receiving selections from the player within the game space based on the game program is further provided on the front surface of the flat display; and the input operation means is disposed in the vicinity of the seating part and is used to operate the movements of an action character in the game program.

In the thirty-fifth aspect of the present invention, a game machine includes: a seating part for seating a player; storage means for storing a game program; control means for executing the stored game program; input operation means in which tilting in multiple directions in performed, whereby an input signal that corresponds to the tilting is transmitted to the control means; a flat display for displaying a game image based on the game program and on input signals from the input operation means that makes it possible to move an action character within a game space based on the game program; and a touch panel which is provided to the front surface of the flat display and which receives selections from the player within the game space on the basis of the game program, wherein the input operation means is disposed in the vicinity of the seating area and is used to operate action characters in the game program.

According to this game machine, the touch panel or the flat display on the rear surface of the touch panel is less likely to be broken, and the player can concentrate on the game without losing the sense of control over the action characters in the game. This is achieved by providing a selection input operation function to the touch panel that the player can easily perceive and make selections on when making input to the game, and endowing an input means that is separate from the touch panel with an operation input function for performing a character's actions that have a high possibility of being forcefully performed by the player in the game. As described above, a player may be concerned about breaking the touch panel, and will thus moderate the force used during input or will experience other psychological constraints when an action character input is received from the touch panel, but such psychological constraints are eliminated in the present invention.

According to the present invention, it is possible to provide a game machine in which breakage of the touch panel and liquid crystal display from the input of a player during the game can be prevented, and the player can easily operate characters. This is achieved by providing a selection input operation function to the touch panel that the player can easily perceive and make selections on, and endowing an input means that is separate from the touch panel with an operation input function for performing a character's actions that have a high possibility of being forcefully performed by the player in the game.

### BRIEF DESCRIPTION OF THE DRAWINGS

Fig. 1 is a perspective view showing an outward aspect of a game machine 1 according to one example of a preferred embodiment of the present invention;
Fig. 2 is a perspective view showing an outward aspect of the terminal device 30 constituting the game machine 1;

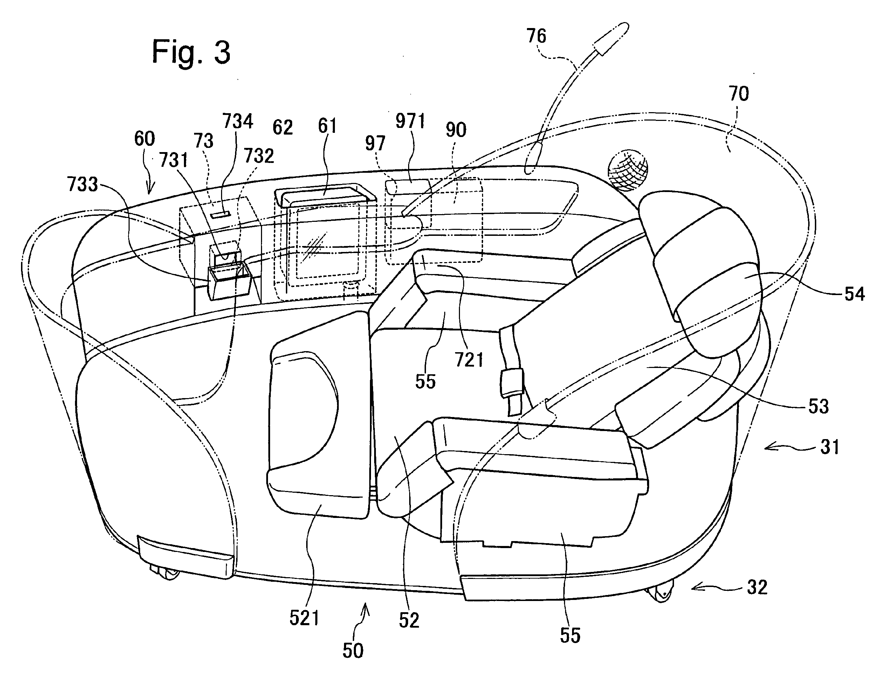

Fig. 3 is a perspective view of the seat of the terminal device 30;
Fig. 4 is a perspective view showing a state in which the sub-monitor of the terminal device 30 has been drawn out from the sub-monitor storage space;
Fig. 5 is a perspective view showing a state in which the display screen of the terminal device 30 sub-monitor has been turned toward the player;
Fig. 6 is a perspective view showing a state in which the position of the sub-monitor of the terminal device 30 has been adjusted.
Fig. 7 is a block diagram showing an overall configuration of the game machine 1;
Fig. 8 is a block diagram showing the configuration of the main control device 80 of the game machine 1;
Fig. 9 is a block diagram showing the construction of the sub-control device 90 of the game machine 1;
Fig. 10 is a main flowchart showing the process when the terminal device 30 performs notification;
Fig. 11 is a main flowchart showing the process when the terminal device 30 performs notification;
Fig. 12 is a flowchart showing the process when the terminal device 30 performs a first notification;
Fig. 13 is a flowchart showing the process when the terminal device 30 performs time measurement/card detection processing;
Fig. 14 is a flowchart showing the process when the terminal device 30 performs a second notification;
Fig. 15 is a flowchart showing the process when the terminal device 30 fixes the sub-display part 61 and performs notification;
Fig. 16 is a perspective view showing an outward aspect of a terminal device 30 constituting a game machine 1 according to another embodiment;
Fig. 17 is a perspective view showing an outward aspect of a terminal device 30 constituting a game machine 1 according to another embodiment;
Fig. 18 is a side view of the terminal device 30 before being driven to contract;
Fig. 19 is a side view of the terminal device 30 after being driven to contract;
Fig. 20 is a block diagram showing the configuration of a sub-control device 90 of the game machine 1;
Fig. 21 is a flowchart showing the flow of the process for contracting and changing the shape of the seat 31;
Fig. 22 is a perspective view showing an outward aspect of a game machine 1 according to one example of a preferred embodiment of the present invention;
Fig. 23 is a perspective view of an outward aspect of a terminal device 30 constituting the game machine 1;
Fig 24 is a perspective view of the seat of the terminal device 30;
Fig. 25 is a perspective view of the hook 40 of the terminal device 30;
Fig. 26 is a perspective view of a state in which the stopper 413 of the hook 40 of the terminal device 30 is extended;
Fig. 27 is a side view of the hook 40 of the terminal device 30;
Fig. 28 is a diagram showing an example of a state in which belongings have been placed on the hook 40 of the terminal device 30;
Fig. 29 is a block diagram showing the construction of the sub-control device 90 of the game machine 1;
Fig. 30 is a flowchart showing the flow of the process when the hook 40 of the terminal device 30 engages the lock;
Fig. 31 is a flowchart showing the flow of the process when the hook 40 of the terminal device 30 releases the lock;
Fig. 32 is a flowchart showing the flow of the process when the lock 40 of the terminal device 30 engages the lock;
Fig. 33 is a flowchart showing the flow of the process when the hook 40 of the terminal device 30 releases the lock;
Fig. 34 is a perspective view of the seat of the terminal device 30;
Fig 35 is an enlarged view of the seating part 52 and reception part 56 in another example;
Fig. 36 is a block diagram showing the configuration of the sub-control device 90 of the game machine 1;
Fig. 37 is a flowchart showing the flow of the process when the hook 40 of the terminal device 30 engages the lock;
Fig. 38 is a flowchart showing the flow of the process when the hook 40 of the terminal device 30 releases the lock;
Fig. 39 is a perspective view showing an outward aspect of a terminal device comprising the game machine;
Fig. 40 is a perspective view of the seat of the terminal device in the seat mode;
Fig. 41 is a perspective view of the seat of the terminal device in the bed mode;
Fig. 42 is a perspective view showing a state in which a liquid crystal display device has been stored in the side unit of the terminal device;
Fig. 43 is a perspective view showing a state in which the liquid crystal monitor of the terminal device has been pulled out from the liquid crystal monitor storage part;
Fig. 44 is a perspective view showing a state in which the display screen of the liquid crystal monitor of the terminal device faces the player;
Fig. 45 is a perspective view showing a state in which the position of the liquid crystal monitor of the terminal device has been adjusted;
Fig. 46 is a partial, enlarged perspective view of the traveling part of the terminal device;
Fig. 47 is a block diagram showing the configuration of the sub-control device of the terminal device;
Fig. 48 is a main flowchart of the game carried out by the game machine;
Fig. 49 is a flowchart of the game process of the game program executed by the game machine;
Fig. 50 is a flowchart of the remaining amount confirmation processing of the game medium executed by the game machine;
Fig. 51 is a perspective view showing an outward aspect of a terminal device constituting the game machine;
Fig. 52 is a perspective view of the seat of the terminal device in the seat mode;
Fig. 53 is a perspective view of the seat of the terminal device in the bed mode;
Fig. 54 is a block diagram showing the configuration of the sub-control device of the terminal device;
Fig. 55 is a diagram showing the input operation part of the terminal device;
Fig. 56 is a diagram showing the configuration of the touch panel of the terminal device;

### BEST MODE FOR CARRYING OUT THE INVENTION

Preferred embodiments of the present invention are described below based on the drawings.

### [Example 1]

### Overall Configuration of the Game machine

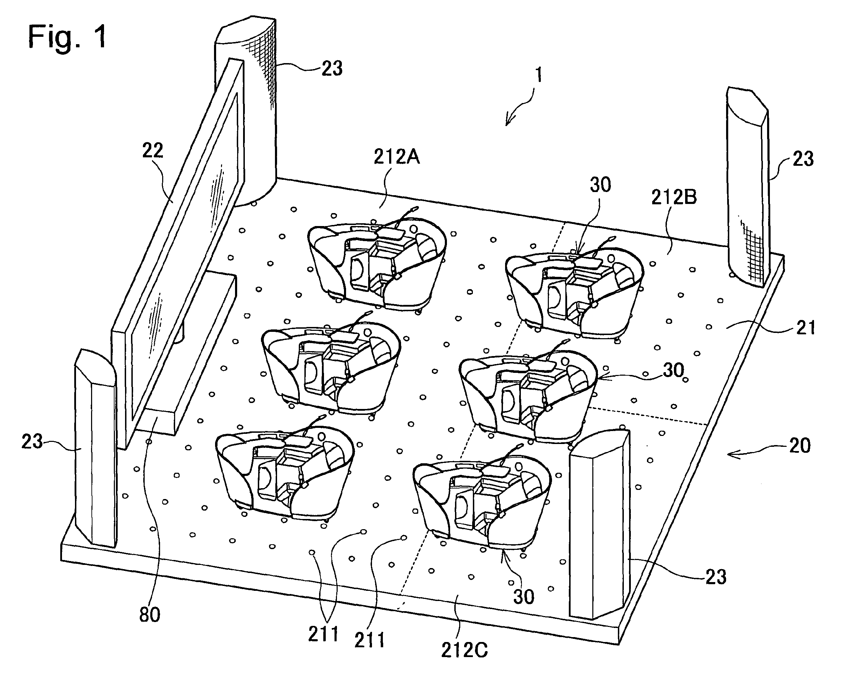

Fig. 1 is a perspective view showing an outward aspect of the game machine 1 according to an embodiment of the present invention.

The game machine 1 is a multi-player game machine, including a main game machine body 20 which includes a flat, rectangular play area 21 and a plurality of terminal devices 30 which are placed on this play area 21.

Aside from the play area 21, the main game machine body 20 includes a main display device 22 which is placed along one side of the play area 21, a speaker device 23 which is placed in the four corners of the play area 21, and a main control device 80 for controlling these main display device 22 and speaker device 23.

The play area 21 is divided into a plurality of sub-areas 212. As these sub-areas 212, there are city areas 212A, ocean areas 212B, and forest areas 212C. In addition, IC tags 211 are buried in grid-form in the play area 21. Positional information of the inside of the play area 21 is stored to this IC tag 211.

The main display device 22 is a large projector display device. The main display device 22 is not limited thereto and can also be a large monitor.

The main control device 80 can communicate with each terminal device 30 bi-directionally through wireless LAN and can provide each player with a common virtual space by executing the predetermined game program and bi-directionally communicating with each terminal device 30.

Each terminal device 30 is placed facing towards the main display device 22. This terminal device 30 is connected to the main control device 80 through wireless LAN and can be moved over the play area 21 according to the instructions from the main control device 80 or by player operation.

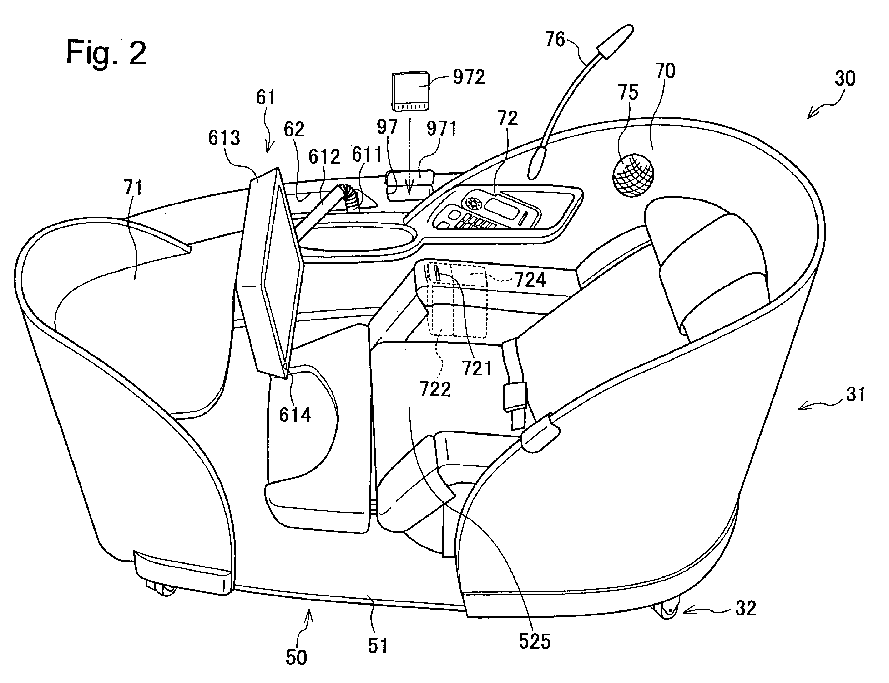

Fig. 2 is a perspective view showing an outward aspect of each terminal device 30.

The terminal device 30 includes a seat 31, a traveling part 32 which supports this seat 31 from beneath and, in addition, moves it over the player area 21, and lamps 76.

In addition, an IC tag detection part 324 for detecting IC tags 211, which are buried in the play area 21, is provided below the driving control device 322 of the traveling part 32. Configuration of the Seat

Fig. 2 is a perspective view of the seat 31.

Seat 31 includes a main seat body 50, a side unit 60 which is provided along one side surface of the main seat body 50, and a seat shell 70 which surrounds the main seat body 50 on three sides, excluding the other side surface side.

The main seat body 50 includes a flat base part 51, a seating part 52 which is provided on this base part 51, a back rest 53 which is attached to enable changing of its angle to the seating part 52, a head rest 54 which is provided on the top part of the back rest 53, and a pair of side arms 55 which are provided in positions on the seat surface of the seating part 52 and both sides of the back rest.

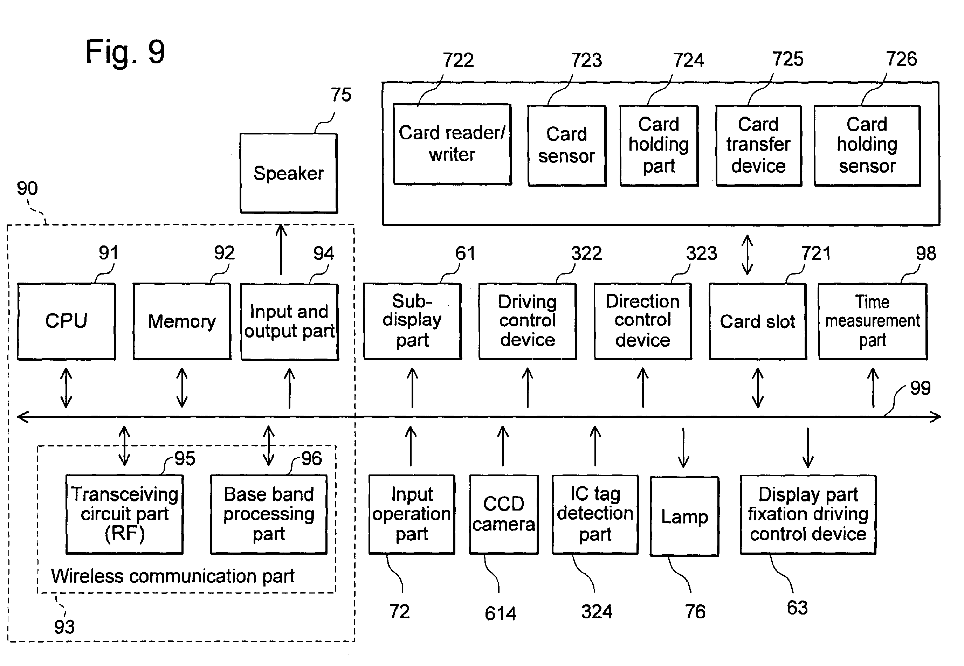

A card slot 721 for inserting a card is fitted and provided near the tip part of the side arm 55. In addition, the inside of the side arm 55 includes a card reader/writer 722 for reading data stored on a card and writing data to a card, a card holding part 724 for storing the card, a card transfer device 725 (Fig. 9) fir transferring the card, and a card holding sensor 726 (Fig. 9) for detecting that a card is stored and transmitting a holding completion signal.

The card has a storage medium for enabling data to be read and written, such as a magnetic card which stores data on a magnetic tape or an IC card which stores data on an IC chip embedded therein. In addition, data stored on the card can be personal information such as the player's user ID, gaming history, credit data which is used when starting the game, and the like. In addition, this credit data can be data indicating gaming rights purchased beforehand, such as in a prepaid system. Furthermore, the card can be a so-called credit card in which the number of times a game is played and the amount of time played are stored as credit data and charged after the passing of a predetermined period of time.

The seating part 52 moves back and forth on the base part 51 when the player operates the input operation part 72. In the main seat body 50, this seating part 52 can be slid back and forth and, at the same time, the back rest 53 can recline backwards and form a bed.

The seating part 52 includes a leg rest 521 which is provided on the front surface side and a foot rest which is stored in the tip of this leg rest 521. The leg rest 521 turns upward according to the sliding motion, when the seating part 52 is slid forward, and becomes a seat surface which continues from the seat surface of the seating part 52. At the same time, the foot rest 522 projects from the leg rest 521 and becomes a seat surface which continues from the leg rest 521.

A bag component, into which air can be injected, is embedded respectively within the seat surface of the seating part 52, the lower part of the back rest 53 (which comes into contact with the lower back of the player) and the head rest 54. When air is injected into these bag components by an air pump, the surface swells and can support the user while accommodating the contours of the body surface of the user.

In addition, a seating sensor 525, is embedded in the seating part 52 or the back rest 53 for detecting that a player is seated. This seating sensor 525 is a weight sensor or a pressure sensor which detects the load applied when the player is seated.

A sub-display part 61, which is configured to include a liquid crystal display panel, is stored in the side unit 60.

As shown in Fig. 2, the sub-display part 61 includes a first support arm 611 which is supported by the side unit 60, a second support arm 612 which is attached to the tip of the first support arm 611, and a flat, rectangular sub-monitor 613 which is attached to the tip of the second support arm 612 and performs liquid crystal display.

The first support arm 611 can be extended and retracted freely in the direction vertical to the side unit 60. The second support arm 612 can extend and retract freely and can be fixed to an arbitrary angle to the axis direction of the first support arm 611. The sub-monitor 613 can be fixed to an arbitrary angle to the axis direction of the second support arm 612.

A sub-monitor storage space 62 which extends in the vertical direction is provided in the side unit 60, and the foregoing first support arm 611, a second support arm 612, and a sub-monitor 613 are stored within the sub-monitor storage space 62.

A small CCD camera 614 is embedded into the sub-monitor 613. This CCD camera 614 is used when creating an avatar in the game field.

The image taken by the CCD camera 614 is displayed constantly in the sub-display part 61 in the terminal device 30, by operating an input operation part 72 (described hereafter). Because the expressions of the player per se can be viewed during the game in this way, enjoyment increases. In this case, the photographed image can be shown on the entire screen of the sub-monitor 613 or in one section of the screen.

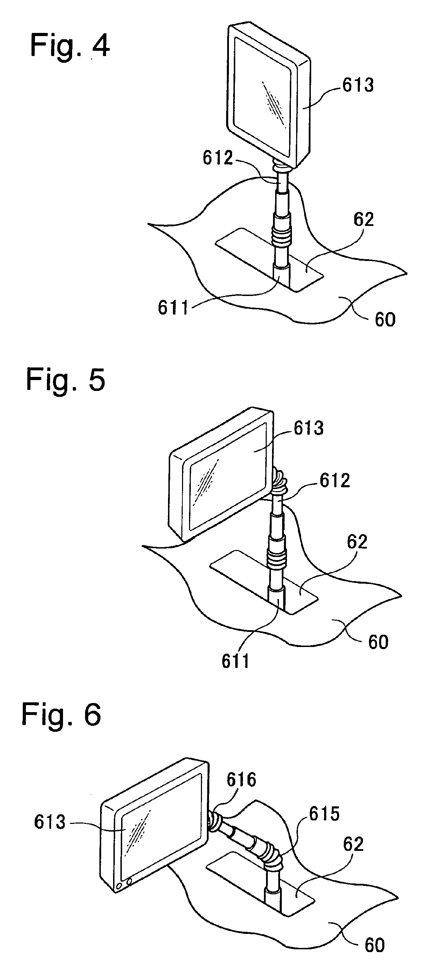

The procedure by which the player pulls out the sub-monitor 613 from the storage space 62 is explained, with reference to Fig. 4 to Fig. 6.

First, as shown in Fig. 4, the player slides the sub-monitor 613 upward from the sub-monitor storage space 62 and extends the first support arm 611 and the second support arm 612, while seated in the main seat body 50. Then, as shown in Fig. 5, the display screen of the sub-monitor 613 is turned toward the player by twisting the sub-monitor 613. Subsequently, as shown in Fig. 6, the sub-monitor 613 is positioned to the player's eye level by adjusting the relative angles of the first support arm 611 and the second support arm 612 and the relative angles of the second support arm 612 and the sub-monitor 613.

Next, the connection part 615 between the first support arm 611 and the second support arm 612 and the connection part 616 between the second support arm 612 and the sub-monitor 613 are controlled by an electrically-controlled display fixation driving control device 63. Then, the sub-monitor 613 is fixed or released by the reception of a sub-display fixation signal or a sub-display fixation release signal (described hereafter) from the COU 91.

A sub-control device 90 which is connected by wireless LAN to the main control device 80 and a plurality of board storage slots 97 which configure this sub-control device 90 are provided within the side unit 60.

The sub-control device 90 controls the sub-display part 61 and the traveling part 32, based on instructions from the main control device 80, as well as transmitting signals input by the input operation part 72 (described hereafter) to the main control device 80.

A cover part 971 is provided to open and close freely on the upper part of the board storage slots 97. By opening the cover part 971 and inserting a terminal control board 972 from above, as shown in Fig. 2, the terminal control board 972 can be attached to the board storage slot 97.

The back-side of the seat shell 70 extends upward and can support the back rest 53 and the head rest 54. In addition, speakers 75 and lamps 76 are provided on both sides of the head rest 54 of the seat shell 70.

The back-sides of the side surfaces of the seat shell 70 extends upward so that the player seated in the main seat body 50 cannot be viewed by other players.

The lamp 76 is provided on the tip of a rod-shaped support part attached to the side surface of the seat shell 70. This lamp 76 is provided at the highest position on the terminal device 30, which is a position which can be seen easily from outside of the terminal device 30.

This lamp 76 includes three types of LED chips which emit red, blue, and green light, and additionally, a reflective frame is provided surrounding these LED chips. The red, blue, and green lights emitted from each LED chip are blended by the reflective frame, and thus, in the present embodiment, the lamp 76 illuminates with lighting aspects of six colors: purple, yellow, white, green, blue, and red.

A table 71 is attached from one side surface of the main seat body 50 to the front surface, on the upper edge of the seat shell 70. The space beneath this table 71 accepts the leg rest 521 and the foot rest 522 when the main seat body 50 is placed in bed mode.

The input operation part 72, configured by a keyboard, a jog dial and the like, is provided in the vicinity of the side arm 55 on the table 71.

Although the input operation part B72 is provided on the table 71 in the present embodiment, this is not limited thereto, and can be provided as a touch-panel on the sub-monitor 613.

A medal payout opening 731 from which medals are paid out from a medal collection part 73 provided within the side unit 60, a medal receiving part 732 for receiving the medals which are paid out, and a medal insertion part 734 to which coins are inserted are provided below the table 71 and in front of the side arm 55. A reception opening for attaching a holder 733 is provided in the medal receiving part 732. In addition, a sensor for detecting that a medal is inserted is installed in the medal insertion part 734. For example, this medal can be paid out according to the betting odds of an event within the game environment. For example, predetermined odds (betting odds) are stipulated to the participants for a certain event (win/loss of horse-racing, combat, etc.), similar to a book-maker, and the player bets on the object of his choice. Then, medals are paid out based on the odds, according to the win/loss results. The prize resulting from this book-maker is not limited to medals and can be items within the game environment.

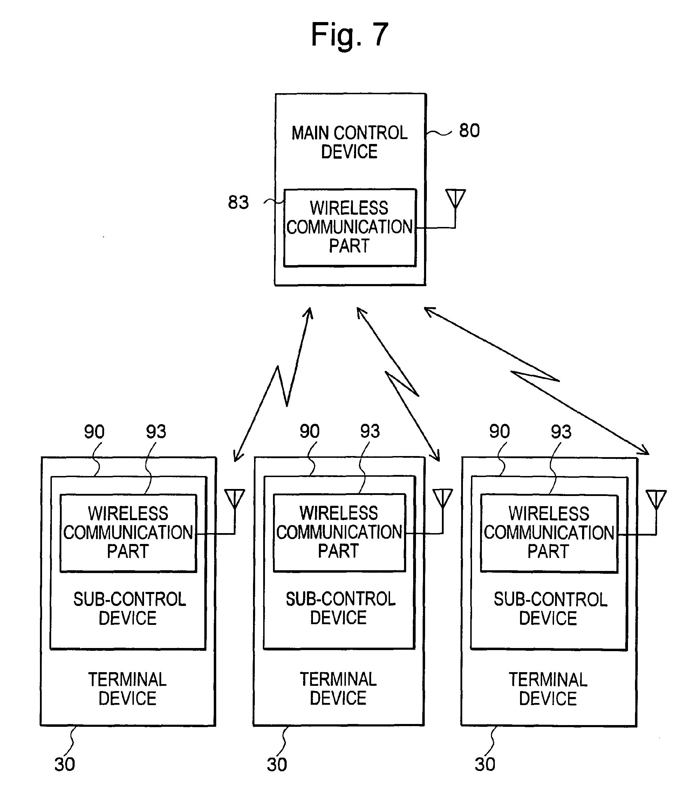

Fig. 7 is a block diagram of an overall configuration of the game machine 1.

In this game machine 1, the main control device 80 of the main game machine body 20 had a wireless communication part 83 and the sub-control device 90 of the terminal device 30 has a wireless communication part 93. These wireless communication parts 83 and 93 can be interconnected by a wireless LAN, and thus, the transfer of sound data and character data can be performed between the main control device 80 and the sub-control device 90. Configuration of the Main Control Device

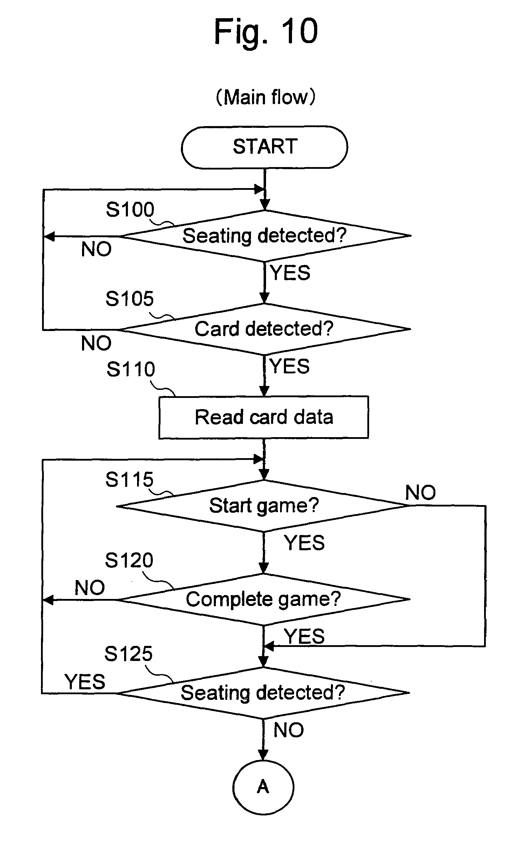

Fig. 10 is a block diagram showing the configuration of the main control device 80.

The main control device 80 has a CPU 81, a memory 82, a wireless communication part 83, and a database 84, which are connected to a data bus 89.

The wireless communication part 83 includes a transceiving circuit part (RF) 85 for transmitting and receiving signals with the sub-control device 90, and a base band processing part 86 for converting RF (Radio Frequency) signals received by the transceiving circuit part 85 into base band signals and also converting base band signals to be transmitted into RF signals.

The database 84 is a circuit board which includes a memory part to which a game program is stored or a storage medium (for example, a hard disk or ROM cassette) to which the game program is stored.

Specifically, a slot to which these circuit boards and storage mediums can be attached and removed is provided in the main control device 80. By attaching and removing these circuit boards and storage mediums from the slot, the game program stored to the database 84 can be replaced, accordingly, and other game programs can be executed. Replacing the game program is not limited to that via hardware, as such, and the game program can be replaced directly by downloading via a communication circuit.

The CPU 81 executes various processing according to the game program.

In other words, the CPU 81 reads the game program stored in the database 84 to the memory 82 and runs the game according to this game program.

During the game, the CPU 81 extracts the game program, information expressing the game status corresponding to the time-line in the game field at that time (namely, information expressing events and the like occurring within the game field), scent data corresponding to the sub-area 212, and the like from the data base 84, in response to request from the terminal device 30, and transmits these to the terminal device 30, which is the request source, via wireless LAN. In addition, the CPU 81 receives information expressing the operation results of the player from each terminal device 30 and stores this in the memory 82.

The CPU 81 runs the game, based on the information expressing the operation results of the players stored in the memory 82, and stores the progression results of the game program in the database 84.

Here, the information expressing the operation results of the player are, for example, selection results by the player from a selection shown to the player via the terminal device 30, based on the progress of the game program, or the results of the operation performed by the player of the character appearing in the game, and is information transmitted from the terminal device 30 as a result of the player operating their respective terminal devices 30. Other players can check the progress status of the current game stored in this database 84 (for example, high-score information, etc.)

### Configuration of the Sub-Control Device

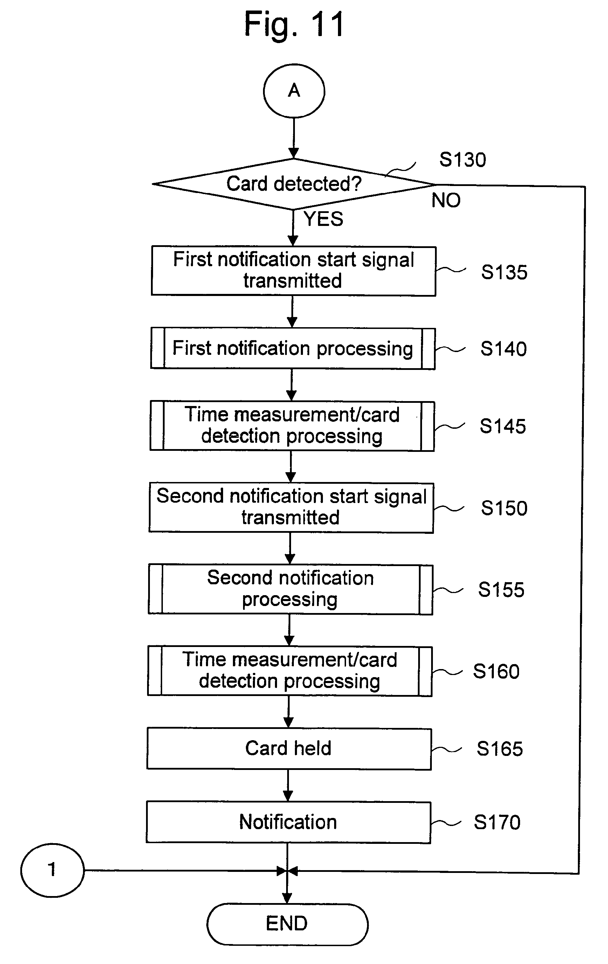

Fig. 11 is a block diagram showing the configuration of the sub-control device 90.

The sub-control device 90 has a CPU 91, a memory 92, a wireless communication part 93, and an input and output part 94 which is the interface with the speaker 75, which are connected to a data bus 99.

The wireless communication part 93 includes a transceiving circuit part (RF) 95 for transmitting and receiving signals with the main control device 80, and a base band processing part 96 for converting RF (Radio Frequency) signals received by the transceiving circuit part 95 into base band signals and also converting base band signals to be transmitted into RF signals.

In addition, the sub-control device 90 controls the sub-display part 61, the driving control device 322, the direction control device 323, the card slot 721, the time measurement part 98, the display part fixation driving control device 63, and the input and output part 94 which is the interface with the speaker 75, based on the input signals from the input operation part 72, the CCD camera 614, and the IC tag detection part 324.

The CPU 91 executes various operations according to the operation programs stored in the memory 92 and control respective circuit parts and devices according to the operations.

Sound signals from the main control device 80 are output from the speaker 75 through the following procedure.

When the RF signal is received from the main control device 80, the transceiving circuit part 95 supplies this signal to the base band processing part 96 and converts this RF signal to a base band signal. The base band processing part 96 outputs this base band signal to the speaker 75, via the input and output part 94. Then, this base band signal is output from the speaker 75 as sound.

In addition, the CPU 91 transmits a sound signal to the input and output part 94 and outputs this from the speaker 75, when a card is inserted into the card slot 721 and the seating sensor 525 installed in the seating part 52 or the back rest 53 does not detect seating.

Furthermore, when the player operates the input operation part 72, after converting various information input by operating the input operation part 72 into packet data, the CPU 91 transmits this to the main control device, via the band base processing part 96 and the transceiving circuit part 95. At this time, each terminal device 30 can be identified regardless of the position the terminal devices 30 are placed on the play area 21. Similarly, the CPU 91 converts positional information read from the IC tag 211 by the IC tag detection part 324 and image information perceived by the CCD camera 614 into packet data and transmits this to the main control device 80.

On the other hand, when an RF signal to which information converted into packet data is superimposed is transmitted from the main control device 80, the CPU 91 receives this RF signal via the transceiving circuit part 95 and the base band processing part 96, displays it in the sub-display part 61 and, in addition, controls the driving control device 322 and the direction control device 323 of the traveling part 32.

In this way, the player seated in the terminal device 30 can communicate various information with the main control device 80.

Specifically, the CPU 91 performs the following operations. In other words, when the CPU 91 receives the game program and information expressing the game status corresponding to the time-line in the game field at that time from the main control device 80, the CPU 91 shows various occurrences, such as events, occurring in the game field at this time according to the game program, after storing the information, such as the game program, transmitted from the main control device 89 in the memory 82.

Furthermore, the CPU 91 can always confirm the current position of the terminal device 30 within the play area 21 by reading the positional information from the IC tag 211 by the IC tag detection part 324. Then, the CPU 91 receives specification of the position on the play area 21 from the main control device, controls the driving control device 322 and the direction control device 323 of the traveling part 32 based on the signal from the IC tag detection part 324, and moves the terminal device 30 to a predetermined position within the play area 21.

In addition, by operating the input operation part 72 while viewing the game content (image, letter information, etc.) shown in the sub-display part 61, the player using respective terminal device 30 can operate the characters shown in the main display device 22, participate in the progress of the game by operations such as selecting from a selection by letters, and move the terminal device 30 to an designated position on the play area 21.

Fig. 10 is a main flowchart in which a card is detected and notification is given in an example of a preferred embodiment of the present invention.

In step S100, the seating sensor 525 installed in the seating part 52 and/or the back rest 53 detects seating. If seating is detected, the sensor transmits a signal to the CPU 91. In the seating sensor 525 does not detect seating, the game machine stands by until seating is detected.

In step S105, the card sensor 723 detects whether a card is inserted into card slot 721. If a card is not detected, the process returns to the processing in step S100. If a card is detected, the card reader/writer 722 reads the data stored on the card (step S110).

In step S115, game start is determined. Specifically, the game is started when the CPU 91 transmits a game start signal to the main control device 80. If the game is not started, the process proceeds to step S125.

In step S120, whether to complete the game is determined. Specifically, for example, the game is completed when, in an operation within the game, a selection stating game completion is input from the input operation part 72 and received by the CPU 91. If the CPU 91 receives the game completion selection, the CPU 91 transmits a game completion signal to the main control device 80. If the game is not completed, the game is continued until a game completion selection is received.

In step S125, seating is detected. Specifically, for example, the seating sensor 525 installed in the seating part 52 and/or the back rest 53 detects seating of the player. If the seating sensor 525 detects the seating of the player, the process returns to step S115. In addition, if the seating sensor 525 does not detect seating, the process proceeds to the processing in step S130 (Fig. 11). In this way, whether the player has left the seat after completion of the game can be determined.

In step S130, whether a card is inserted in the card slot S721 is determined. When the card sensor 723 installed in the card slot 721 detects the card, the card sensor 723 transmits a signal to the CPU 91 and the CPU 91 transmits a first notification start signal (step S135). If the card sensor 723 does not detect a card, the processing of the present flowchart is terminated. In other words, the card has been removed from the card slot 721.

In step S140, a first notification is performed. This processing is described hereafter. This processing is performed by the input and output part 94 via the sub-display part 61, which received the first notification start signal from the CPU 91, and the speaker 75. Then, if this processing is completed, the process proceeds to the processing in step S145.

In step S145, a time measurement/card detection processing is performed. This processing is described hereafter. This time measurement/card detection processing measures time from the first notification and detects whether the card has been removed from the card slot 721 within a predetermined amount of time. In addition, this time measurement/card detection processing can be started almost simultaneously with the start of the first notification (step S140).

In step S150, the CPU 91 transmits a second notification start signal. In the step S145, when the insertion of a card in the card slot 721 is detected after the passage of a predetermined amount of time, the CPU 91 transmits a second notification start signal.

In step S155, a second notification processing is performed. This processing is described hereafter. The second notification processing is performed by the input and output part 94, which received the second notification start signal from the CPU 91 in step S150, via the speaker 75 and the lamp 76.

Although the second notification is performed by the speaker 75 and the lamp 76 in the present embodiment, it can be performed by either one, and furthermore, a message or the like can be displayed in the sub-display part 61 or the staff can be notified by radio or the like.

In step S160, the same time measurement/card detection processing as in step S145 is performed. Specifically, for example, the time from the second notification is measured and whether the card has been removed from the card slot 721 within the predetermined amount of time is detected. In addition, this time measurement/card detection processing can be started almost simultaneously with the start of the second notification (step S155). When this processing is completed, the process proceeds to the processing in step S165.

In step S165, a card holding processing is performed. Specifically, for example, if the time from the second notification (step S155) is measured and a card is detected in the card slot 721 by the card sensor 723 after the passage of a predetermined amount of time, the card is temporarily pulled within the card slot 721, and a card holding part 724 installed in the card slot 721 holds the pulled-in card. If this processing is completed, the process proceeds to the processing in step S170.

In step S170, notification is performed. For example, if the card holding part 724 holds the card, the card holding part 724 transmits a card holding signal to the CPU 91, and the CPU 91 which received this signal transmits a notification start signal to the input and output part 94. Then, the input and output part 94 which received the notification start signal illuminates the lamp 76. This illumination can be an aspect differing from the illumination of the notification performed in the second notification processing (step S155). For example, it can be a color differing from that of the second notification or have a differing flashing pattern such as flashing three times consecutively.

In this way, the card can be pulled in and temporarily secured even if the player forgets the card and leaves the seat, and thus, theft of the card can be prevented. The held card is subsequently collected by the staff.

### First Notification Processing

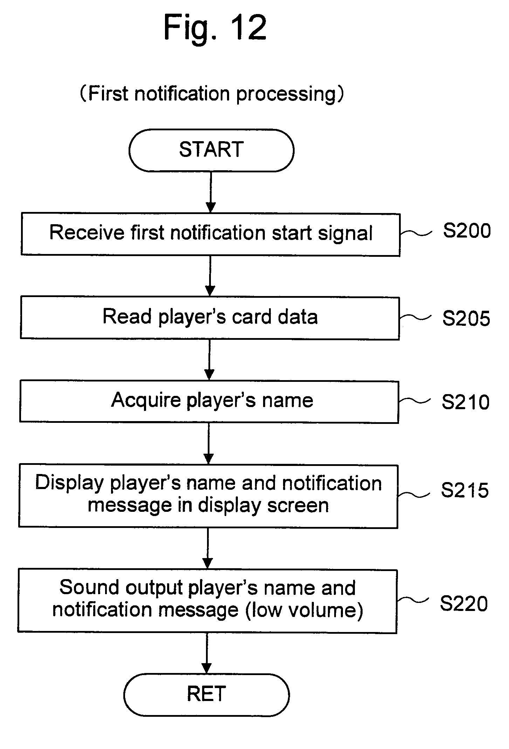

Fig. 12 is a flowchart of the first notification processing.

First, in step S200, the card reader/writer 722, the sub-display part 61, and the input and output part 94 receive a first notification signal transmitted by the CPU 91.

In step S205, the card reader/writer 722 starts reading the card data by the first notification start signal. Alternatively, the CPU 91 can read the data of the player stored temporarily in the memory 92. Then, the CPU 91 obtains the stored player name (step S210). This player name can be the full name of the player or a name, such as a registration name, which is not limited to the user ID or the full name.

In step S215, the CPU 91 shows the player name obtained in step S210 and notification message in the sub-display part 61. This notification message can be text or can also be some sort of symbol or character, as well.

In step S220, the CPU 91 sound outputs the player name obtained in step S210 and predetermined notification message from the speaker 75, via the input and output part 94. This notification message is not limited to speech, and can be music or warning sounds. Although a sound volume which can only be heard by the player using the terminal device 30 is preferable when giving this first notification, it is not limited thereto and the volume can be raised.

This first notification is given to alert the player using the terminal device. In this way, the player can retrieve his card without other players knowing that he forgot the card.

### Time measurement/card detection processing

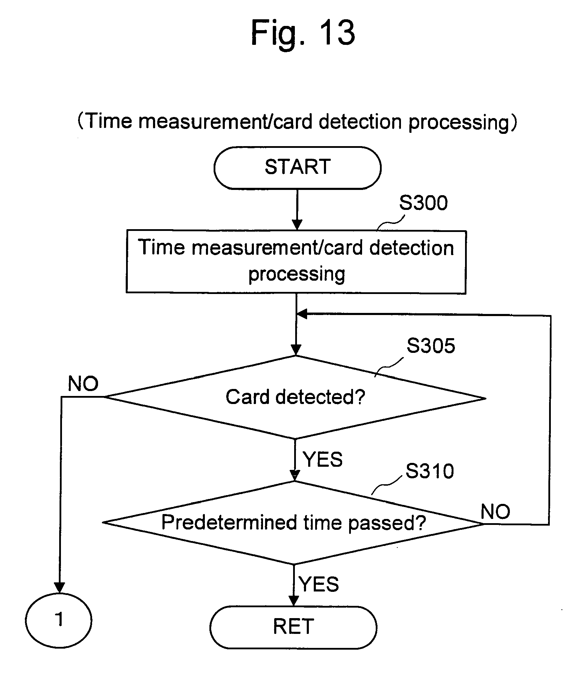

Fig. 13 is a flowchart showing the time measurement/card detection processing.

In step S300, the time measurement part 98 starts to measure time. Then, whether the card is removed from the card slot 721 within the passage of a predetermined amount of time is determined (step S305). Specifically, for example, whether the card sensor 723 detects the card is determined. If the card sensor 723 detects the card, the process proceeds to the processing in step S310. If the card sensor 723 does not detect the card, the process returns to the flowchart in Fig. 12 and the processing is completed.

In step S310, the CPU 91 determines whether a predetermined amount of time has passed. If the predetermined amount of time has not passed, the process returns to the processing in step S305. If the predetermined amount of time has passed, the present sub-routine is completed, and the process proceeds to the processing in step S150 or step S165 in Fig. 11. Second notification processing

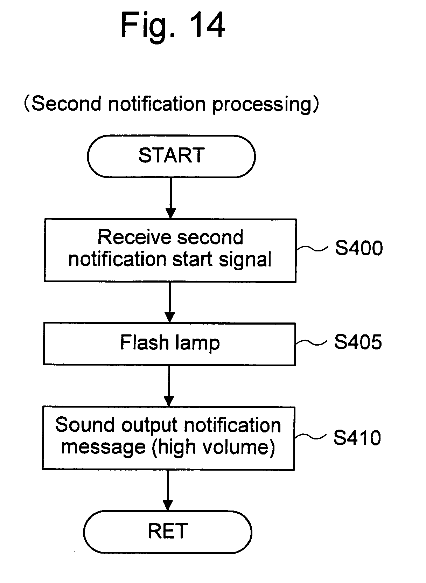

Fig. 14 is a flowchart showing the second notification processing.

In step S400, the input and output part 94 receives the second notification start signal transmitted from the CPU 91. Then, the input and output part 94 illuminates the lamp 76 based on the signal received from the CPU 91 (step S405). This illumination can be flashed at a predetermined interval, flashed in time with the sound output from the speaker 75, or the color thereof can be changed.

In step S410, the input and output part 94 outputs the notification message by sound, through the speaker 75. This notification message is not limited to speech, and can be music or warning sounds. When this second notification is given, instances in which the player is not in the vicinity of the terminal device can be considered because time has passed since the first notification. Therefore, because the purpose is not only to notify the player using the terminal device 30 but also to notify and alert the staff, the sound volume is preferably loud. However, it is not limited thereto and can be low. When this processing is completed, the present sub-routine is completed and the process proceeds to the processing in step S160 (Fig. 11).

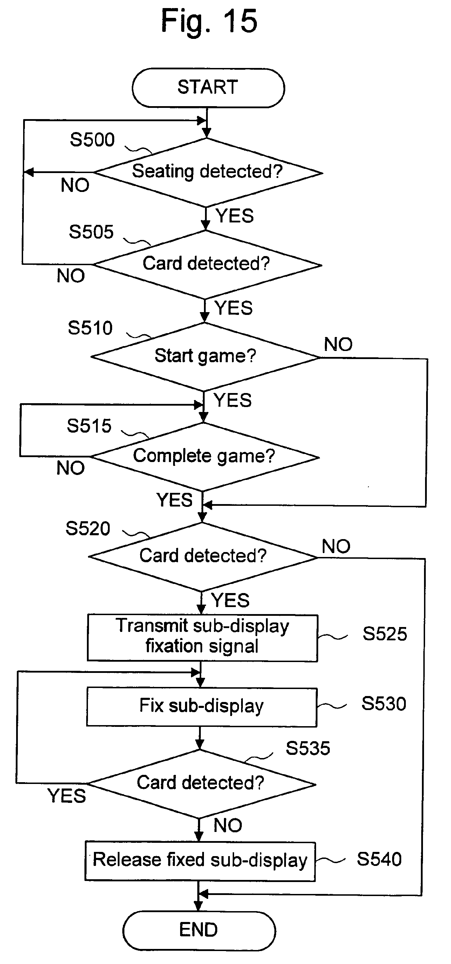

The flowchart in Fig. 15 is explained as another embodiment. Fig. 15 is a flowchart showing a processing for notifying the player that he has forgotten his card by fixing the sub-display part 61.

In step S500, the CPU 91 determines whether the seating sensor 525 installed in the seating part 53 and/or the back rest 53 of the seat part 31 detects seating. If seating is detected, the process proceeds to the processing in step S505. If seating is not detected, the process stands by until the seating sensor 525 detects seating.

In step S505, the CPU 91 determines whether a card is inserted into card slot 721. Specifically, for example, this is determined by whether the card sensor S723, installed in the card slot 721, detects a card. If the card sensor 723 detects the card, the process proceeds to the processing in step S510. If the card sensor 723 does not detect the card, the process returns to the processing in step S500.

In step S510, the start of a game is determined. Specifically, when a game is started, the CPU 91 transmits a game start signal to the main control device 80. Then, the game starts. If the game start signal is not transmitted, the game does not start. If the game is not started, the process proceeds to the processing in step S520.

Whether the game is completed is determined in step S515. Specifically, for example, a selection stating the completion of the game is entered in the input operation part 72, in the operation in the game, and received by the CPU 91. If the CPU 91 receives the game completion selection, the CPU 91 transmits a game completion signal to the main control device 80 and terminates the game. If the game is not completed, the game is continued until the game completion selection is received.

In step S520, card detection is performed. The CPU 91 determines whether a card is inserted into the card slot 721. Specifically, for example, this is determined by whether the card sensor S723, installed in the card slot 721, detects a card. If the card sensor 723 detects the card, the process proceeds to the processing in step S525. If the card sensor 723 does not detect the card, the process is completed.

In step S525, the CPU 91 transmits a sub-display fixation signal. This signal is for notifying that the card is inserted in the card slot 721 by fixing the sub-display part and getting in the way when the player attempts to stand. By this sub-display fixation signal, the connection parts 615 and 616 of the sub-display part 61 and a fixation part are fixed (step S530). In addition, simultaneously with the fixation of the sub-display part 61, notification can be given by the sub-monitor 613 of the sub-display part 61, the speaker 75 and the lamp 76.

In step S535, the CPU 91 detects the card. Specifically, for example, whether the card sensor 723, installed in the card slot 721, detects the card, is determined. If the card sensor 723 detects the card, the process proceeds to the process in step S530. If the card sensor 723 does not detect the card, the fixation of sub-display part 61 is released (step S540) and the processing is completed.

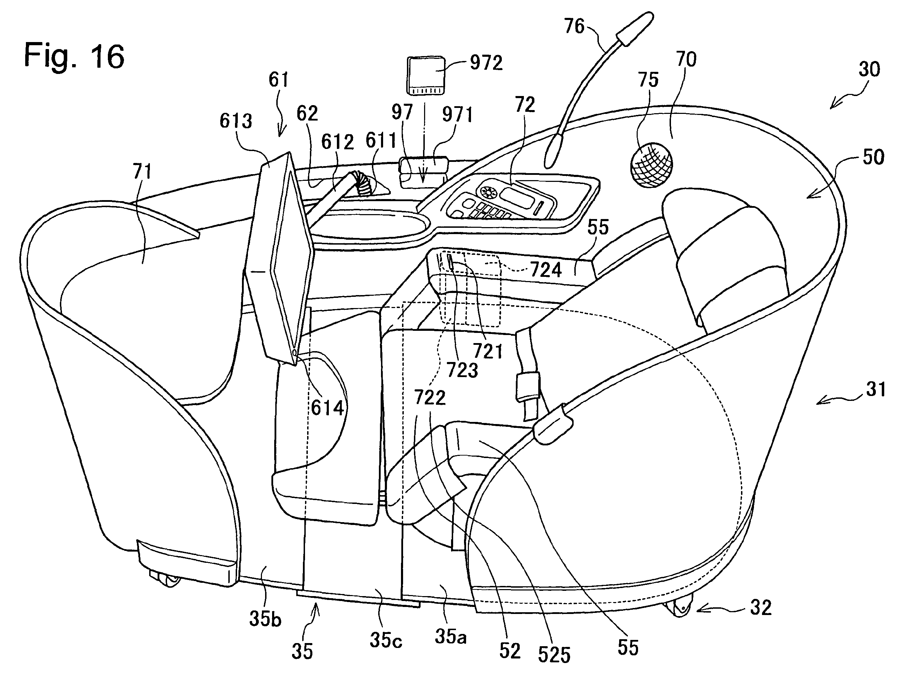

Notification through fixation of the sub-display part can be performed as the first notification and/or the second notification in the main flowchart shown in Fig. 11 and Fig. 12, as described in Fig. 16.

In addition, the first notification and/or second notification and notification by the fixation of the sub-display part 61 can be performed simultaneously. In this case, the CPU 91 transmits a sub-display fixation signal when transmitting the first notification start signal. In addition, if the card is not detected (steps S305 and S535), the CPU 91 transmits the sub-display fixation release signal.

An aspect in which the leg rest is contracted and stored is described next. Configuration of the Seat

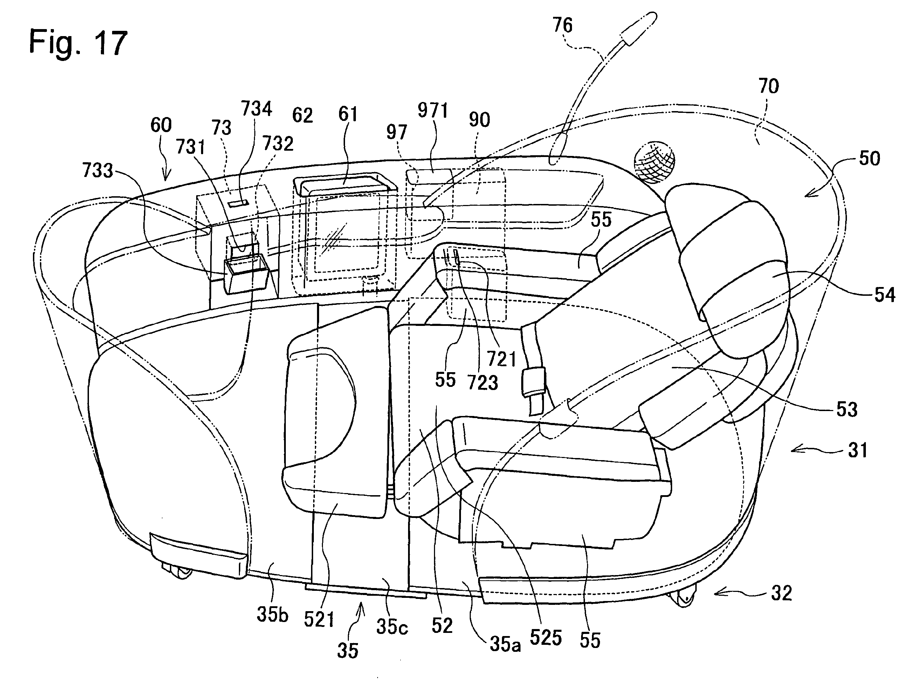

The configuration of the seat 31 is described using figs. 16 through 19.

Fig. 16 is a perspective view of the seat 31.

The seat 31 includes a main seat body 50, a side unit 60 which is provided along one side surface of this main seat body 50, and a seat shell 70 which surrounds this main seat body 50 on three sides, excluding the other side surface side.

The main seat body 50 includes a flat base part 35, a seating part 52 which is provided on the upper surface of this base part 35, a back rest 53 which is attached in to enable changing of its angle to the seating part 52, a head rest 54 which is provided to the top part of the back rest 53, and a pair of side arms 55 which are provided in positions on the seat surface of the seating part 52 and both sides of the back rest 53.

A card slot 721 for inserting a card is fitted and provided near the tip part of the side arm 55. A card sensor 723 which detects the insertion of a card is disposed near the card slot 721. In addition, the inside of the side arm 55 includes a card reader/writer 722 for reading data stored on a card and writing data to a card, and a card holding part 724 for storing the card.

The card has a storage medium for enabling data to be read and written, such as a magnetic card which stores data on magnetic tape, or an IC card which stores data on an IC chip imbedded therein. In addition, the data stored on the card can be personal information such as the player's user ID, gaming history, credit data which is used when starting a game, and the like. In addition, this credit data can be data indicating gaming rights purchased beforehand, such as in a prepaid system. Furthermore, the card can also be a so-called credit card in which the number of times a game is played and the amount of time played are stored as credit data and charged after a predetermined period of time has elapsed.

In addition, as described hereafter, the CPU 91 can be configured to drive and control each driving part when, for example, the card sensor 723 detects that a predetermined card has or has not been inserted into the card slot 721.

The base part 35 includes a rear base part 35a which is the bottom of the seating part 52 and which is disposed on the rear of the seat 31, a front base part 35b disposed on the front of the seat 31, and a center base part 35c disposed between the rear base part 35a and the front base part 35b in a manner which enables it to slide relative to the rear base part 35a and the front base part 35b. The seating part 52, seat shell 70, and the like are fixed to the rear base part 35a while the table 71 and the like are fixed to the front base part 35b. The fixed seating part 52, table 71, and the like can thereby be caused to slide integrally when the rear base part 35a and the front base part 35b slide with respect to the center base part 35c.

The seat 31 can be made more compact, for example, by sliding the rear base part 35a toward the front and sliding the front base part 35b toward the rear. This reduction in size may be performed by a player or the like manually, or, as described hereafter, may be performed automatically by a predetermined driving part.

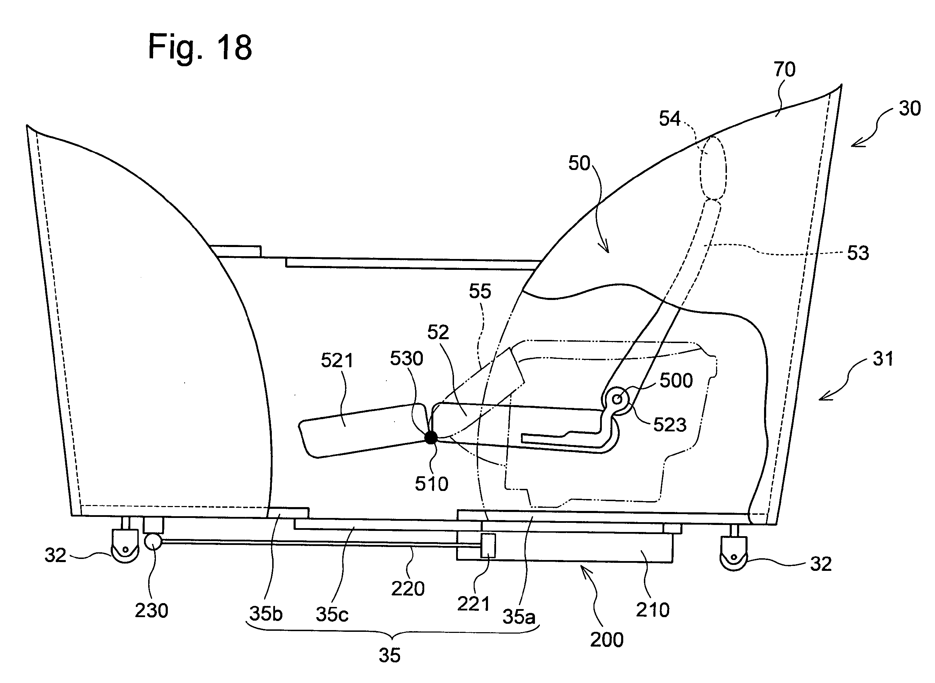

The seat 31 is provided on its lower side with a reconfiguring drive 200 for sliding the rear base part 35a and front base part 35b and contracting the seat 31 as shown in Fig. 18. The reconfiguring drive 200, for example, can use an air cylinder driven by air pressure or the like. For example, the reconfiguring drive 200 in Fig. 18 includes a bar-shaped rod part 220 fixed at one end thereof to a fixing part 230 on the front base part 35b, a piston part 221 formed on the other end of the rod part 220, and a casing part 210 which slidably stores the piston part 221.

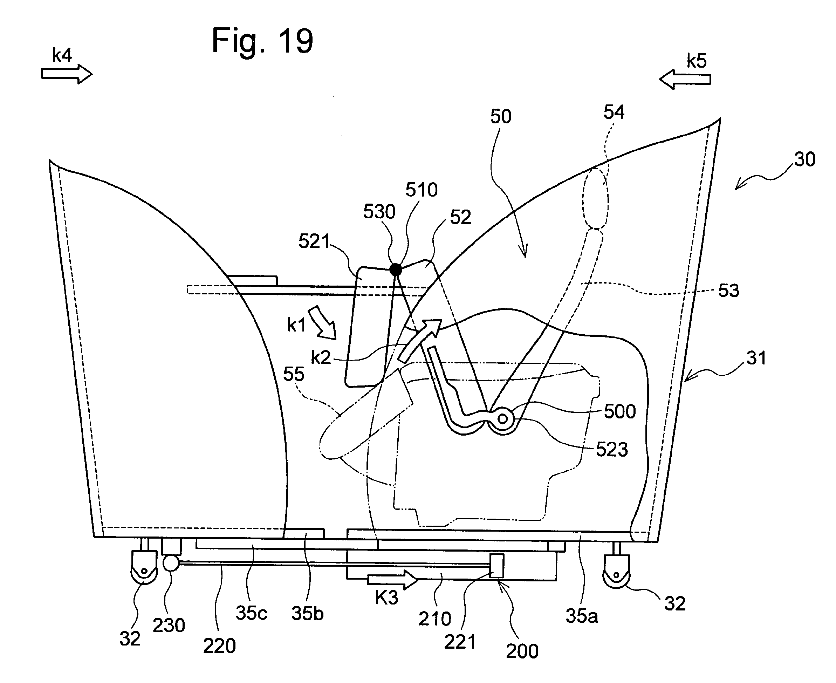

In the reconfiguring drive 200, the piston part 221 is driven in the direction of the arrow K3 by injecting air at a predetermined pressure into the casing part 210, as shown in Fig. 19. The rear base part 35a thereby slides in the direction of the arrow K5 (i.e., the forward direction) while the front base part 35b slides in the direction of the arrow K4 (i.e., the backward direction). In this way, the seat 31 is transformed so as to contract, and is thereby made more compact.

The seat 31 is configured so as to be contractible in the forgoing manner, and, furthermore, the seat 31 can more preferably be made more compact by contracting and storing the main seat body 50, which occupies a large space in the seat 31, in the manner described hereafter.

The seating part 52 in the main seat body 50 moves back and forth on the base part 51 when the player operates the input operation part 72. In the main seat body 50, this seating part 52 can be slid back and forth and, at the same time, the back rest 53 can recline backwards to form a bed. The seating part 52 includes a leg rest 521 which is provided on the front surface side, and a foot rest 522 which is stored in the tip of this leg rest 521. The leg rest 521 turns upward according to the sliding motion when the seating part 52 is slid forward, and becomes a seat surface which continues from the seat surface of the seating part 52. At the same time, the foot rest 522 projects from the leg rest 521 and becomes a seat surface which continues from the leg rest 521.

A bag component, into which air can be injected, is embedded respectively in the seat surface of the seating part 52, the lower part of the back rest 53 (which comes into contact with the lower back of the player) and the head rest 54. When air is injected into these bag components by an air pump, the surface swells and can support the user while accommodating the contours of the body surface of the user.

In addition, a seating sensor 525, which is not shown in the drawing, is embedded in the seating part 52 and/or the back rest 53 for detecting that a player is seated. This seating sensor 525 is a weight sensor which detects the load applied when the player is seated.

The leg rest 521 can be connected to the seating part 52 via a leg rest hinge part 530, as shown in Fig. 18. By using such a configuration, the angle of the leg rest 521 can be adjusted. In addition, the angle of the leg rest 521 can be automatically adjusted by providing a leg rest driving part 510 which drives the leg rest 521.

In addition, the seat 31 can be configured so as to more preferably contract by collapsing the leg rest 521 and the seating part 52 of the main seat body 50 in a predetermined direction before or at the same time that the seat 31 is contracted. Specifically, the leg rest 521 can be configured so as to be collapsed by the leg rest driving part 510 in the direction of the arrow K1, as shown in Fig. 19. Furthermore, the seating part 52, which is collapsibly connected by a seat surface hinge part 523, can be constructed so as to be collapsed by a seat surface driving part 500 in the direction of the arrow K2, i.e., toward the back rest 53.

The leg rest driving part 510 and seat surface driving part 500 can thus be configured so as to be driven, for example, when the card sensor 723 has detected that a predetermined card has not been inserted into the card slot 721. Additionally, it is possible to configure the seat 31 so that when the leg rest driving part 510 is driven, the reconfiguring drive 200 is driven, and the seat 31 is collapsed.

In this way, the game area can be used efficiently by contracting and reducing the size of the seat 31. In addition, a predetermined storage space can be used efficiently since the game machine can be made more compact and stored when, for example, the game machine is stored in the storage space.

A sub-display part 61, which is configured to include a liquid crystal display panel, is stored in the side unit 60.

As shown in Fig. 16, the sub-display part 61 includes a first support arm 611 which is supported by the side unit 60, a second support arm 612 which is attached to the tip of this first support arm 611, and a flat, rectangular sub-monitor 613 which is attached to the tip of this second support arm 612 and performs liquid crystal display. The first support arm 611 can be extended and retracted freely in the direction vertical to the side unit 60. The second support arm 612 can extend and retract freely and can be fixed at an arbitrary angle with respect to the axis direction of the first support arm 611. The sub-monitor 613 can be fixed at an arbitrary angle with respect to the axis direction of the second support arm 612.

A sub-monitor storage space 62 which extends in the vertical direction is provided in the side unit 60, and the forgoing first support arm 611, second support arm 612, and sub-monitor 613 are stored within the sub-monitor storage space 62.

A small CCD camera 614 is embedded into the sub-monitor 613. This CCD camera 614 is used when creating an avatar in the game field. The image taken by the CCD camera 614 is displayed constantly in the sub-display part 61 in the terminal device 30, by operating an input operation part 72 (described hereafter). Because the expressions of the player per se can be viewed during the game, enjoyment increases. In this case, the photographed image can be shown on the entire screen of the sub-monitor 613 or in one section of the screen.

### Configuration of the Sub-Control Device

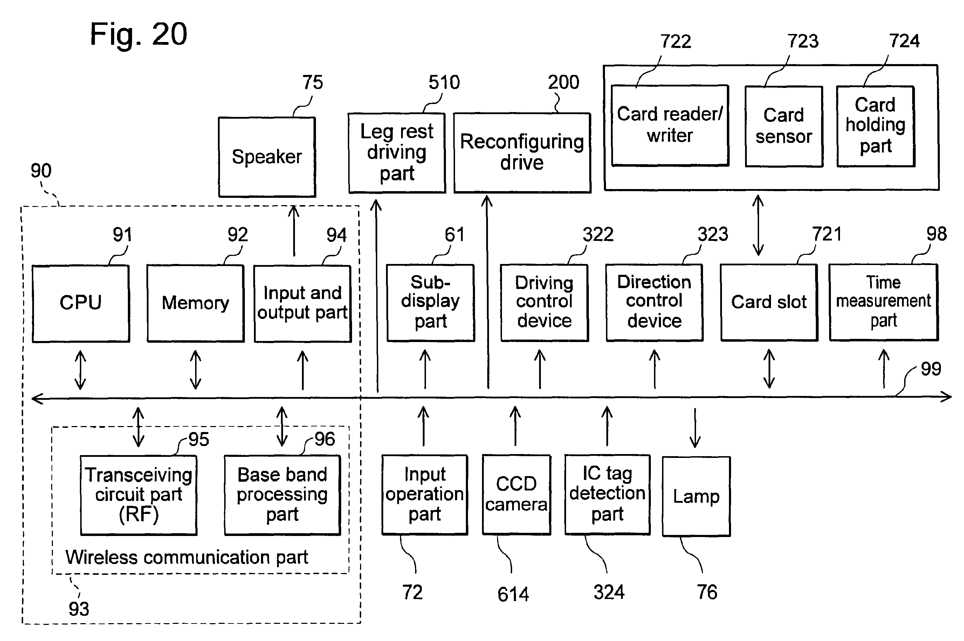

Fig. 20 is a block diagram showing the configuration of a sub-control device 90. The sub-control device 90 has a CPU 91, a memory 92, a wireless communication part 93, and an input and output part 94 which is the interface with the speaker 75, which are connected to a data bus BUS. The wireless communication part 93 includes a transceiving circuit part (RF) 95 for transmitting and receiving signals with the main control device 80, and a base band processing part 96 for converting RF (Radio Frequency) signals received by the transceiving circuit part 95 into base band signals, and also converting base band signals to be transmitted into RF signals. In addition, this sub-control device 90 controls the sub-display part 61, the driving control device 322, the direction control device 323, the card slot 721, the time measurement part 98, the input and output part 74 which is the interface with the speaker 75, the reconfiguring drive 200, and the leg rest driving part 510 based on the input signals from the input operation part 72, the CCD camera 614, and the IC tag detection part 324.

The CPU 91 executes various operations according to the operation programs stored in the memory 92, and controls the respective circuit parts and devices in accordance with these actions.

Sound signal from the main control device 80 are output from the speaker 75 through the following procedure. When the RF signal is received from the main control device 80, the transceiving circuit part 95 supplies this RF signal to the base band processing part 96, and converts this RF signal to a base band signal. The base band processing part 96 outputs this base band signal to the speaker 75 via the input and output part 94. Then, this base band signal is output from the speaker 75 as sound.

In addition, the CPU 91 transmits a sound signal to the input and output part 94, and outputs this from the speaker 75, when a card is inserted into the card slot 721 and the seating sensor 525 installed in the seating part 52 or the back rest 53 does not detect seating.

Furthermore, when the player operates the input operation part 72, after converting to packet data various information (e.g., letter data, specific selection data, or the like) input by operating the input operation part 72, the CPU 91 transmits this to the main control device 80 via the base band processing part 96 and the transceiving circuit part 95. At this time, each terminal device 30 can be identified regardless of the position the terminal devices 30 are placed in the play area 21 by including IP addresses in the packet data.

Similarly, the CPU 91 converts positional information read from the IC tag 211 by the IC tag detection part 324 and image information perceived by the CCD camera 614 into packet data and transmits this to the main control device 80.

On the other hand, when an RF signal to which information converted into packet data is superimposed is transmitted from the main control device 80, the CPU 91 receives this RF signal via the transceiving circuit part 95 and the base band processing part 96, displays it in the sub-display part 61 and, in addition, controls the driving control device 322 and the direction control device 323 of the traveling part 32.

In this way, the player seated in the terminal device 30 can communicate various information with the main control device 80.

Specifically, the CPU 91 performs the following operations.

In other words, when the CPU 91 receives the game program and information expressing the game status corresponding to the time-line in the game field at that time from the main control device 80, the CPU 91 shows various occurrences, such as events, occurring in the game field at this time according to the game program, after storing the information, such as the game program, transmitted from the main control device 80 in the memory 82 on the main display device 22.

Furthermore, the CPU 91 can always confirm the current position of a terminal device 30 within the play area 21 by reading the positional information from the IC tag 211 by the IC tag detection part 324. Then, the CPU 91 receives specification of the position on the play area 21 from the main control device 80, controls the driving control device 322 and the direction control device 323 of the traveling part 32 based on the signal from the IC tag detection part 324, and moves the terminal device 30 to a predetermined position within the play area 21.

In addition, by operating the input operation part 72 while viewing the game content (image, letter information, etc.) shown in the sub-display part 61, the player using respective terminal device 30 can operate the characters shown in the main display device 22, participate in the progress of the game by operations such as selecting from a selection by letters, and move the terminal device 30 to a predetermined position on the play area 21.

Furthermore, the CPU 91 can control the leg rest driving part 510 and the reconfiguring drive 200 in the manner described below. In other words, when the card sensor 723 has detected that a predetermined card has not been inserted into the card slot 721, the CPU 91 can, for example, output a leg rest driving signal for driving the leg rest driving part 510, and drive and control the drive of the leg rest drive part 510. In addition, for example, the CPU 91 can output a reconfiguring driving signal for driving the reconfiguring drive 200, and drive and control the reconfiguring drive 200 to collapse the seat 31.

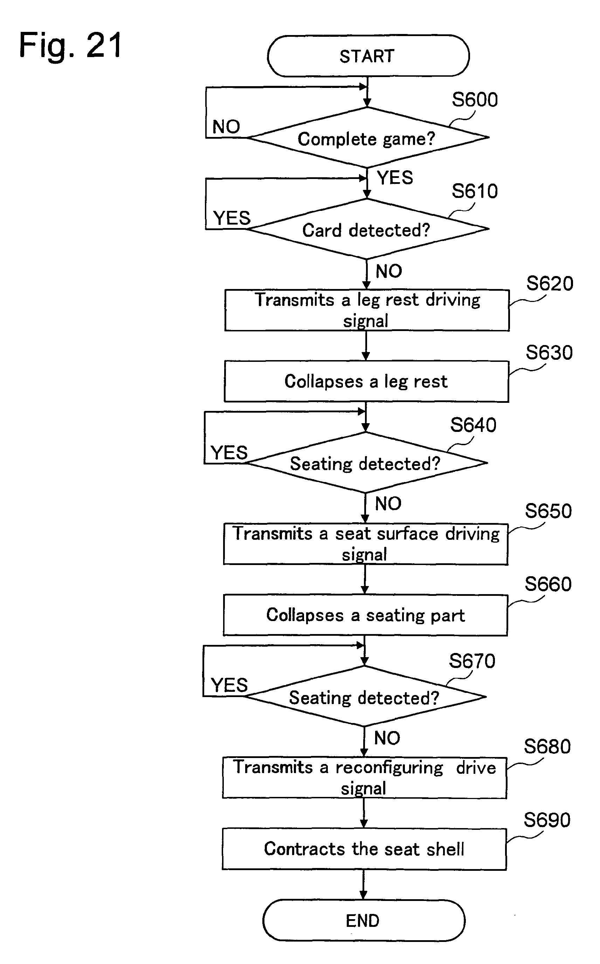

The flowchart of Fig. 21 is described as another example.

Fig. 21 is a flowchart showing the flow of the process for contracting and changing the shape of the seat 31.

In step S600, the CPU 91 detects whether the game is completed. If game completion has been detected, the process proceeds to step S610, and if game completion has not been detected, a standby mode is directly established until game completion is detected.

In step S610, the card sensor 723 detects whether a predetermined card has been inserted into the card slot 721. If the card sensor 723 does not detect a predetermined card, the process proceeds to step S620, and if the card sensor 723 does detect a predetermined card, a standby mode is directly established.

In step S620, the CPU 91 transmits a leg rest driving signal to the leg rest driving part 510 in order to collapse the leg rest 521.

In step S630, the leg rest driving part 510 collapses the leg rest 521 in response to a leg rest driving signal being received from the CPU 91.

In step S640, the seating sensor 525 detects whether a player is seated on the seating part 52. If it is not detected that a player is seated, the process proceeds to step S650, and if it is detected that a player is seated, a standby mode is directly established.

In step S650, the CPU 91 transmits a seat surface driving signal to the seat surface driving part 500 to collapse and drive the seating part 52.

In step S660, the seat surface driving part 500 collapses the seating part 52 in response to a seat surface driving signal being received from the CPU 91.

In step S670, the seating sensor 525 once again detects whether a player is seated on the seating part 52. If it is not detected that a player is seated, the process proceeds to step S680, and if it is detected that a player is seated, a standby mode is directly established.

In step S680, the CPU 91 transmits a reconfiguring drive signal to the reconfiguring drive 200 to contract the seat 31.

In step S690, the reconfiguring drive 200 contracts the seat 31 in response to a reconfiguring drive signal being received from the CPU 91, and the process is completed.

The terminal device 30 can be configured so as to notify the surrounding area that the seat 31 will contract, for example, by configuring the terminal device 30 to produce the sound of air escaping or another predetermined sound before the seat 31 is contracted when the reconfiguring drive 200 is driven by air pressure.

In addition, a configured may be employed wherein the contraction and driving of the seat 31 are stopped when it is detected by a pressure detector (not shown) that detects pressure applied from the outside to the reconfiguring drive 200 for contracting the seat 31 that a pressure greater than a certain predetermined pressure has been applied to the reconfiguring drive 200 while the seat 31 is contracting.

According to the present embodiment, the following effects can be obtained.
(1) Because notification is given when the card is in the card slot 721 regardless of the player leaving the seat, it is possible to prevent the card from being forgotten. Furthermore, because individual data of the player regarding the game and credit information are stored on the card, the game can be continued using this individual data. In addition, there are instances in which the player's sense of enjoyment can be continued by preventing the card from being left behind in this way.
(2) Because credit information is stored on the card, giving it so-called monetary value, the importance of the card to the player is increased, thus, encouraging players to keep the card in mind so as to eliminate cards from getting left behind.
(3) If a card is in the card slot 721 regardless of the player leaving the seat, it is possible to prevent the card from being forgotten. Furthermore, because individual data of the player regarding the game and credit information are stored on the card, the game can be continued using this individual data. In addition, there are instances in which the player's sense of enjoyment can be continued by preventing the card from being left behind in this way.
(4) For example, first notification by sound from the speaker 75 and display in the sub-monitor 613 is performed. Then, if the card is still in the card slot 721 after the first notification, notification is given by sound from the speaker and light from the lamp 76. Thus, it is possible to prevent the card from being left behind by alerting the player again.
(5) Because the sub-monitor is fixed when the player attempts to leave his seat without removing the card when the game is completed, the display part can get in the way and prevent the player from leaving his seat. In this way, there are instances in which the player can realize that he has forgotten his card, thus, preventing the card from being left behind.
(6) If the player has left the card behind regardless of the notifications, the card can be held in the card holding part 724, after the passage of a predetermined amount of time. Therefore, even if the card has been left behind, it is held by the card holding part 724, and the possibility of theft by another person can be reduced.
(7) Because the terminal device 30 can move, a new sense of enjoyment can be provided to the player and the diminishing of enjoyment of the game can be prevented.

Furthermore, the game machine includes a card reception part to which a card provided with memory for storing the individual data of the player is inserted from the outside and which reads the individual data of the player, a card detection part which is connected to the seating part of the seat via a leg rest hinge part and which is used to detect that a card has not been inserted into the card reception part, a leg rest driving part for collapsing and storing the leg rest via the hinge part in response to the card detection part detecting that a card is not inserted, and a reconfiguring drive for driving the collapsing the seat shell in the longitudinal direction when the leg rest is collapsed and stored by the leg rest driving part. Therefore, the leg rest is collapsed and stored by the leg rest driving part when a memory card wherein the individual data of a player is stored is not inserted into the card reception part, and the seat shell can be contracted in the longitudinal direction by the reconfiguring drive. The game area can thereby be efficiently used, for example, by reducing the size of a game machine that is not being played by players, since the game machine can be made more compact. In addition, a predetermined storage space can be efficiently used because the game machine can be made more compact and stored, for example, when the game machine is stored in the storage space.

### [Example 2]

### Overall Configuration of the Game Machine

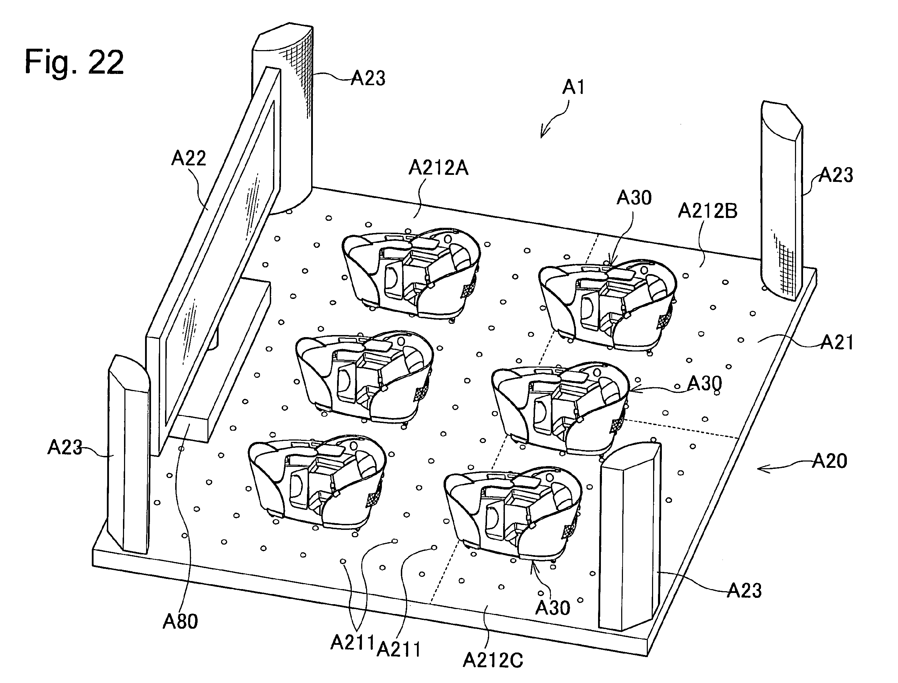

Fig. 22 is a perspective view showing an outward aspect of the game machine A1 according to an embodiment of the present invention.

The game machine1 is a multi-player game machine, including a main game machine body A20 which includes a flat, rectangular play area A21 and a plurality of terminal devices A30 which are placed on this play area A21.

Aside from the play area A21, the main game machine body A20 includes a main display device A22 which is placed along one side of the play area A21, a speaker device A23 which is placed in the four corners of the play area A21, and a main control device A80 for controlling these main display device A22 and speaker device A23.

The play area A21 is divided into a plurality of sub-areas A212. As these sub-areas A212, there are city areas A212A, ocean areas A212B, and forest areas A212C. In addition, IC tags A211 are buried in grid-form in the play area A21. Positional information of the inside of the play area A21 is stored to this IC tag A211.

The main display device A22 is a large projector display device. The main display device A22 is not limited thereto and can also be a large monitor.

The main control device A80 can communicate with each terminal device A30 bi-directionally through wireless LAN and can provide each player with a common virtual space by executing the predetermined game program and bi-directionally communicating with each terminal device A30.

Each terminal device A30 is placed facing towards the main display device A22. This terminal device A30 is connected to the main control device A80 through wireless LAN and can be moved over the play area A21 according to the instructions from the main control device A80 or by player operation.

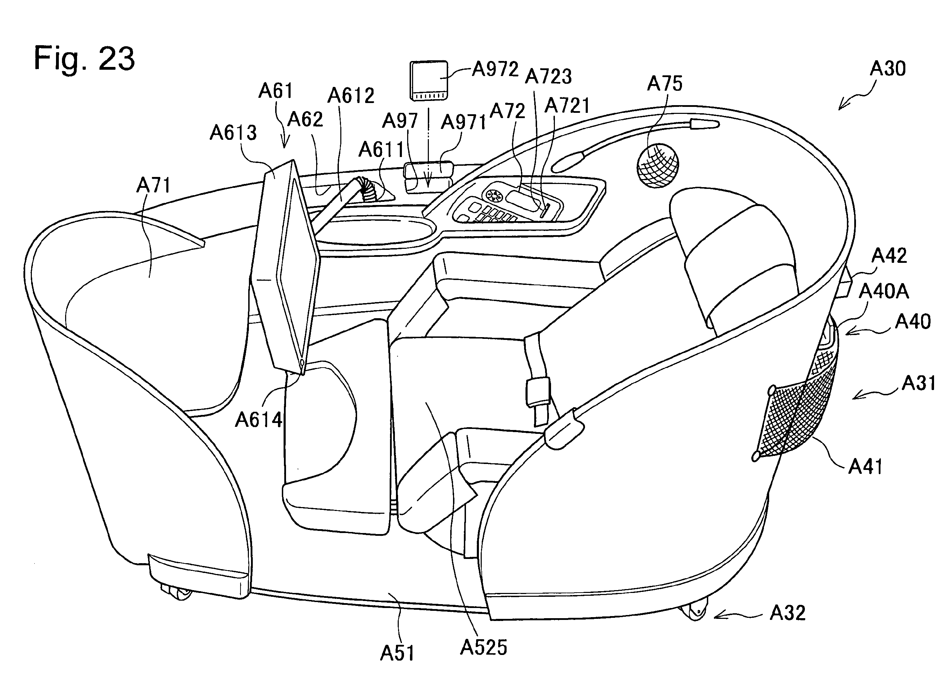

Fig. 23 is a perspective view showing an outward aspect of each terminal device A30.

The terminal device A30 includes a seat A31, a traveling part A32 which supports this seat A31 from beneath and, in addition, moves it over the player area A21, a hook A40 to which belongings are hung, and a belongings camera A42 for photographing the belongings hung on the hook A40. Configuration of the Seat

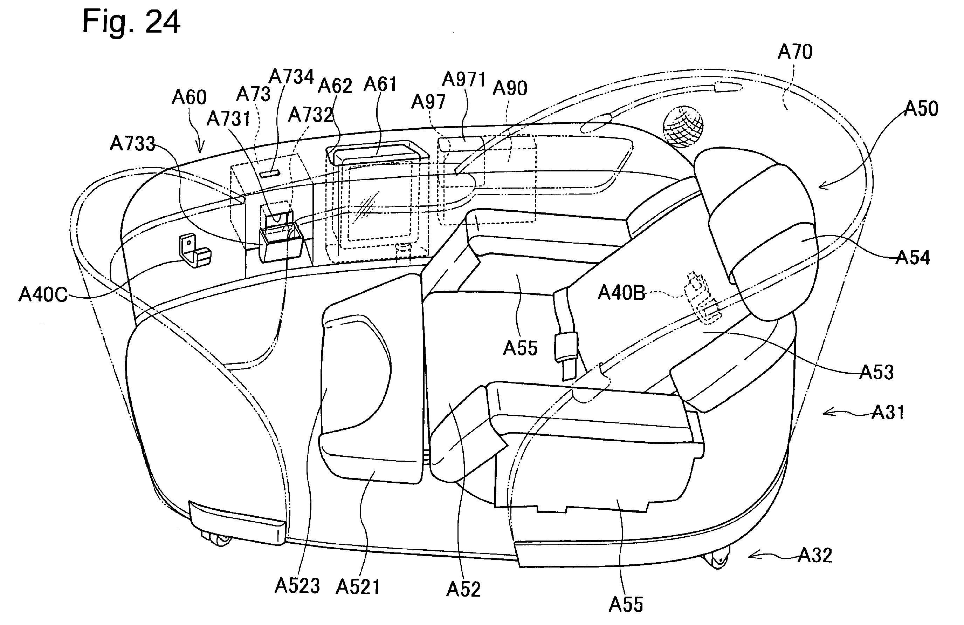

Fig. 24 is a perspective view of the seat A31. The configuration is described hereafter, using Fig. 23 and Fig. 24.

Seat A31 includes a main seat body A50 (Fig. 24), a side unit A60 (Fig. 24) which is provided along one side surface of the main seat body A50, and a seat shell A70 (Fig. 24) which surrounds the main seat body A50 on three sides, excluding the other side surface side.

The main seat body A50 includes a flat base part A51 (Fig. 23), a seating part A52 (Fig. 24) which is provided on this base part A51, a back rest A53 (Fig. 24) which is attached to enable changing of its angle to the seating part A52, a head rest A54 (Fig. 24) which is provided on the top part of the back rest A53, and a pair of side arms A55 (Fig. 24) which are provided in positions on the seat surface of the seating part A52 and both sides of the back rest A53.

The seating part A52 moves back and forth on the base part A51 when the player operates the input operation part A72 (Fig. 23). In the main seat body A50, this seating part A52 can be slid back and forth and, at the same time, the back rest A53 can recline backwards and form a bed.

The seating part A52 includes a leg rest A521 (Fig. 24) which is provided on the front surface side and a foot rest A522 (Fig. 24) which is stored in the tip of this leg rest A521. The leg rest A521 turns upward according to the sliding motion, when the seating part A52 is slid forward, and becomes a seat surface which continues from the seat surface of the seating part A52. At the same time, the foot rest A522 projects from the leg rest A521 and becomes a seat surface which continues from the leg rest A521.

A bag component, into which air can be injected, is embedded respectively within the seat surface of the seating part A52, the lower part of the back rest A53 (which comes into contact with the lower back of the player) and the head rest A54. When air is injected into these bag components by an air pump, the surface swells and can support the user while accommodating the contours of the body surface of the user.

In addition, a seating sensor, not shown, for detecting that a player is seated is embedded in the seating part A52 or the back rest A53. This seating sensor A525 is a weight sensor or a pressure sensor which detects the pressure applied when a player is seated. When the seating sensor A525 detects seating, a lock start signal for operating the hook A40 is transmitted. If seating is not detected, a lock release signal is transmitted.

The sub-display part A61 (Fig. 23 and Fig. 24) which is configured to include a liquid crystal display panel is stored in the side unit A60.

As shown in Fig. 23, the sub-display part A61 includes a first support arm A611 which is supported by the side unit A60, a second support arm A612 which is attached to the tip of the first support arm A611, and a flat, rectangular sub-monitor A613 which is attached to the tip of the second support arm A612 and performs liquid crystal display.

The first support arm A611 can be extended and retracted freely in the direction vertical to the side unit A60. The second support arm A612 can extend and retract freely and can be fixed to an arbitrary angle to the axis direction of the first support arm A611. The sub-monitor A613 can be fixed to an arbitrary angle to the axis direction of the second support arm A612.

A small CCD camera A614 is embedded into the sub-monitor A613. This CCD camera A614 is used when creating an avatar in the game field. The image taken by the CCD camera A614 is displayed constantly in the sub-display part A61 in the terminal device A30, by operating an input operation part A72 (described hereafter). Because the expressions of the player per se can be viewed during the game in this way, enjoyment increases. In this case, the photographed image can be shown on the entire screen of the sub-monitor A613 or in one section of the screen.

A sub-monitor storage space A62 which extends in the vertical direction is provided in the side unit A60, and the foregoing first support arm A611, a second support arm A612, and a sub-monitor A613 are stored within the sub-monitor storage space A62.

A sub-control device A90 which is connected by wireless LAN to the main control device A80 and a plurality of board storage slots A97 which configure this sub-control device A90 are provided within the side unit A60.

The sub-control device A90 controls the sub-display part A61 and the traveling part A32, based on instructions from the main control device A80, as well as transmitting signals input by the input operation part A72 (described hereafter) to the main control device A80.

A cover part A971 is provided to open and close freely on the upper part of the board storage slots A97. By opening the cover part A971 and inserting a terminal control board A972 from above, as shown in Fig. 23, the terminal control board A972 can be attached to the board storage slot A97.

The rear of the seat shell A70 extends upward and can support the back rest A53 and the head rest A54. In addition, speakers A75 are provided on both sides of the head rest A54 of the seat shell A70.

The rears of the side surfaces of the seat shell A70 extends upward so that the player seated in the main seat body A50 cannot be viewed by other players.

A table A71 (Fig. 23) is attached from one side surface of the main seat body A50 to the front surface, on the upper edge of the seat shell A70. The space beneath this table A71 accepts the leg rest A521 and the foot rest A522 which is provided by rotating a part of the leg rest A521.

The input operation part A72 (Fig. 23), configured by a keyboard, a jog dial and the like, is provided in the vicinity of the side arm A55 on the table A71.

A card slot A721 for inserting credit cards and membership cards is provided and a card sensor A723, for detecting the insertion of the card is installed in this input operation part A72.

Although the input operation part A72 is provided on the table A71 in the present embodiment, this is not limited thereto, and can be provided as a touch-panel on the sub-monitor A613.

A medal payout opening A731 from which medals are paid out from a medal collection part A73 provided within the side unit A60, a medal receiving part A732 for receiving the medals which are paid out, and a medal insertion part A734 to which medals are inserted are provided below the table A71 and in front of the side arm A55. A holder A733 for attaching the medal receiving part A732 is provided in the medal receiving part A732. In addition, a sensor for detecting that a medal is inserted is installed in the medal insertion part A734. For example, this medal can be paid out according to the betting odds of an event within the game program. For example, predetermined odds (betting odds) are stipulated to the participants for a certain event (win/loss of horse-racing, combat, etc.), similar to a book-maker, and the player bets on the object of his choice. Then, medals are paid out based on the odds, according to the win/loss results. The prize resulting from this book-maker is not limited to medals and can be items within the game environment.

A hook A40 (described hereafter) on which belongings are hung and a belongings camera A42 are provided on the outside of the seat shell A70. Although the hook A40A (Fig. 23) is provided on the outside of the seat shell A70, this is not limited thereto, and can be provided below the table A71 (A40C; Fig. 24) or on the back surface of the back rest A53 (A40B; Fig. 24). In addition, the hook A40B is not limited to the back surface of the back rest A53 and can be provided on the lower part of the side arm A55. The hook A40 is not limited to one location and can also be provided in plural locations. A belongings holder A41 for placing belongings can also be provided below the hook A40.

In addition, a belongings camera A42 is provided above the hook A40. This belongings camera A42 faces the hook part below, and photography starts when a stopper A413, described hereafter extends and the upper aperture of the hook enters a closed state. In other words, when the CPU A91 transmits a lock start signal to the hook, a photography start signal is transmitted to the belongings camera simultaneously, and the belongings camera A42 receives the photography start signal and starts photography. The photographed images are shown on the sub-monitor A613. This image can be shown constantly on the sub-monitor or shown by operation of the input operation part A72 by the player. In this case, the photographed image can be shown on the entire screen of the sub-monitor or shown in one part of the screen.

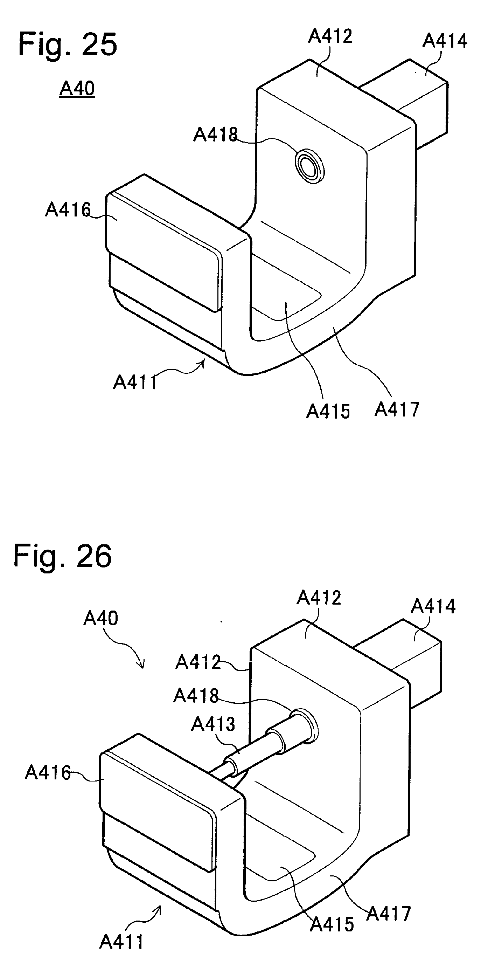

Fig. 25 and Fig. 26 are enlarged perspective views of the hook A40. The hook P40 includes a main hook body A411, a hook control device A412 for receiving lock start signals and lock release signals, described hereafter and extending a stopper, a stopper A413 which is configured by an electric actuator (not shown), a stopper storage part A414 in which the electric actuator is stored, and a lamp A416. In addition, a sensor A415 is provided in the balancing support part A417 of the main hook body A411.

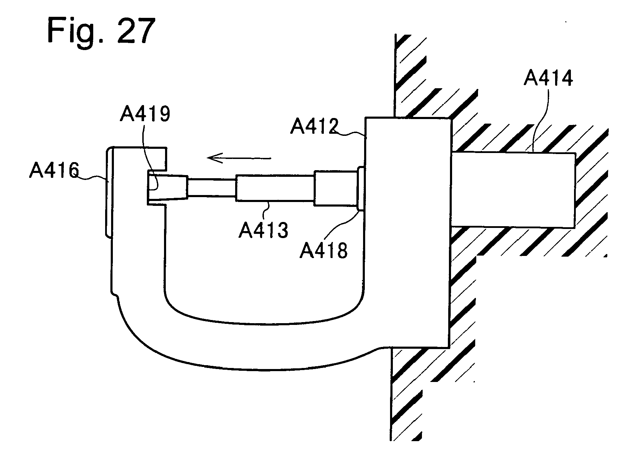

Specifically, if some kind of a load, such as belongings being hung, is applied to the balancing support part A417 of the main hook body A411, the sensor A415 detects that a load is applied and transmits a lock start signal to the hook control device A412. The hook control device A412 which receives the signal drives the motor of the electric actuator to extend the stopper A413, and extends the stopper A413 from the stopper opening A418, as in Fig. 27. The lock start signal is not limited to detection by the sensor A415 and can also be transmitted by detection by the seating sensor embedded in the seating part A52 or the back rest A53 or detection of the transmission of the game start signal from the CPU A91 to the main control device A80.

The sensor A415 can be a weight sensor which detects weight, but is not limited to weight, and can be a touch sensor for detecting that the belongings are touching the sensor or a so-called presence detection sensor, such as an infrared sensor or a light sensor.

In addition, the contact part A419 of the balancing support part A417 which is in contact with the stopper A413 has a concave cavity-shape in order to fit the tip part of the stopper A413. The tip part of the stopper A413 fits into this depression. Then, when the stopper A413 is extended, a lamp A416, which is provided outside of the balancing support part A417 is lit.

Furthermore, by receiving a lock start signal from the CPU A91, the electric actuator for extending the stopper A413 is locked and the stopper A413 is fixed.

The stopper A413 is can be fixed when the sensor A415 detects the belongings, transmits the lock start signal, and the hook control device A412 receives the signal or simultaneously with the stopper A413 extending and coming into contact with the contact part A419.

In addition, in order to release the lock, the hook control device A412 receives a lock release signal from the CPU A91. In this way, the fixation of the stopper A413 can be released, and when the lock release signal is received by the hook control device A412 again, the electric actuator can operate to store the stopper A413 into the stopper storage part A414 and the hook A40 can enter an opened state. The fixation of the stopper A413 can also be released and the stopper A413 can be stored with the reception of one lock release signal.

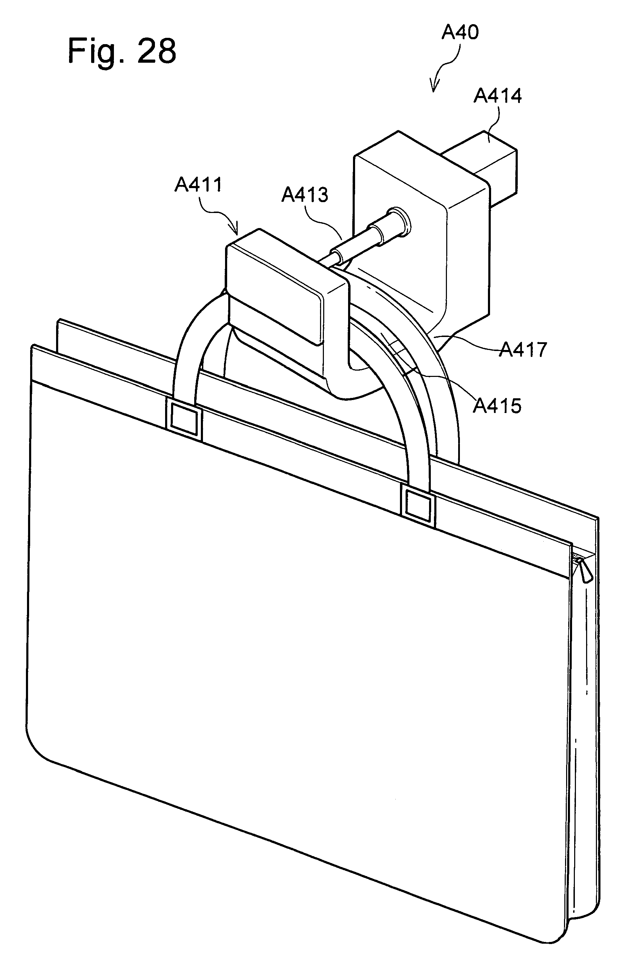

As shown in Fig. 28, the risk of theft of the hung belongings can be circumvented by extending and fixing the stopper A413.

Fig. 7 is a block diagram of an overall configuration of the game machine A1.

In this game machine 1 (A1), the main control device 80 (A80) of the main game machine body 20 (A20) had a wireless communication part 83 (A83) and the sub-control device 90 (A90) of the terminal device 30 (A30) has a wireless communication part 93 (A93). These wireless communication parts 83 (A83) and 93 (A93) can be interconnected by a wireless LAN, and thus, the transfer of sound data and character data can be performed between the main control device 80 (A80) and the sub-control device 90 (A90). Configuration of the Main Control Device

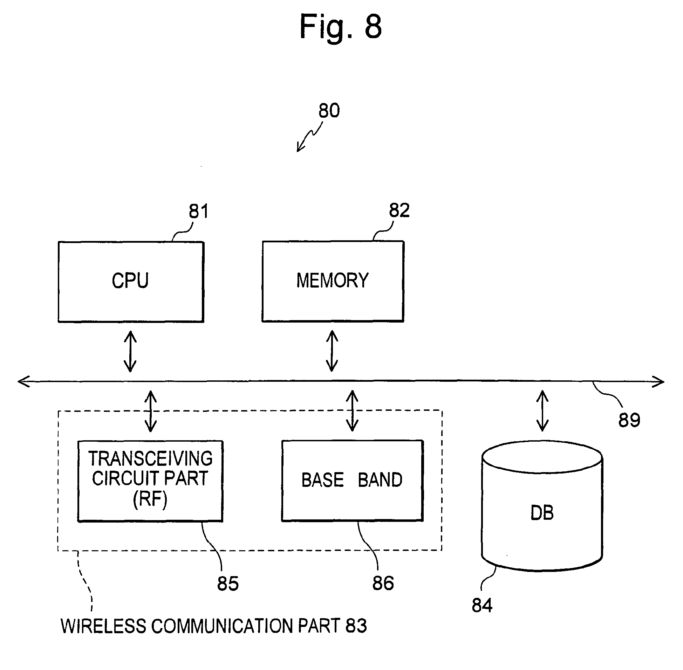

Fig. 8 is a block diagram showing the configuration of the main control device 80 (A80).

The main control device 80 (A80) has a CPU 81 (A81), a memory 82 (A82), a wireless communication part 83 (A83), and a database 84 (A84), which are connected to a data bus 89 (A89).

The wireless communication part 83 (A83) includes a transceiving circuit part (RF) 85 (A85) for transmitting and receiving signals with the sub-control device 90 (A90), and a base band processing part 86 (A86) for converting RF (Radio Frequency) signals received by the transceiving circuit part 85 (A85) into base band signals and also converting base band signals to be transmitted into RF signals.

The database 84 (A84) is a circuit board which includes a memory part to which a game program is stored or a storage medium (for example, a hard disk or ROM cassette) to which the game program is stored.

Specifically, a slot to which these circuit boards and storage mediums can be attached and removed is provided in the main control device 80 (A80). By attaching and removing these circuit boards and storage mediums from the slot, the game program stored to the database 84 (A84) can be replaced, accordingly, and other game programs can be executed. Replacing the game program is not limited to that via hardware, as such, and the game program can be replaced directly by downloading via a communication circuit.

The CPU 81 (A81) performs various processing according to the game program.

In other words, the CPU 81 (A81) reads the game program stored in the database 84 (A84) and runs the game according to this game program.

During the game, the CPU 81 (A81) extracts the game program, information expressing the game status corresponding to the time-line in the game field at the time (namely, information expressing events and the like occurring in the game field) from the database 84 (A84) and transmits this to the terminal device 30 (A30), which is the request source, via wireless LAN. In addition, the CPU 81 (A81) receives information expressing the operation results of the player from each terminal device 30 (A30) and stores this in the memory 82 (A82), via wireless LAN.

The CPU 81 (A81) runs the game and stores the progress results of the game program to the database 84 (A84), based on the information expressing the operation results of the player stored to the memory 82 (A82).

Here, the information expressing the operation results of the player are, for example, selection results by the player from a selection shown to the player via the terminal device 30 (A30), based on the progress of the game program, or the results of the operation performed by the player of the character appearing in the game, and is information transmitted from the terminal device 30 (A30) as a result of the player operating their respective terminal devices 30 (A30). Other players can check the progress status of the current game stored in this database 84 (A84) (for example, high-score information, etc.)

### Configuration of the Sub-Control Device

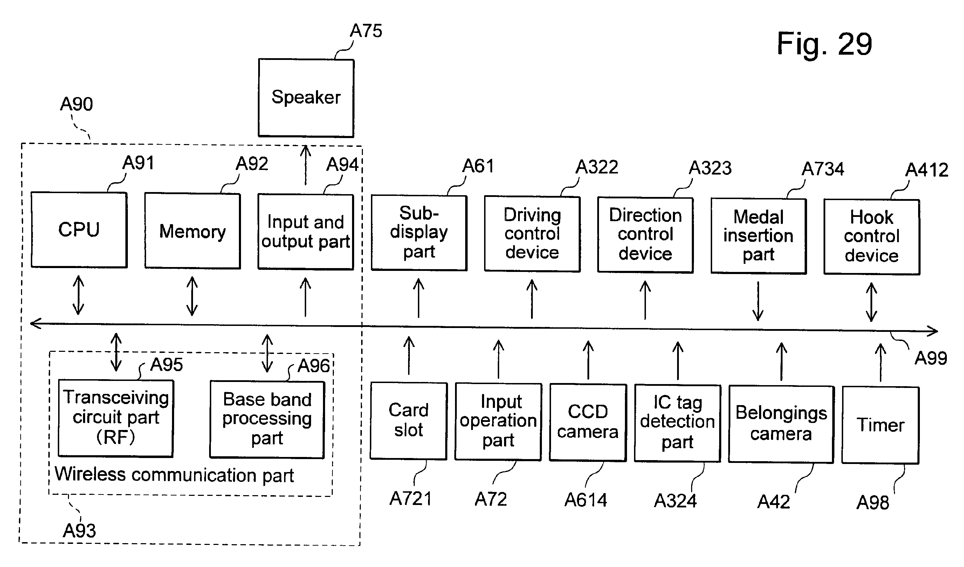

Fig. 29 is a block diagram showing the configuration of the sub-control device A90.

The sub-control device A90 has a CPU A91, a memory A92, a wireless communication part A93, and an input and output part A94 which is the interface with the speaker A75, which are connected to a data bus A99.

The wireless communication part A93 includes a transceiving circuit part (RF) A95 for transmitting and receiving signals with the main control device A80, and a base band processing part A96 for converting RF (Radio Frequency) signals received by the transceiving circuit part A95 into base band signals and also converting base band signals to be transmitted into RF signals.

In addition, the sub-control device A90 controls the sub-display part A61, driving control device A322, and direction control device A323, based on the input signals from the input operation part A72, medal insertion part A734, hook A40, CCD camera A73, belongings camera A42, timer A98, card slot A721, and IC tag detection part A324.

The CPU A91 executes various operations according to the operation programs stored in the memory A92 and control respective circuit parts and devices according to the operations.

Sound signals from the main control device A80 are output from the speaker A75 through the following procedure.

When the RF signal is received from the main control device A80, the transceiving circuit part A95 supplies this signal to the base band processing part A96 and converts this RF signal to a base band signal. The base band processing part A96 outputs this base band signal to the speaker A75, via the input and output part A94. Then, this base band signal is output from the speaker A75 as sound.

Furthermore, when the player operates the input operation part A72, after converting various information (text information, specific selection information, etc.) input by operating the input operation part A72 into packet data, the CPU A91 transmits this to the main control device A80, via the band base processing part A96 and the transceiving circuit part A95. At this time, each terminal device A30 can be identified regardless of the position the terminal devices A30 are placed on the play area A21.

Similarly, the CPU A91 converts positional information read from the IC tag A211 by the IC tag detection part A324 and image information perceived by the CCD camera A73 into packet data and transmits this to the main control device A80.

On the other hand, when an RF signal to which information converted into packet data is superimposed is transmitted from the main control device A80, the CPU A91 receives this RF signal via the transceiving circuit part A95 and the base band processing part A96, displays it in the sub-display part A61 and, in addition, controls the driving control device A322 and the direction control device A323 of the traveling part A32.

In this way, the player seated in the terminal device A30 can communicate various information with the main control device A80.

Specifically, the CPU A91 performs the following operations.

In other words, when the CPU A91 receives the game program and information expressing the game status corresponding to the time-line in the game field at that time from the main control device A80, various occurrences, such as events, occurring in the game field at this time is shown in the main display device A22, according to the game program, after storing the information, such as the game program, transmitted from the main control device A89 in the memory A82.

Furthermore, the CPU A91 can always confirm the current position of the terminal device A30 within the play area A21 by reading the positional information from the IC tag A211 by the IC tag detection part A324. Then, the CPU A91 receives specification of the position on the play area A21 from the main control device, controls the driving control device A322 and the direction control device A323 of the traveling part A32 based on the signal from the IC tag detection part A324, and moves the terminal device A30 to a predetermined position within the play area A21.

In addition, by operating the input operation part A72 while viewing the game content (image, letter information, etc.) shown in the sub-display part A61, the player using respective terminal device A30 can operate the characters shown in the main display device A22, participate in the progress of the game by operations such as selecting from a selection by letters, and move the terminal device A30 to an designated position on the play area A21.

### Lock Start Processing

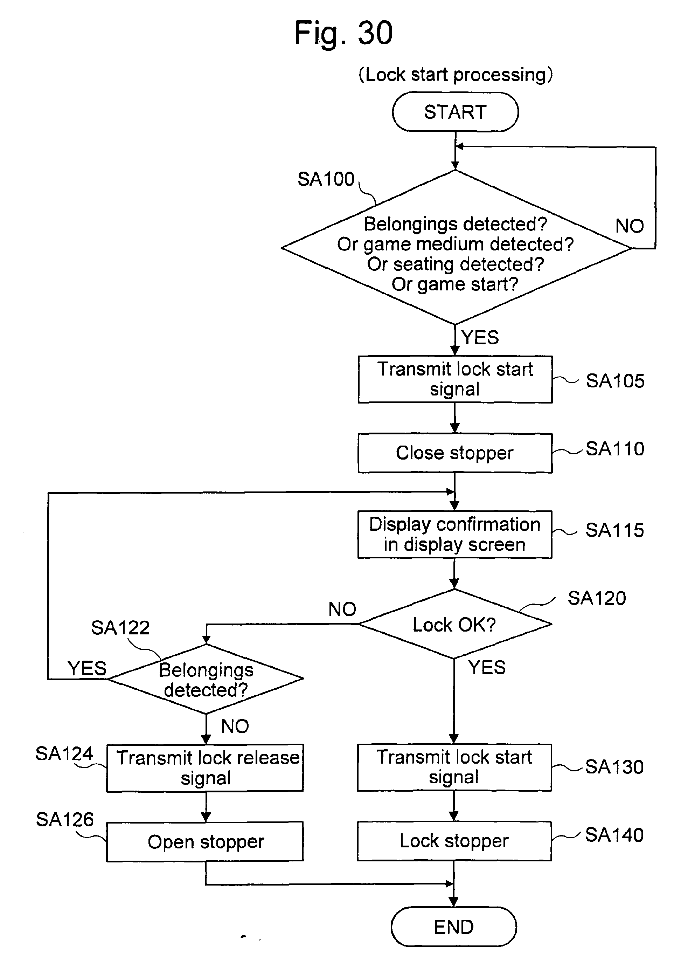

Fig. 30 is a flowchart of a processing for starting the lock of the hook A41 in one example of a preferred embodiment of the present invention.

First, the CPU A91 determines the availability of belongings detection, game medium insertion detection, seating detection or game start detection (step SA100). The belonging detection is performed by the sensor A415. This sensor A415 can be a weight sensor or a so-called presence detection sensor, such as a touch sensor. In addition, the game medium insertion detection is performed by a sensor installed in the card slot A721 or a sensor installed in the medal insertion part A734. In addition, the seating detection is performed by a seating sensor, and the game start is detected by the CPU A91 transmitting a game start signal to the main control device A80. If these are not detected, the game machine stands by until they are detected.

When belongings, game medium, seating, or game start is detected, the CPU A91 transmits a lock start signal to the hook control device A412 (step SA105). The hook control device A412 which receives the lock start signal drives the electric actuator within the stopper storage part A414 and extends the stopper A413 (step SA110). When the stopper A413 contacts the contact part A418, the electric actuator can be locked and the stopper A413 can be fixed.

In step SA115, confirmation display is performed in the sub-monitor A613. For example, a display such as "Do you want to lock the hook?" is performed. This confirmation can be changed to the sub-monitor A613 or can be both through both display and sound, as well.

In step SA120, the CPU A91 determines whether to lock the hook. This determination is made by showing selection choices when showing the confirmation display in step SA115 and the player selecting a selection choice via the input operation part A72. If the CPU 91 receives an input of the selection choice, "Do not lock", the process proceeds to the processing in step SA122. In addition, if an input of the selection choice "Lock" is received, the process proceeds to the processing in step SA130.

In step SA122, the CPU 91 determines whether the sensor A41 detects belongings. If the sensor A415 detects belongings, the process returns to step SA115. In addition, if the sensor A415 does not detect belongings, the sensor A415 transmits a lock release signal (step SA124) and the hook control device A412 returns the stopper to its original state (step SA126). This is an instance, for example, when the belongings are hung on the hook A40 once but then are lifted up to be removed from the hook in order to move to another seat or the like.

In step SA120, when the CPU A91 receives input for performing lock from the input operation part or the like by the player, the CPU A91 transmits a lock start signal to the hook control device A412 (step SA130). Then, the hook control device A412 locks the electric actuator and locks the stopper A413 (step SA140). When this processing is completed, the present flowchart is completed.

### Lock Release Processing

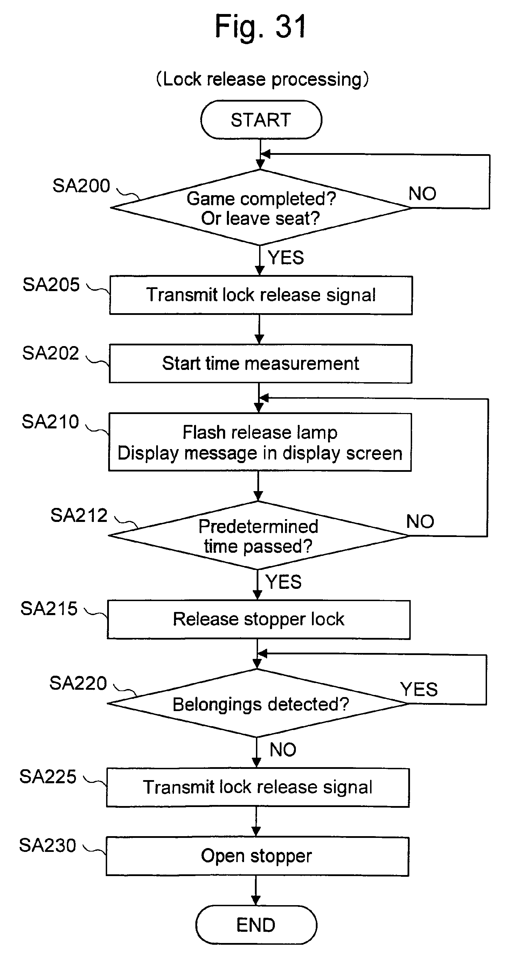

Fig. 31 is a flowchart of a processing for releasing the lock of the hook A40, in one example of a preferred embodiment of the present invention.

First, in step SA200, it is determined whether the game is completed or the player has left the seat. Specifically, the game is completed when the CPU A91 transmits a game completion signal to the main control device A80, and the player has left the seat when the seating sensor embedded in the seating part A52 or the back rest A53 of the main seat body A50 does not detect seating. Then, if the sensor A415 does not detect game completion or leaving of the seat, the game machines stands by until it is detected. In addition, when the game completion or leaving of the seat is detected, the process proceeds to the processing in step SA205.

In step SA205, the lock release signal is transmitted. The CPU A91 transmits the lock release signal when the CPU A91 transmits a game completion signal to the main control device A80 in step SA200. In addition, if the seating sensor does not detect seating, the seating sensor transmits a lock release signal.

In step SA202, the timer A98 starts to measure time. Then, in step SA210, lock release notification is performed. Specifically, the CPU A91, which received the lock release signal transmitted in step SA205, displays message, symbols, and the like stating that the lock has been released on the sub-monitor A613. In addition, the hook control device A412 which received the lock release signal flashes the lamp A416 of the hook A40. This notification can be given by sound via the speaker A75 by instruction sent from the CPU A91 to the input and output part A94.

In step A212, the CPU A91 determines whether a predetermined amount of time has passed. Specifically, whether the time measured by the timer A98 in step SA202 has exceeded a predetermined amount of time is determined. This predetermined amount of time can, for example, be set beforehand, presuming the time until player reaches the hook A40 from the detection of the player leaving the seat or the game completion. If it is determined that the predetermined amount of time has not passed, the process returns to the processing in step SA210. If it is determined that the predetermined amount of time has passed, the process proceeds to the processing in step SA215.

Then, the CPU A91 transmits the lock release signal to the hook control device A412, and the hook control device A412 releases the lock of the stopper A413 (step SA215). Furthermore, if the sensor A415 does not detect the belongings because the player has lifted up the belongings or the like, the sensor A415 transmits a lock release signal (step SA225), and the hook control device A412 opens the stopper (step SA230). Although the lock of the stopper A413 is released in step SA215 and the stopper A413 is opened in step SA230, the stopper A413 can be opened when the lock is released, as well.

In addition, although the hook A40 is provided on the outside of the seat shell A70, the back surface of the back rest A53 of the main seat body A50, or under the table A71, when storing the belongings, it is not limited thereto.

In addition, as another embodiment, rather than the game machine A1 being configured by the main game machine A20 and the terminal device A30, it can be configured so that the game can be played by the terminal device alone. In this case, in the configuration of the sub-control device A90 (Fig. 29), a database for storing the game program and memory are included, as in the main control device A80. Furthermore, the CPU A91 reads the game program stored in the database to the memory, displays image in the sub-display part A61 according to the game program and runs the game. Then, the hook control device A412 can extend and retract the stopper A413 of the hook A40 according to the game start signals and the game completion signals transmitted by the CPU A91 and perform lock and lock release.

The following embodiment may be used as another mode. Lock Start Processing

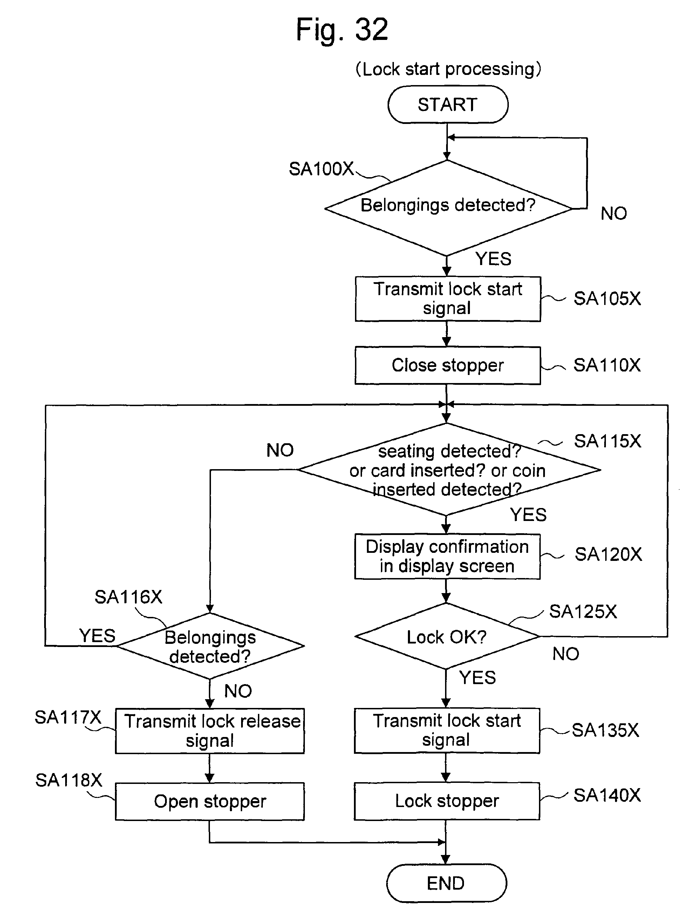

Fig. 32 is a flowchart showing the flow of the process when the lock of the hook A40 is engaged in one example of a preferable mode of the present invention.

First, a sensor A415 detects belongings (step SA100X). The detecting sensor A415 may be a weight sensor, a pressure sensor, or another so-called presence detection sensor. If belongings are not detected, a standby mode is maintained until the belongings have been detected.

If the sensor A415 detects belongings, a lock start signal is transmitted to a hook control device A412 (step SA105X) by the sensor A415. The hook control device A412 that has received a lock start signal drives an electric actuator within the stopper storage part A414 and extends the stopper A413 (step SA110X). The electric actuator may be locked and the stopper A413 fixed when the stopper A413 contacts a contact part A418.

Next, a confirmation is displayed on the sub-monitor A613 (step SA120X) if a seating sensor embedded in the seating part A52 or in the back rest A53 of the main seat body A50 detects that a player is seated, if a sensor embedded in the card slot A721 detects a card, or if a sensor embedded in the medal insertion part detects that a coin has been inserted (step SA115X). For example, a message such as "Is it okay for the hook to be locked?" is displayed.

In addition, a standby mode is directly established in cases in which the sensor A415 detects belongings (step SA116X) when seating or the like is not detected. Furthermore, if the sensor A415 does not detect belongings, the sensor A415 may transmit a lock release signal (step SA117X) so that the hook control device A412 returns the stopper to the original position (step SA118X). This applies to cases in which, for example, belongings are temporarily placed on the hook A40 but are then removed from the hook and picked up. The procedure ends when this process is completed.

When the sub-monitor A613 displays a confirmation, and the CPU A91 receives input to engage the lock from the player by the input operation part A72 or the like (step SA125X), the CPU A91 transmits a lock start signal to the hook control device A412 (step SA135X). The hook control device A412 locks the electric actuator and the stopper A413 (step SA140X). When this process is complete, the present flowchart is completed. In addition, when the CPU A91 has received instructions not to engage the lock (step SA125X), the process proceeds to step SA115X. The process after step SA116X proceeds as described above, and is therefore omitted. Lock Release Processing

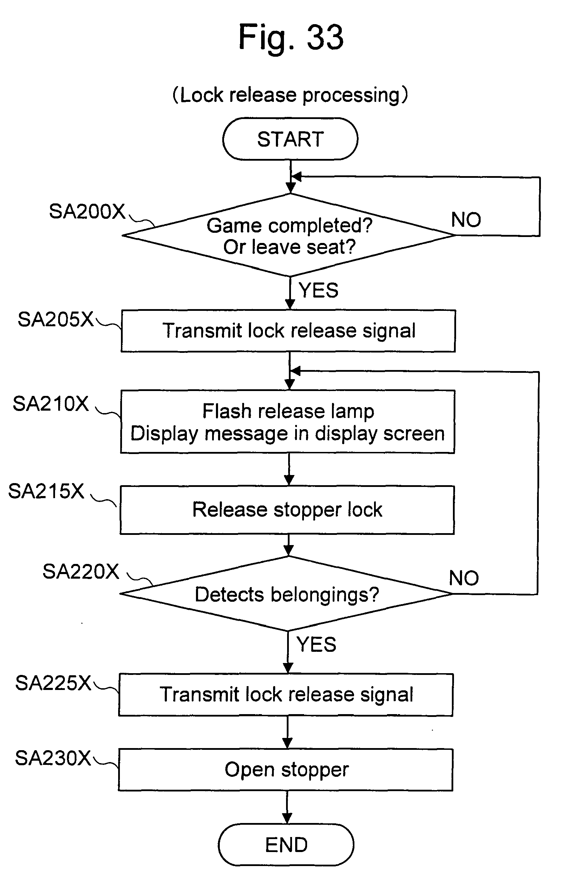

Fig. 33 is a flowchart showing the flow of the process for releasing the lock of the hook A40 in one example of a preferred embodiment of the present invention.

First, in step SA200X, game completion or the player's departure from the seat is detected. Specifically, it is determined that the game is completed when the CPU A91 has transmitted a game completion signal to the main control device A80, or that the player has left the seat when the back rest A53 of the main seat body A50 or the seating sensor in the seating part A52 does not detect seating. When game completion or the player's departure from the seat is not detected, a standby mode is directly established until either is detected. In addition, when it is detected that the game is completed or the player has left the seat, the process proceeds to step SA205X.

In step SA205X, a lock release signal is transmitted. The CPU A91 transmits the lock release signal when the CPU A91 has transmitted the game completion signal to the main control device A80 in step SA200X. In addition, when the seating sensor does not detect seating, the seating sensor transmits a lock release signal.

In step SA210X, a lock release notification is performed. Specifically, the CPU A91 that has received the lock release signal transmitted in step SA205X displays a message, symbol, or the like on the sub-monitor A613, indicating that the lock has been released. In addition, the hook control device A412 that has received the lock release signal makes a lamp A416 on the hook A40 blink. Alternatively, it is possible for the CPU A91 to send a command to the input and output part A94 to issue a notification by sound via the speaker A75.

The hook control device A412 releases the lock of the stopper A413 (step SA215X). When the player picks up his belongings and the sensor A415 thus no longer detects the belongings, the sensor A415 transmits a lock release signal (step SA225X), and the hook control device A412 opens the stopper (step SA230X). The lock of the stopper A413 is released in step SA215X, and the stopper A413 is opened in step SA230X, but the stopper A413 may also be opened at the time the lock is released.

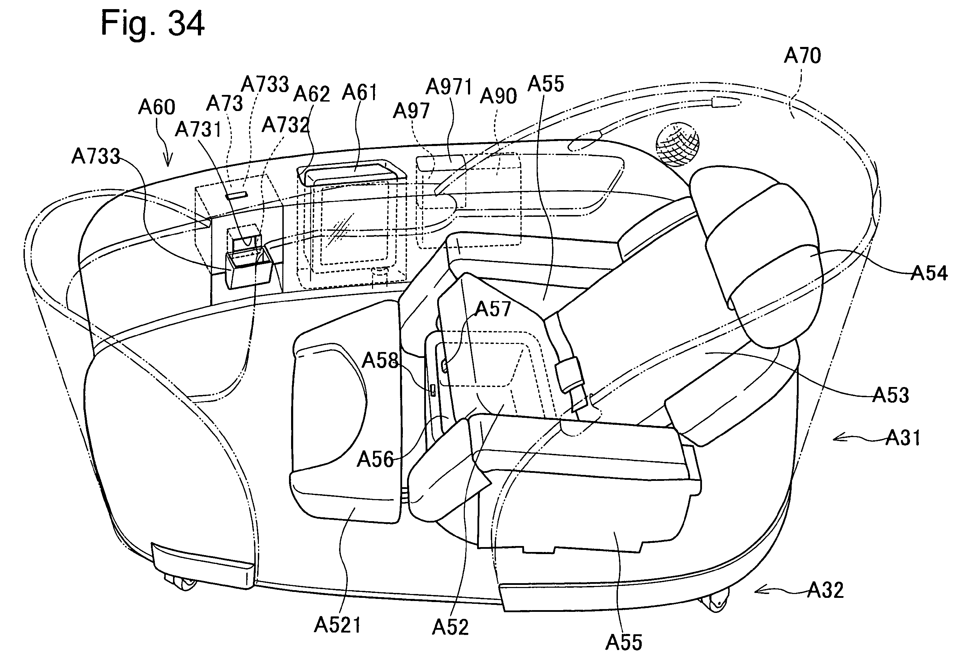

In addition, although the hook A40 is provided on the outside of the seat shell A70, the back surface of the back rest A53 of the main seat body A50, or under the table A71, when storing belongings in the forgoing example, it is not limited thereto. As another example, the seating part A52 of the main seat body A50 can be opened and closed, and a holding part A56 for holding belongings may be provided underneath the seating part A52 as in Fig. 34. A convex hook for fixing the seat surface is provided to the longitudinally central part of the bottom part of the seat surface of the opening and closing seating part A52; a concave hook reception part A58 for receiving the convex hook A57 of the bottom part of the seat surface is disposed on the holder A56; and the convex hook part A57 is fitted and fixed inside the hook reception part A58. In addition, the joining part of the seat surface of the seating part A52 and the main seat body A50 is in a state wherein the seat surface of the seating part A52 is urged in the upward direction. When the convex hook A57 is released, the seat surface of the seating part A52 springs up about the joining part.

Next, a control device may be provided in the same manner as in the case of the hook control device A412 of the hook A40 so that the convex hook A57 is released by the reception of a lock release signal, or the lock is engaged by the reception of a lock start signal.

As another example, the game machine A1 may be configured so that games can be played using the terminal device A30 alone, rather than being configured using a main game machine body A20 and a terminal device A30. In this case, a database and memory for storing a game program are included in the configuration of the sub-control device A90 (Fig. 29) in the same manner as in the main control device A80. The CPU A91 reads the game program stored in the data base into the memory, displays an image on the sub-display part A61 in accordance with the game program, and executes a game. The hook control device A412 can cause the stopper A413 of the hook A40 to be extended or contracted, and the lock to be engaged or released by the game start signal and/or game completion signal transmitted by the CPU A91.

An embodiment such as that described below may also be used. Configuration of the Sub-Control Device

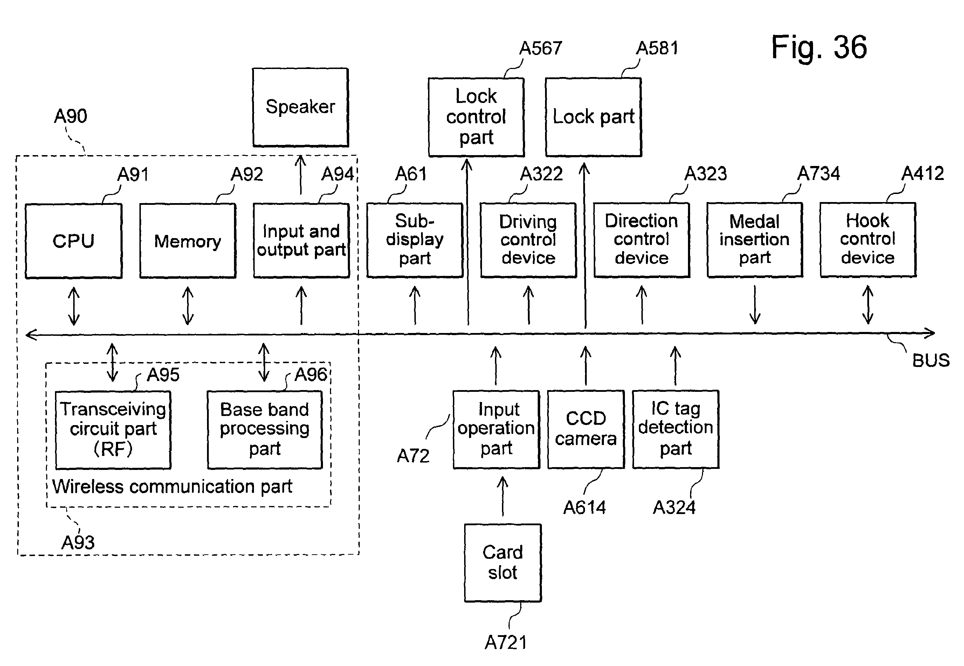

Fig. 36 is a block diagram showing the configuration of the sub-control device A90. The sub-control device A90 has a CPU A91, memory A92, and a wireless communication part A93 which are connected to a data bus BUS, as well as an input and output part A94 that forms an interface with the speaker A75.

The wireless communication part A93 includes a transceiving circuit part (RF) A95 for transmitting and receiving signals with the main control device A80, and a base band processing part A96 for converting RF (Radio Frequency) signals received by the transceiving circuit part A95 into base band signals, and also converting base band signals to be transmitted into RF signals.

In addition, this sub-control device A90 controls the sub-display part A61, driving control device A322, direction control device A323, lock part A581, and lock control part A567 based on the input signals from the input operation part A72, medal insertion part A734, hook A40, CCD camera A614, and IC tag detection part A324.

The CPU A91 executes various operations according to the operation programs stored in the memory A92 and controls the respective circuits and devices in accordance with the operations. For example, when a predetermined condition is fulfilled, the CPU A91 controls the changing of the lock part A581 from a fixed state to an unfixed state by presenting the lock control part A567 with a lock release signal for changing the lock part A581 from a fixed state to an unfixed state.

### Lock Start Processing

Fig. 32 is a flowchart of the process performed to engage the lock of the hook A40 in one example of a preferred embodiment of the present invention.

First, the sensor A415 detects belongings (step SA100X). The detecting sensor A415 may be a weight sensor, a pressure sensor, or another so-called presence sensor. If belongings are not detected, a standby mode is maintained until the belongings have been detected.

When the sensor A415 detects belongings, the sensor A415 transmits a lock start signal to the hook control device A412 (step SA105X). The hook control device A412 that has received the lock start signal drives an electric actuator within the stopper storage part A414 to extend the stopper A413 (step SA110X). The electric actuator may be locked to fix the stopper A413 when the stopper A413 makes contact with a contact part A418.

Next, a confirmation is displayed on the sub-monitor A613 (step SA120X) when a seating sensor A525 embedded in the seating part A52 or in the back rest A53 of the main seat body A50 detects that a player is seated, when a sensor embedded in the card slot A721 detects a card, or when a sensor embedded in the medal insertion part detects that a coin has been inserted (step SA115X). For example, a message such as "Is it okay for the hook to be locked?" is displayed.

In addition, a standby mode is directly established in cases in which the sensor A415 detects belongings (step SA116X) when seating or the like is not detected. Furthermore, if the sensor A415 does not detect belongings, the sensor A415 may transmit a lock release signal (step SA117X) so that the hook control device A412 returns the stopper to the original position (step SA118X). This applies to cases in which, for example, belongings are temporarily placed on the hook A40 but are then removed from the hook and picked up. The procedure ends when this process is completed.

When the sub-monitor A613 displays a confirmation, and the CPU A91 receives input to engage the lock from the player by the input operation part A72 or the like (step SA125X), the CPU A91 transmits a lock start signal to the hook control device A412 (step SA135X). The hook control device A412 locks the electric actuator and the stopper A413 (step SA140X). When this process is complete, the present flowchart is completed. In addition, when the CPU A91 has received instructions not to engage the lock (step SA125X), the process proceeds to step SA115X. The process after step SA116X proceeds as described above, and is therefore omitted.

### Lock Release Processing

Fig. 33 is a flowchart showing the flow of the process for releasing the lock of the hook A40 in one example of a preferred embodiment of the present invention.

First, in step SA200X, game completion or the player's departure from the seat is detected. Specifically, it is determined that the game is completed when the CPU A91 has transmitted a game completion signal to the main control device A80, or that the player has left the seat when the back rest A53 of the main seat body A50 or the seating sensor A525 in the seating part A52 does not detect seating. When game completion or the player's departure from the seat is not detected, a standby mode is directly established until either is detected. In addition, it is detected that the game is completed or the player has left the seat, the process proceeds to step SA205X.

In step SA205X, a lock release signal is transmitted. The CPU A91 transmits the lock release signal when the CPU A91 has transmitted the game completion signal to the main control device A80 in step SA200X. In addition, when the seating sensor A525 does not detect seating, the seating sensor A525 transmits a lock release signal.

In step SA210X, a lock release notification is performed. Specifically, the CPU A91 that has received the lock release signal transmitted in step SA205X displays a message, symbol, or the like on the sub-monitor A613, indicating that the lock has been released. In addition, the hook control device A412 that has received the lock release signal makes a lamp A416 on the hook A40 blink. Alternatively, it is possible for the CPU A91 to send a command to the input and output part A94 to issue a notification by sound via the speaker A75.

The hook control device A412 releases the lock of the stopper A413 (step SA215X). When the player picks up his belongings and the sensor A415 thus no longer detects the belongings, the sensor A415 transmits a lock release signal (step SA225X), and the hook control device A412 opens the stopper (step SA230X). The lock of the stopper A413 is released in step SA215X, and the stopper A413 is opened in step SA230X, but the stopper A413 may also be opened at the time the lock is released.

In addition, although the hook A40 is provided on the outside of the seat shell A70, the back surface of the back rest A53 of the main seat body A50, or under the table A71, when storing belongings, in the forgoing example, it is not limited thereto. As another example, the seating part A52 of the main seat body A50 can be opened and closed, and a holding part A56 for holding belongings may be provided underneath the seating part A52 as in Fig. 34. A convex hook for fixing the seat surface is provided to the longitudinally central part of the bottom part of the seat surface of the opening and closing seating part A52; a concave hook reception part A58 for receiving the convex hook A57 of the bottom part of the seat surface is disposed on the holder A56, and the convex hook part A57 is fitted and fixed inside the hook reception part A58.

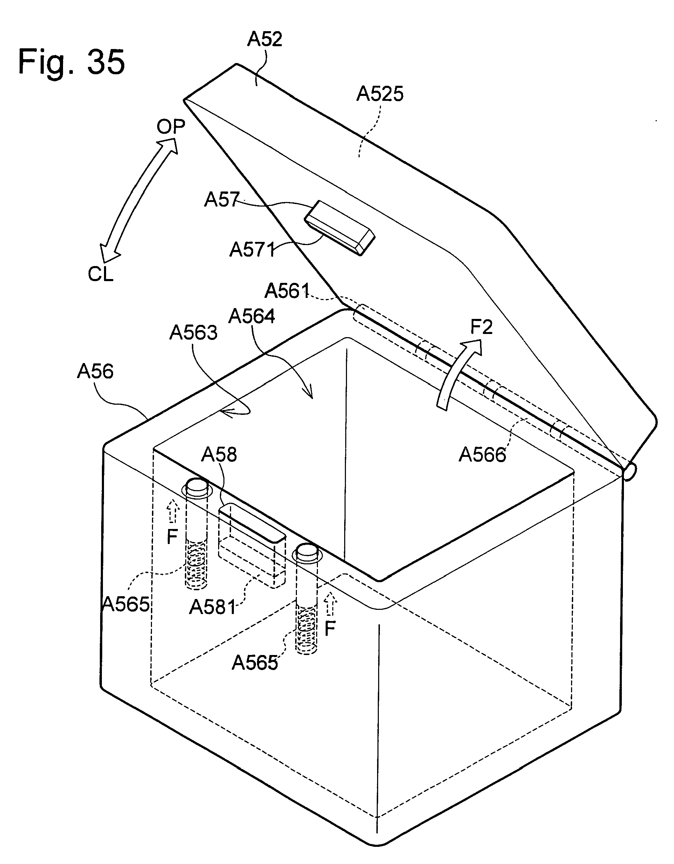

Specifically, the main seat body A50 in the present example includes a substantially rectangular seating part A52 and a hollow holder A56 which is disposed beneath the seating part A52 and whose upper surface is open, as shown in Fig. 35. An opening A563 is formed on the upper side of the holder A56, and the holder A56 is provided with a hollow part A564 for holding belongings and the like. The seating part A52 is pivotally supported by a hinge part A561 to allow the opening A563 to be opened and closed. The player can open and close the seating part A52 and deposit or retrieve belongings or the like in the hollow part A564 through the opening A563.

A pointed hook part A57 is disposed on the bottom surface of the seating part A52, and a substantially concave hook reception part A58 formed to be able to accommodate the pointed hook part A57 is provided to the holder A56. A locked part A571 composed of iron or another metal is disposed on the tip of the hook part A57, and a lock part A581 comprising an electromagnet or other component capable of being controlled in a specific manner is disposed on the bottom surface of the hook reception part A58.

The lock part A581 can be controlled to be in a fixed state wherein the hook part A57 and hook reception part 58 are fixed in a fitted state, and an unfixed state wherein the fixed state is released or the like. For example, when the lock part A581 is an electromagnet, the state can be controlled to be either fixed or unfixed depending on whether the power supplied to the electromagnet is on or off. Thus, the control device may be provided in the same manner as in the case of the hook control device A412 of the hook part A40 so as to release the convex (pointed) hook part A57 by receiving a lock release signal, or to engage the lock by receiving a lock start signal in the manner described above. Specifically, the lock part A581 can be configured so as to be controlled to a fixed state or unfixed state by the lock control part A567. For example, the lock control device A567 can be configured to control the lock part A581 in accordance with predetermined signals received from the CPU A91.

The main seat body A50 further includes a holder-side urging part A565 and/or a hinge part-side urging part A566 for urging the seating part A52 in the opening direction. A configuration can be adopted in which, for example, the seating part A52 is opened by these urging parts when the lock part A581 is changed from a fixed state to an unfixed state. It is also possible, for example, for the seating part A52 to be lifted slightly open by the holder-side urging part A565. In yet another example, the seating part A52 can be flipped wide open by the hinge-side urging part A566. Furthermore, the holder-side urging part A565 and/or the hinge-side urging part A566 may, for example, be coiled springs, plate springs, or the like.

Additionally, the CPU A91 can be configured to present the lock control part A567 with a lock release signal whereby the lock part A581 is changed from a fixed state to an unfixed state when a predetermined condition is fulfilled. The lock control part A567 that has received the lock release signal controls the changing of the lock part A581 from a fixed state to an unfixed state. The predetermined condition referred to herein may, for example, be a condition in which the game has been completed, a condition in which game completion input has been received by the input operation part A72 or the like, a condition in which it is detected by the seating sensor A525 that the player is not seated, or a condition in which it has been detected by the card sensor A723 that a predetermined card is not inserted into the card slot A721.

### Lock Start Processing

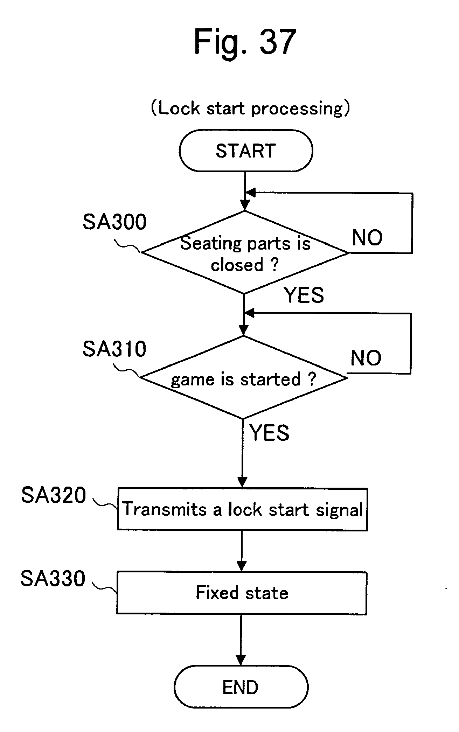

Fig. 37 is a flowchart for initiating the locking (fixing) of the hook part 57 disposed on the lower surface of the seating part 52 and the hook reception part 58 disposed on the holder 56 in one example of another mode.

In step SA300, a sensor (not shown) detects whether the seating part A52 is closed. If the seating part is closed, the process proceeds to step SA310, and if the seating part A52 is not closed, a standby mode is directly established.

In step SA310, the CPU A91 detects the status of the game and detects whether the game has started (including whether the game is in progress). If the CPU A91 has detected that the game has started, the process proceeds to step SA320, and if the CPU A91 does not detect that the game has started, a standby mode is directly established.

In step SA320, the CPU A91 transmits a lock start signal to the lock control part A567 to change the lock part A581 to a fixed state.

In step SA330, the lock control part A567 controls the changing of the lock part A581 from an unfixed state to a fixed state in response to the lock start signal being received from the CPU A91. The lock part A581 is thereby changed to a fixed state, and the process for engaging the lock is completed.

### Lock Release Processing

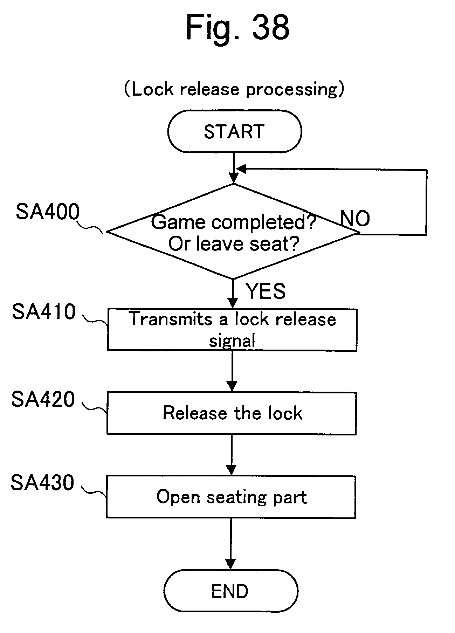

Fig. 38 is a flowchart of the process in which the hook part A57 disposed on the lower surface of the seating part A52, and the hook reception part A58 formed on the holder 56 are disengaged (fixed) as one example of another mode.

In step SA400, the CPU A91 detects whether the game has been completed. In addition, the seating sensor A525 detects whether a player is seated on the seating part A52. If the game is completed or the player is not seated, the process proceeds to step SA410, and if the game is not completed or the player is seated, a standby mode is directly established.

In step SA410, the CPU A91 transmits a lock release signal to the lock control part A567 in order to change the lock part A581 from a fixed state to an unfixed state.

In step SA420, the lock control part A567 controls the changing of the lock part A581 from a fixed state to an unfixed state in response to the lock release signal being received from the CPU A91. The seating part A52 is thereby brought to an openable state.

In step SA430, the seating part A52 is opened slightly by the holder-side urging part A565, and the process is completed. In addition, when a hinge-side urging part A566 is provided, the seating part A52 is flipped wide open about the hinge part A561, and the process is completed.

According to the present embodiment, the following effects are attained.
(1) The hook A40, which is normally in an unlocked state, enters a locked state when a game start signal is received from the control A90 and moves to an unlocked state when a game completion signal is received. In this way, because a key or the like for locking the hook A40 is not required, the player can concentrate on the game without thinking about the whereabouts of the key or theft of his belongings, and the player's sense of enjoyment can be enhanced.
(2) Because a hook A40B is provided for hanging the belongings on the back surface of the main seat body A50 of the terminal device A30, and the hook A40 locks when the player hangs his belongings on the hook A40B, the risk of theft of belonging during a game can be reduced. In this way, because this operation is performed automatically the player does not have to lock the hook manually and a game machine A1 which enables a reduced risk of theft of belongings can be provided.
(3) The stopper A413 of the hook A40 is extended according to the seating of the player in seat A31, and the hook A40 can be locked. Because the hook A40 can be locked automatically when the player sits, the player does not have to lock the hook manually and a game machine A1 which enables a reduced risk of theft of belongings can be provided.
(4) The lock of the stopper A413 of the hook A40 can be released by transmitting a lock release signal according to when the player left the seat. Then, because the player does not have to lock the hook manually, a key or the like for locking the hook A40 is not required, and the player is freed from the management of a key, a game machine A1 which enables the player to concentrate further and enjoy the game more can be provided.
(5) Because the lock of the hook A40 is released after a predetermined amount of time has passed from when the player left his seat, the hook A40 can remain in a locked state from when the player leaves his seat until he reaches the location of the hook A40. Thus, theft of the belongings until the player reaches the location of the hook A40, due to the lock being released immediately after the player leaves his seat, can be prevented.
(6) Because the hook A40A is attached to not only the main body of the terminal device A30, but also the outside of the seat shell A70, covering the terminal device A30, the belongings do not have to be placed within the seat shell A70. In this way, the belongings do not get in the way of the game, and a game machine A1 which enables the provision of an environment enabling the player to concentrate on the game further can be provided.
(7) Because a belongings camera photographs an image of the object-to-be-hung when the upper aperture of the hook A40 is in a closed state, and this image is shown in the display part, the player can check the state of his belongings at any time. Thus, the fear of the theft of belongings can be reduced. In addition, a game machine A1 which enables the provision of an environment enabling the player to concentrate on the game further and which enhances the sense of enjoyment of the player can be provided.
(8) Because a lockable hook A40 is attached to a mobile terminal device A30, a game can be played without the belongings getting thrown down, even when the terminal device moves. In this way, because the risk of theft due to the belongings getting thrown down is reduced, a game machine A1 which enables the player to concentrate on the game further and which enhances the sense of enjoyment of the player can be provided.
(9) The normally unlocked hook A40 can be locked when a game start signal is received from the control means A90, and can be brought to an unlocked state when the game completion signal is received. A game machine that is capable of enhancing the player's sense of enjoyment can thereby be provided because a key or the like for locking the hook A40 is not required, and the player can concentrate on the game without thinking about the whereabouts of the key or the like.
(10) A hook A40B for hanging belongings is provided to the back surface of the main seat body 50 of the terminal device A30, and the hook A40 is locked in response to the player hanging his belongings on the hook A40B, sitting on the main seat body A50, or inserting a predetermined card or game medium. Therefore, the risk of belongings being stolen during a game can be reduced. In addition, since the lock is released when the game is completed or the player leaves the seat, a key for the lock is not required, and a game machine A1 can be provided wherein it is possible for the player to remove his belongings without performing an action to release the lock
(11) The sub-control device A90 transmits a game start signal to the main game machine body 80 (A80) to start a game in response to the insertion of a predetermined game medium. A lock signal is transmitted when seating has been detected or the insertion of a predetermined game medium has been detected, and the stopper A413 of the hook A40 is extended to engage the lock. The hook A40 can thereby be locked automatically, making it possible to provide a game machine A1 in which there is no need for the player to manually lock the hook, and in which theft of belongings is less likely to occur.
(12) The terminal device A30 is activated by the insertion of a card, and a lock signal is transmitted by the detection of the insertion of the card into the card slot A721. The hook A40 can thereby be locked automatically, making it possible to provide a game machine A1 in which there is no need for the player to manually lock the hook A40, and in which theft of belongings is less likely to occur.
(13) A lock release signal can be transmitted and the lock of the stopper A413 of the hook A40 can be released in response to the game ending when the player attempts to remove his belongings from the hook 40 or leaves the seat. Then, because the player does not have to release the lock manually, a key or the like for disengaging the lock is not required, and the player is free from the management of a key, whereby a game machine which enables the player to concentrate further and enjoy the game more can be provided.
(14) Because the hook A40A is attached not only to the main body of the terminal device A30, but also to the outside of the seat shell A70 which surrounds the terminal device A30, there is no need for belongings to be placed inside the seat shell A70. It is thereby possible to provide a game machine A1 in which the belongings do not interfere with the game and in which an environment enabling the player to concentrate on the game further can be provided.
(15) A game can be played without the belongings getting thrown down even when the terminal device A30 moves, because a lockable hook A40 is attached to a mobile terminal device A30. A game machine A1 which enables the player to concentrate on the game further and which enhances the sense of enjoyment of the player can thereby be provided because the risk of theft due to the belongings being thrown down is reduced.
(16) The game machine includes a seat part which has a seating part whose lower surface is provided with a pointed hook part; a hollow holder which forms a hook reception part capable of receiving the hook part fits, which is formed beneath the seating part, and which is opened on the upper surface; an urging part for urging the seating part in the opening direction; a hinge part which pivotally supports the opening and closing of the aperture of the seating part; a lock part for fixing the hook part and hook reception part in a fitted state; and a lock control part for controlling the lock part to a fixed state or an unfixed state; wherein the control part is capable of transmitting to the lock control part a lock release signal for changing the lock part from a fixed state to an unfixed state; and the lock control part changes the lock part from a fixed state to an unfixed state in response to the lock release signal being received. Therefore, a player can store belongings or the like in the holder provided beneath the seating part and can close the aperture with the seating part, and can also lock the seating part so as not to open. Situations are thereby created in which, for example, belongings or the like can be stored at a location where the belongings do not interfere with the player and in which the risk of belongings being stolen or the like during a game can be reduced. Furthermore, for example, the seating part can be configured to open about the hinge part in accordance with a lock release signal from the control part. Situations can thereby be created in which the belongings that are stored in the holder can be retrieved after the lock is released, and belongings can be prevented from being left behind. [Example 3]

The game machine of the present embodiment is described hereafter.

Fig. 1 is a perspective view showing an outward aspect of the game machine B1 according to an embodiment of the present invention.

The game machine 1 (B1) is a multi-player game machine, in which multiple players participate, including a main game machine body 20 (B20) which includes a flat, rectangular play area 21 (B21) and a plurality of terminal devices 30 (B30) which are placed on this play area 21 (B21).

Aside from the play area 21 (B21), the main game machine body 20 (B20) includes a main display device 22 (B22) which is placed along one side of the play area 21 (B21), a speaker device 23 (B23) which is placed in the four corners of the play area 21 (B21), and a main control device 80 (B80) for controlling these main display device B22 and speaker device 23 (B23).

The play area 21 (B21) is divided into a plurality of sub-areas 212 (B212). As these sub-areas 212 (B212), there are city areas 212A (B212A), ocean areas 212B (B212B), and forest areas 212C (B212C). In addition, IC tags 211 (B211) are buried in grid-form in the play area 21 (B21). Positional information of the inside of the play area 21 (B21) is stored to this IC tag 211 (B211).

The main display device 22 (B22) is a large projector display device. Although a large projector display device is implemented in the present embodiment, it is not limited thereto in the present invention and can be a large monitor.

The main control device 80 (B80) can communicate with each terminal device 30 (B30) bi-directionally through wireless LAN and can provide each player with a common virtual space by executing the predetermined game program and bi-directionally communicating with each terminal device 30 (B30).

### Configuration of the Terminal Device

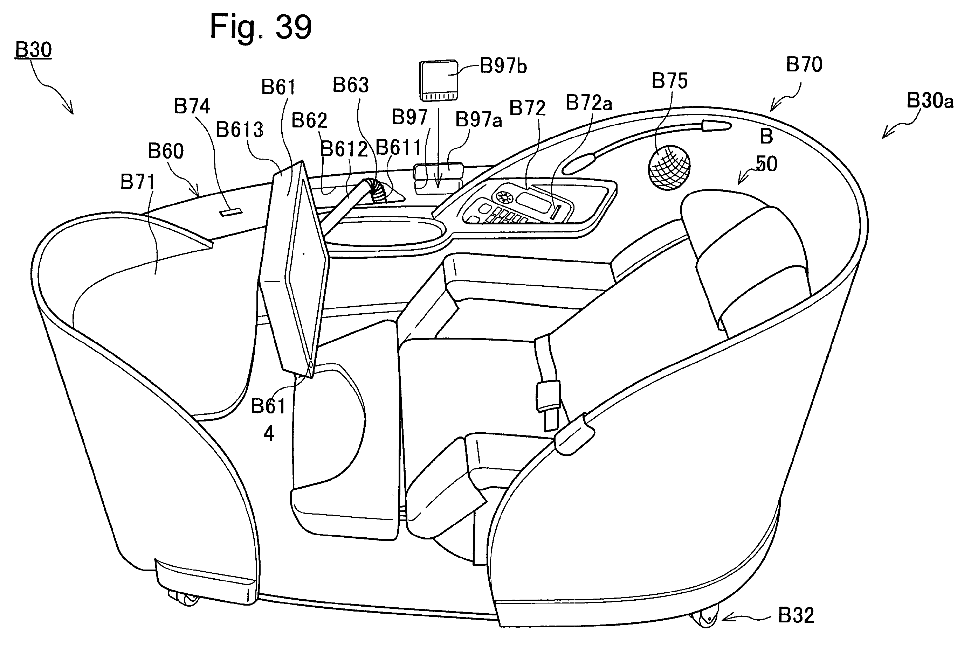

Fig. 39 is a perspective view showing an outward aspect of each terminal device B30.

The terminal device B30 includes a seat B31, a main terminal device body B30a, a liquid crystal display device B61, and a traveling part B32 which is provided beneath the main terminal device body B30a and moves the terminal device B30 over the player area B21.

The terminal device B30 is placed in a state facing the main display device B22. This terminal device B30 is connected to the main control device B80 by wireless LAN and can be moved over the player area B21 in adherence to instructions from the main control device B80 or operations by the player.

The main terminal device body B30a includes a seat B50, a side unit B60 which is provided along one side surface of the seat B50, and a seat shell B70 which is attached behind the seat B50 and in front of the seat B50, an input operation part B72 for receiving input from the player, and a medal collection part B83 including a medal insertion part B74 to which medals are inserted and the like.

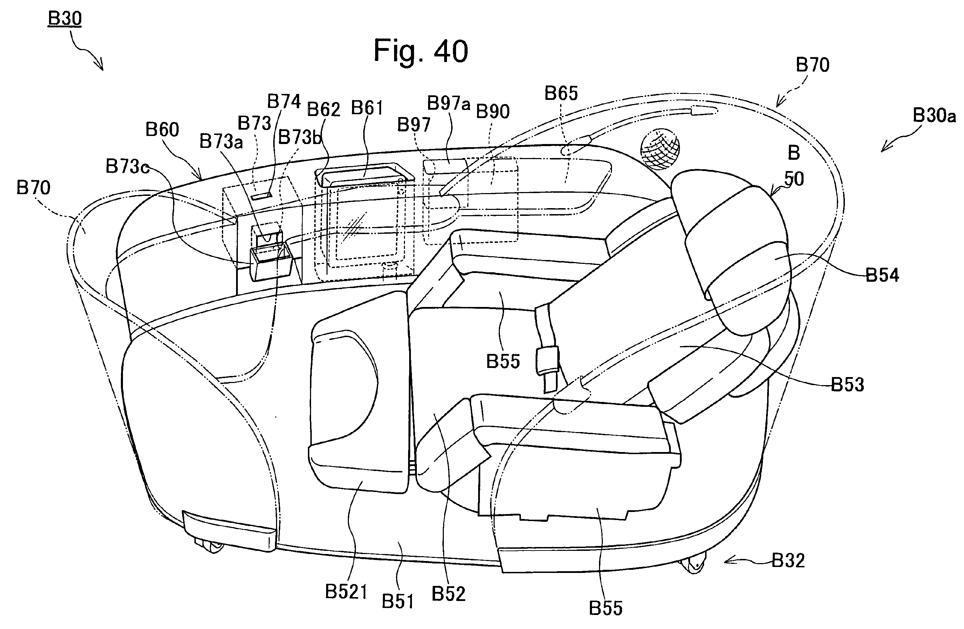

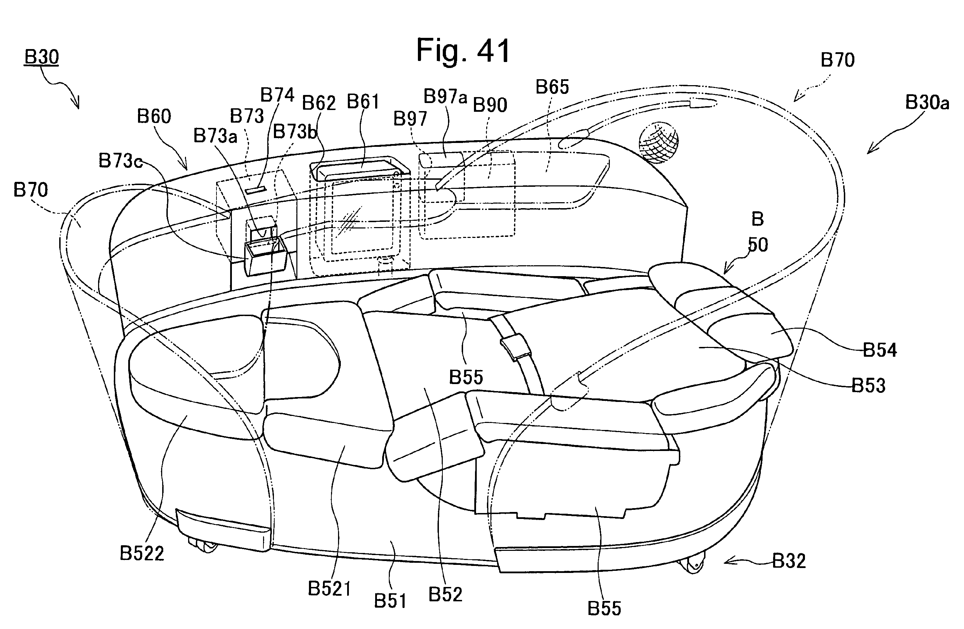

Fig. 40 is a perspective view of the main terminal device body B30a in seat mode. Fig. 41 is a perspective view of the main terminal device body B30a in bed mode.

As shown in Fig. 40 and Fig. 41, the seat B50 can be adjusted to seat mode and bed mode and the gradient of the seat can be adjusted in multiple steps, between the seat mode and the bed mode, as well.

The seat B50 includes a flat base part B51, a seating part B52 which is provided on this base part B51, a back rest B53 which is attached to enable changing of its angle to the seating part B52, a head rest B54 which is provided on the top part of the back rest B53, and a pair of side arms B55 which are provided in positions on the seat surface of the seating part 52 and both sides of the back rest.

The seating part B52 moves back and forth on the base part B51 when the player operates the input operation part B72. The main seat body B50 changes from the seat mode shown in Fig. 40 to the bed mode shown in Fig. 41, when this seating part B52 is slid forward, and forms a bed.

The seating part B52 includes a leg rest B521 which is provided on the front surface side and a foot rest B522 which is stored in the tip of this leg rest B521. The leg rest B521 turns upward according to the sliding motion, when the seating part B52 is slid forward, and becomes a seat surface which continues from the seat surface of the seating part B52. At the same time, the foot rest B522 projects from the leg rest B521 and becomes a seat surface which continues from the leg rest B521.

The back rest B53 falls backward, according to the back and forth movement of the seat part B52 on the base part B51.

The front surface side of the side arm B55 turns slightly upward, when the main seat body B51 is placed in bed mode.

A bag component, into which air can be injected, is embedded respectively within the seat surface of the seating part B52, the lower part of the back rest B53 (which comes into contact with the lower back of the player) and the head rest B54. When air is injected into these bag components by an air pump, the surface swells and can support the user while accommodating the contours of the body surface of the user.

A liquid crystal monitor storage space B62 which extends in the vertical direction is provided in the side unit A60, and the foregoing first support arm A611, a second support arm A612, and a liquid crystal monitor A613 are stored within the liquid crystal monitor storage space A62.

A sub-control device B90 which is connected by wireless LAN to the main control device B80 and a plurality of board storage slots B97 which configure this sub-control device B90 are provided within the side unit B60.

The sub-control device B90 controls the transmitting part B64 for transmitting game images to the liquid crystal display device B61, a liquid crystal monitor driving control device B63 for driving the liquid crystal display device B61, and the traveling part B32, based on instructions from the main control device A80, as well as transmitting signals input by the input operation part B72 (described hereafter) to the main control device B80. The transmission of game image from the transmitting part B64 to the liquid crystal display device B61 can be by a wired or wireless connection.

A cover part B97A is provided to open and close freely on the upper part of the board storage slots B97. By opening the cover part B97A and inserting a terminal control board B97B from above, as shown in Fig. 39, the terminal control board B97B can be attached to the board storage slot B97.

The rears of the side surfaces of the seat shell B70 extends upward, such that the player seated in the main seat body B50 cannot be viewed by other players. In addition, the seat shell B70 can support the back rest B53 and the head rest B54. Furthermore, speakers B75 are provided on both sides of the head rest B54 of the seat shell B70.

A table B71 is attached from one side surface of the seat B50 to the front surface, on the upper edge of the seat shell B70. The space beneath this table B71 accepts the leg rest B521 and the foot rest B52 when the seat B50 is placed in bed mode.

The input operation part B72 is provided in the vicinity of the side arm B55 on the table B71, or in other words, a position wherein the player can perform operations while seated in the seat B50, and includes a keyboard, a jog dial and the like. A card slot B72A for inserting credit cards and membership cards is provided in this input operation part B72, and a sensor (not shown) for detecting the insertion of the card is installed. Although the input operation part B72 is provided on the table 7B1 in the present embodiment, this is not limited thereto in the present invention, and can be provided as a touch-panel part on the liquid crystal monitor 613.

A medal insertion part 734, a medal insertion detector 735 is placed in the vicinity of the medal insertion part 73A and detects the insertion of the medal,

A medal payout opening B73A from which medals are paid out from a medal collection part 73 provided within the side unit B60, a medal receiving part B73B for receiving the medals which are paid out, and a medal insertion part B74 to which medals are inserted are provided below the table B71 and in front of the side arm B55. A holder, not shown, for attaching a medal storage container B73C is provided in the medal receiving part B73B. In addition, a sensor for detecting that a medal is inserted is installed in the medal insertion part B74. The insertion of the medal is detected by this sensor, and the game starts when an instruction signal for game start is transmitted from the sub-control device B90 to the main control device B80, via the input operation part B72, operated by the player. This medal can be paid out according to the betting odds in an event within the game program. For example, predetermined odds are stipulated to the participants of a certain event (win/loss of horse-racing, combat, etc.), much like a book-maker, and the player places a bet on a desired object. Then, medals are paid out according to the odds or the like, based on the win/loss results. The prize resulting from this book-maker is not limited to medals and can be items within the game environment.

In addition, a remaining amount sensor B76 for detecting the remaining amount of the medal collected within the medal collection part B73 is installed in the medal collection part B73. When this remaining amount senor B76 detects that the remaining amount of medals is below a predetermined level, the CPU B91, described hereafter, transmits an empty signal outside. This empty signal can be transmitted to a management system of the game arcade outside of the game machine B1, a mobile terminal held by the staff or the like. In this way, because the staff is notified when the remaining amount of the medals is low, they can be replenished smoothly and the halting of a game due to no remaining medals can be prevented. This remaining amount sensor B76 can be a weight sensor which detects the weight of the medals collected within the medal collection part B73 or whether there is more than a certain amount of medals can be detected by a proximity switch or an infrared sensor. In addition, that there the remaining amount of medals is low can be detected by provided an electrode within the medal collection part B73 in which a weak current can be detected normally, due to the medals touching, and no current is detected when the remaining amount of medals is low.

The liquid crystal display device B61 includes a first support arm B611 which is supported by the side unit B60, a second support arm B612 which is attached to the tip of the first support arm B611, and a flat, rectangular sub-monitor B613 which is attached to the tip of the second support arm B612 and performs liquid crystal display. In addition, the first support arm B611 and the second support arm B612 are driven and controlled by the liquid crystal monitor driving control device B63.

The first support arm B611 can be extended and retracted freely in the direction vertical to the side unit B60. The second support arm B612 can extend and retract freely and can be fixed to an arbitrary angle to the axis direction of the first support arm B611. The liquid crystal monitor B613 can be fixed to an arbitrary angle to the axis direction of the second support arm B612.

The liquid crystal monitor driving control device B63 is controlled by the sub-control device B90. The sub-control device B90 gives instruction to move the liquid crystal monitor B613 to a predetermined position to the liquid crystal monitor driving control device B63, when an instruction signal for the pulling-out of the liquid crystal display device B61 due to the start of a game is received from the main control device B80. The liquid crystal monitor driving control device B63 moves the liquid crystal monitor B613 to the predetermined position when this instruction signal is received. Here, the predetermined position is a position placed facing the player seated in the seat B50, and for example, can be placed at the player's eye level.

A small CCD camera B614 is embedded into the liquid crystal monitor B613. The image taken by the CCD camera B614 is displayed constantly in the liquid crystal display part B61 in the terminal device A30, by operating an input operation part A72 (described hereafter). Because the expressions of the player per se can be viewed during the game in this way, enjoyment increases. In this case, the photographed image can be shown on the entire screen of the liquid crystal monitor B613 or in one section of the screen.

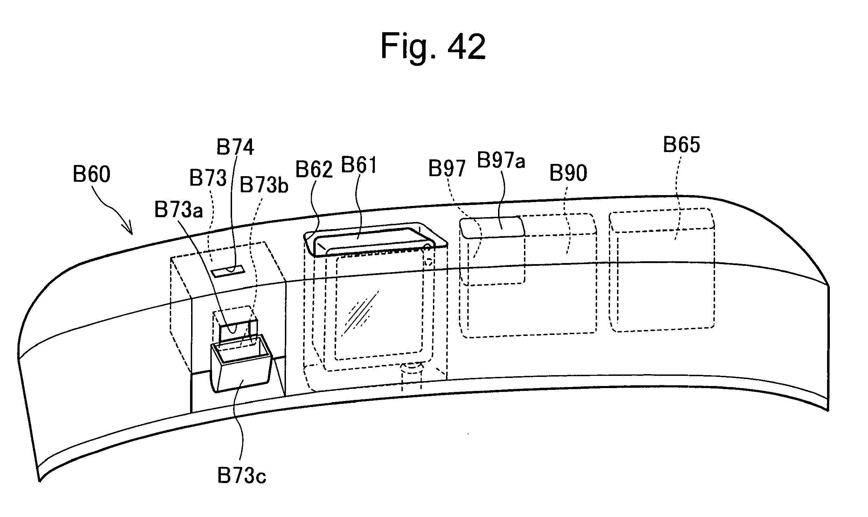

Next, the procedure for pulling out the liquid crystal monitor B613 from the liquid crystal monitor storage part B62 is described, with reference to the Fig. 42 to Fig. 45.

As shown in Fig. 42, the liquid crystal monitor B613 is normally stored within the liquid crystal monitor storage part B62 within the side unit B60, with the first support arm B611 and the second support arm B612 is in a retracted state.

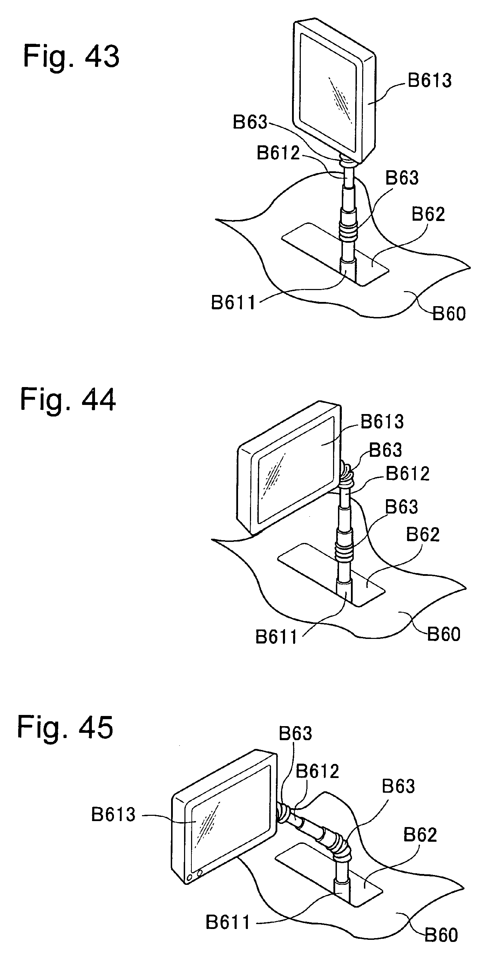

Here, when the medal is inserted into the medal insertion part by the player and a game start instruction signal is transmitted from the sub-control device B90 to the main control device B80 via the input operation part B72, the main control device B80 transmits an instruction signal for the pull-out of the liquid crystal monitor B613 to the sub-control device B90. The sub-control device B90 transmits an instruction for the movement of the liquid crystal monitor B613 to a predetermined position to the liquid crystal monitor driving control device B63, and as shown in Fig. 43, the liquid crystal monitor B613 first extends the first support arm B611 and the second support arm B612, and pulls the monitor out so as to slide it upwards from the liquid crystal monitor storage part B62. Subsequently, as shown in Fig. 44, the liquid crystal monitor B613 faces the player by rotating 90° and furthermore, the monitor angle is adjusted by bending the connection part of the liquid crystal monitor B613 and the second support arm B612. Then, as shown in Fig. 45, the monitor is moved to a position facing the player by bending the connection part of the first support arm B611 and the second support arm B612.

Here, the player can place the liquid crystal monitor B613 in an appropriate position, for example, on the player's eye level, by adjusting the relative angle of the first support arm B611 and the second support arm B612 and the relative angle of the second support arm B612 and the liquid crystal monitor B613. The liquid crystal monitor B613 can be moved to an appropriate position such as this automatically by storing the position in the foregoing membership card or the like.

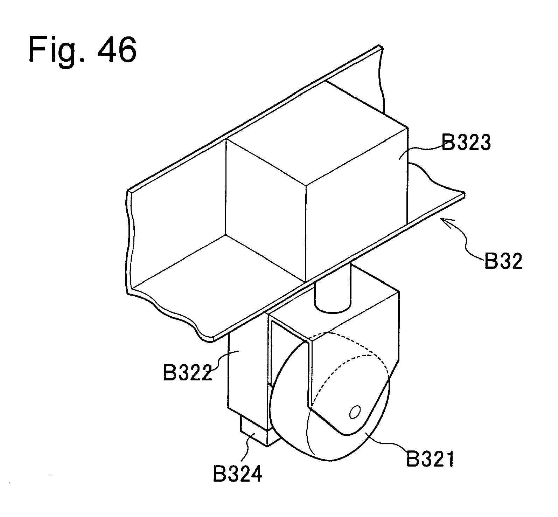

Fig. 46 is an enlarged perspective view of a section of a traveling part B32.

The traveling part B32 includes four traveling tires B321, a driving control device B322 for rotation-driving these traveling tires B321, a direction control device B323 for controlling the direction of the traveling tires B321, and a rechargeable battery, not shown, for supplying the driving control device c322 and direction control device B323 with power.

The traveling part B32 can move a seat B50 to an arbitrary position on the play area B21 by the driving control device B322 and the direction control device B323. The foregoing rechargeable battery can be recharged through connection to an external power source, but is not limited thereto, and can be recharged by self-induced electromotive force due to a magnetic field, by embedding a magnetic field generating device in the play area B21 and generating a magnetic field by this magnetic field generating device.

In addition, an IC tag detection part B324 for detecting IC tags B211, which are buried in the play area B21, is provided below the tire driving control device B322 of the traveling part B32.

Configurations of the Main Game Machine Body and the Terminal Device

Fig. 7 is a block diagram showing the overall configuration of the game machine B1 and the terminal device B30. In the game machine B1, the main control device A80 of the main game machine body B20 has a wireless communication part B83, and the sub-control device A90 of the terminal device B30- has a wireless communication part B93. These wireless communication parts B89 and B93 can be interconnected via wireless LAN, and in this way, sound data and text data can be communicated and instructions, such as the pulling-out of the liquid crystal monitor B613, can be performed between the main control device B80 and the sub-control device B90.

### Configuration of the Main Control Device

Fig. 8 is a block diagram showing the configuration of the main control device B80. The main control device B80 has a CPU B81, a memory B82, a wireless communication part B83, and a database B84, which are connected to a data bus B89.

The wireless communication part B83 includes a transceiving circuit part (RF) B85 for transmitting and receiving signals with the sub-control device B90, and a base band processing part B86 for converting RF (Radio Frequency) signals received by the transceiving circuit part B85 into base band signals and also converting base band signals to be transmitted into RF signals.

The database B84 is a circuit board which includes a memory part to which a game program is stored or a storage medium (for example, a hard disk or ROM cassette) to which the game program is stored. Specifically, a slot to which these circuit boards and storage mediums can be attached and removed is provided in the main control device B80. By attaching and removing these circuit boards and storage mediums from the slot, the game program stored to the database B84 can be replaced, accordingly, and other game programs can be executed. Replacing the game program is not limited to that via hardware, as such, and the game program can be replaced directly by downloading via a communication circuit.

The CPU B81 executes various processing according to the game program.

In other words, the CPU B81 reads the game program stored in the database B84 to the memory B82 and runs the game according to this game program.

Specifically, the CPU B81 receives data including game input data, described hereafter, respectively, from the plurality of terminal devices B30, and generates a single game data according to the game program, based on these data. Then, the CPU B81 generates image data which is shared with all of the terminal devices B30, based on the generated single game data, and outputs this data to the main control device B80.

Here, the single game data includes a plurality of operation character data which can be moved within the single game field generated according to the game program, based on the respective game input data of the plurality of terminal devices B30, and the positional data of this plurality of operation characters.

During the game, the CPU B81 extracts the game program, information expressing the game status corresponding to the time-line in the game field at that time (namely, information expressing events and the like occurring within the game field), and the like from the data base B84, in response to request from the terminal device B30, and transmits these to the terminal device B30, which is the request source, via wireless LAN. In addition, the CPU B81 receives information expressing the operation results of the player from each terminal device B30 and stores this in the memory B82. The CPU B81 runs the game based on the information expressing the operation results of the player stored in the memory B82, and the progression results of the game program is stored in the database B84.

Here, the information expressing the operation results of the player are, for example, selection results by the player from a selection shown to the player via the terminal device B30, based on the progress of the game program, or the results of the operation performed by the player of the character appearing in the game, and is information transmitted from the terminal device B30 as a result of the player operating their respective terminal devices B30. Other players can check the progress status of the current game stored in this database B84 (for example, high-score information, etc.)

### Configuration of the Sub-Control Device

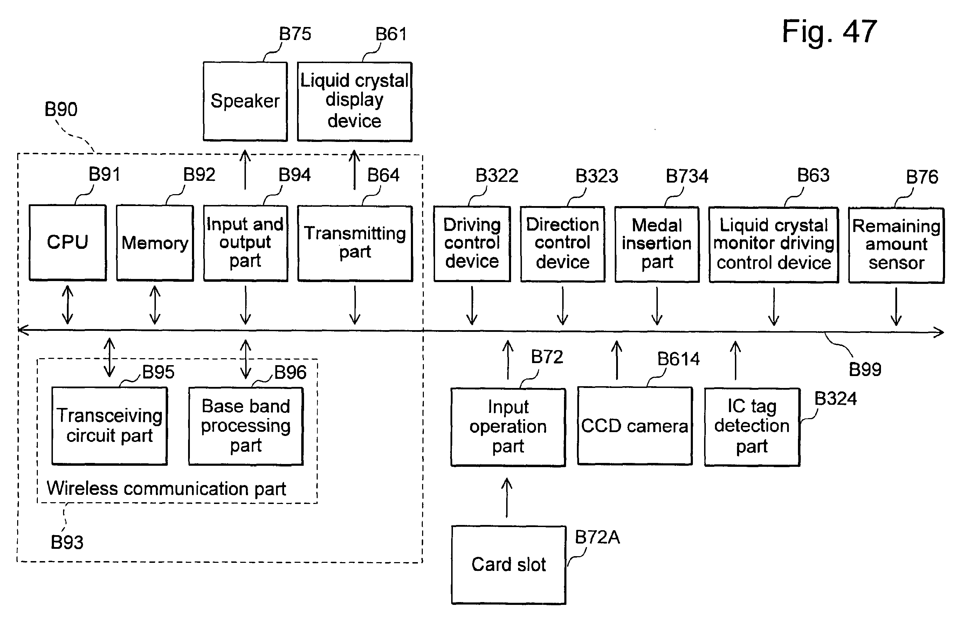

Fig. 47 is a block diagram showing the configuration of the sub-control device B90.

The sub-control device B90 has a CPU B91, a memory B92, a wireless communication part B93, an input and output part B94 which is the interface with the speaker B75, and a transmitting part B64 which is the interface with the liquid crystal display device B61, which are connected to a data bus B99.

The wireless communication part B93 includes a transceiving circuit part (RF) B95 for transmitting and receiving signals with the main control device B80, and a base band processing part B96 for converting RF (Radio Frequency) signals received by the transceiving circuit part B95 into base band signals and also converting base band signals to be transmitted into RF signals.

In addition, the sub-control device B90 controls the driving control device B322, the direction control device B323, and the liquid crystal display device B61, based on the input signals from the input operation part B72, the medal insertion part B734, the remaining amount sensor B76, the CCD camera B614, and the IC tag detection part B324.

The CPU B91 executes various operations according to the operation programs stored in the memory B92 and control respective circuit parts and devices according to the operations.

Image data signals generated by in the main control device B80 are output from the liquid crystal monitor B613 through the following procedure.

When the RF signal is received from the main control device B80, the transceiving circuit part B95 supplies this signal to the base band processing part B96 and converts this RF signal to a base band signal. The base band processing part B96 outputs this base band signal to the liquid crystal monitor B613, via the transmitting part B64. Then, this base band signal is output from the liquid crystal monitor B613 as an image.

In addition, sound signals from the main control device B80 are output from the speaker B75 in the same way, by the foregoing procedure. In other words, when the RF signal is received from the main control device B80, the transceiving circuit part B95 converts this RF signal to a base band signal in the base band processing part B96. The base band processing part B96 outputs this base band signal to the speaker B75 as sound, by outputting from the speaker B75 via the input and output part B94.

Furthermore, when the player operates the input operation part B72, after converting various information input by operating the input operation part B72 into packet data, the CPU B91 transmits this to the main control device B80, via the band base processing part B96 and the transceiving circuit part B95. At this time, each terminal device B30 can be identified regardless of the position the terminal devices B30 are placed on the play area B21 by including IP addresses in the packet data. Similarly, the CPU B91 converts positional information read from the IC tag B211 by the IC tag detection part B324 and image information perceived by the CCD camera B614 into packet data and transmits this to the main control device B80.

On the other hand, when an RF signal to which information converted into packet data is superimposed is transmitted from the main control device B80, the CPU B91 receives this RF signal via the transceiving circuit part B95 and the base band processing part B96, displays it in the liquid crystal display monitor B613 and, in addition, controls the driving control device B322 and the direction control device B323 of the traveling part B32.

In other words, when the CPU B91 receives the game program and information expressing the game status corresponding to the time-line in the game field at that time from the main control device B80, the CPU B91 shows various occurrences, such as events, occurring in the game field at this time according to the game program in the liquid crystal display device B61, outputs sound effects from the speaker B75, and moves the main terminal device body B30A, after storing the information, such as the game program, transmitted from the main control device B89 in the memory B82.

In addition, by operating the input operation part B72 while viewing the game content (image, letter information, etc.) shown in the liquid crystal monitor B613, the player using respective terminal device B30 can operate the characters shown in the main display device B22, participate in the progress of the game by operations such as selecting from a selection by letters, and move the terminal device B30 to an designated position on the play area B21. Game Configuration of the Game Machine

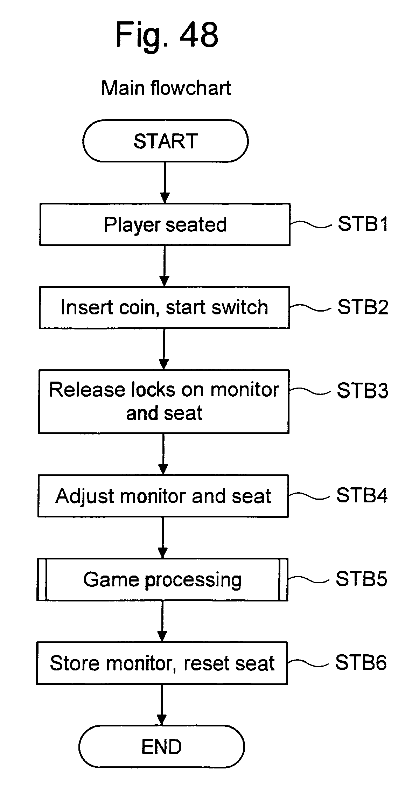

The operations of the game machine B1 are described, with reference to the main flowchart shown in Fig. 48. In STB1, each player selects a terminal device B30 of their choice from the terminal devices B30 placed on the play area B21 and sits in the seat B50 of the selected terminal device B30. Next, in STB2, each player inserts a medal into a medal insertion opening and presses the start switch in the input operation part B72. Then, in STB3, the locks of the liquid crystal monitor B613 and the seat B50 of the game machine B1 are released and, in STB4, the liquid crystal monitor B613 is pulled out from the liquid crystal monitor storage space B62, moved to the predetermined position, and the seat B50, as well as the position of the liquid crystal monitor B613, is adjusted.

In STB5, the game machine B1 performs a game processing described hereafter. After the game is completed, in STB6, the game machine B1 stores the liquid crystal monitor B613 and also returns the mode of the seat B31 to the normal seat mode.

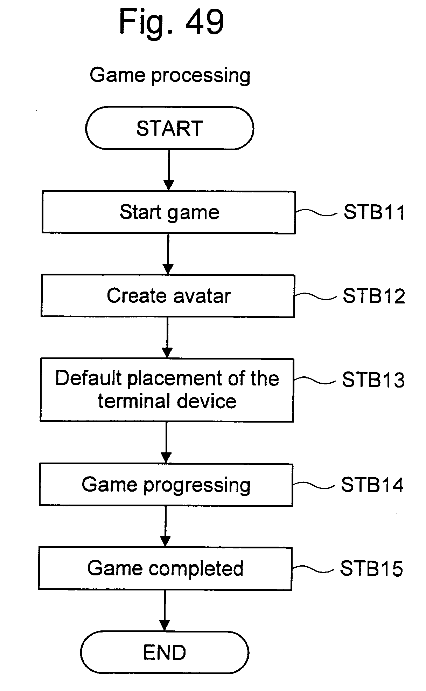

Fig. 49 is a flowchart of the game processing.

When the game is started in STB11, the game program creates an avatar of the player on STB12. In other words, the game program shows an avatar creating screen in the liquid crystal monitor B613. In this avatar creation screen, the player creates an avatar, which is an alter-ego of the player, when participating in the game program. When an image of the players face is taken by the CCD camera B614 and the player enters personal information and the name to be used in the game field to the input operation part B72, the game program creates an avatar based on this information and registers it to the database B84 of the main control device B80.

In STB13, the game program places the terminal device B30 in which the player is seated in the default position on the play area B21. In other words, the game field is divided into a plurality of game fields and each game field has one town. Each game field is an ocean, a forest, or a large city. The play area B21 includes a plurality of sub-areas B212, such as a city area B212A, an ocean area B212B, and a forest area B212C, as stated earlier. These sub-areas B212 are quasi-spaces corresponding to the environment of the towns in the game environment.

Therefore, the game program sets the town each player is in, in the game field, and moves the terminal device B30 of the player to the sub-area B212, corresponding to the town in which each player is, when the game begins. Or, the terminal device B30 of the player is moved according to the operations of each player of the input operation part B72, and the town in which the player is in the game field is set according to this movement.

In STB14, the game program runs the game according to a unique time-line, generating macroquests in which a plurality of players participate and quests in which only one player participates, and completed the game in STB15.

In this way, the player seated in the terminal device B30 can select whether to view fights between other players or fight himself, with regards to macroquests, by getting involved in macroquests and requesting help from fellow players involved in the macroquest, while communicating various information with the main control device B80. In addition, if the player is progressing through the game alone, the game progresses by selecting fights while generating quests in which only one player participates.

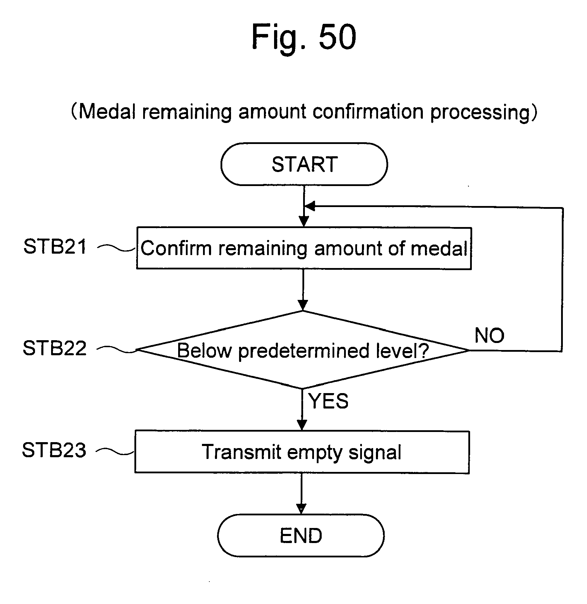

Fig. 50 is a flowchart of the remaining amount confirmation processing of the game medium.

In STB21, the remaining amount sensor B76 within the medal collection part B73 detects the remaining amount of the medal. This detection can be made by the weight of the medal or the level of the remaining amount of stored medals. When this processing is completed, the process proceeds to STB22.

In STB22, the remaining amount sensor B76 determines whether the remaining amount of medals is lower than a predetermined level. If it is determined that the remaining amount of the medals is higher than the predetermined level, the process returns to the processing in STB 21. In addition, if the remaining amount sensor B76 determined that the remaining amount of the medals is lower than the predetermined level, the process proceeds to the processing in STB23. In STB23, the remaining amount sensor B76 transmits an empty signal.

### Other Embodiments

As other embodiments, rather than the game machine B1 being configured by the main game machine B20 and the terminal device B30, it can be configured so that the game can be played by the terminal device alone. In this case, in the configuration of the sub-control device B90 (Fig. 47), a database for storing the game program and memory are included, as in the main control device B80. Furthermore, the CPU B91 reads the game program stored in the database to the memory, displays image in the liquid crystal monitor B631 according to the game program and runs the game. Then, the liquid crystal monitor B613 can move to the predetermined position and be stored within the side unit B60 by game start signals and game completion signals transmitted by the CPU 91.

An aspect wherein the input operation part B72 is an input operation part B325 is described next.

### Configuration of the Terminal Device

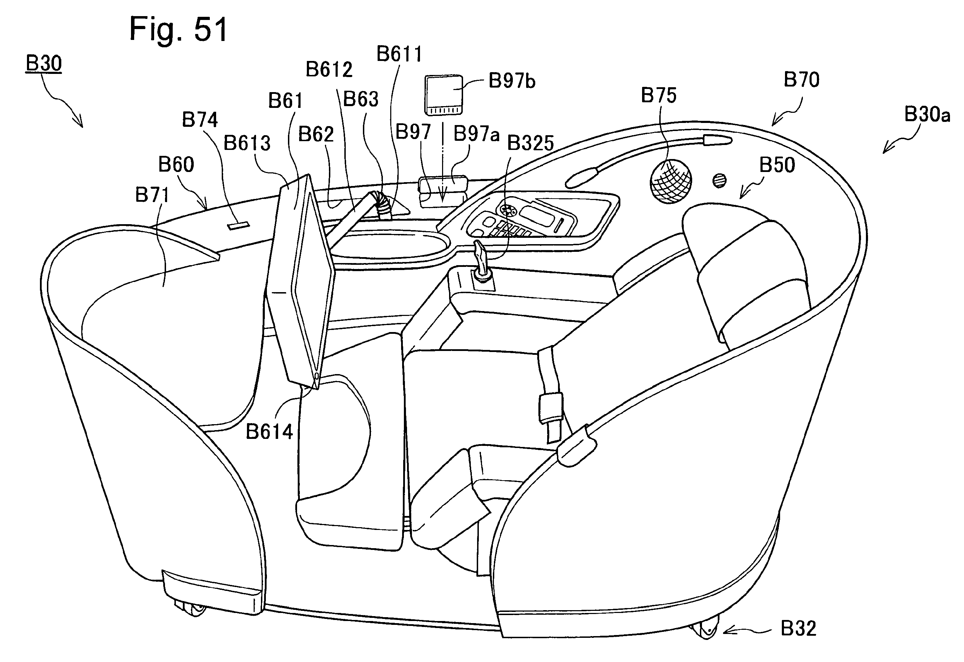

Fig. 51 is a perspective view showing an outward aspect of the terminal device B30.

The terminal device B30 includes a main terminal device B30a provided with a seat B50, a liquid crystal display device B61 for displaying a game image, and a traveling part B32 provided to the bottom of the main terminal device body B30a, for moving the terminal device B30 on the play area B21,

The terminal device B30 is disposed so as to face the main display device B22. The terminal device B30 is connected to the main control device B80 via a wireless LAN, and is movable on the play area B21 in accordance with the commands of the main control device B80 or by player's actions.

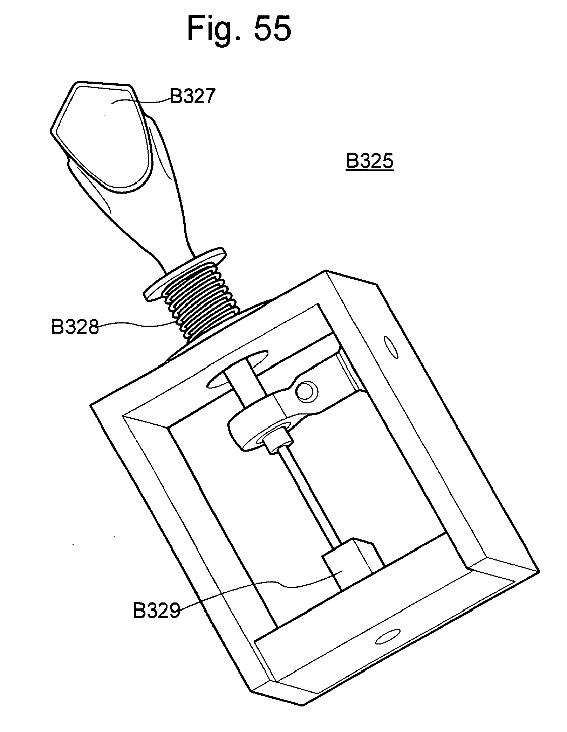

An input operation part B325 is disposed on the side arm B55 of the seat B50 in the terminal device B30. The input operation part B325 may be a so-called joystick device that includes an operation member B327 which is held while allowed to tilt in multiple directions and which is connected to a displacement sensor B329, a displacement sensor B329 which sends output to the CPU 91 in accordance with the multidirectional tilting of the operation member B327, and a returning elastic body B328 for returning the operation member B327 to a predetermined position, as shown in Fig. 55. The operation member B327 which the player can easily grasp is provided to the input operation part B325. The input operation part B325 has high endurance with respect to external forces caused by the player's actions, and is not damaged by the player's actions due to the fact that the operation member B327 is composed of a hard member.

The displacement sensor B329 may be a transmitting optical sensor in which a light-emitting element and a light-receiving element are disposed opposite each other, or may be a gyro sensor. The displacement sensor B329 transmits information relating to the amount and direction of displacement as an input signal to the CPU B91. The CPU B91 receives this input signal which relates to the amount and direction of displacement, and reflects the information in the amount and direction of movement of an action character in the game space. The returning elastic body B328 may be a spring or the like for returning the operation member B327 to a predetermined position.

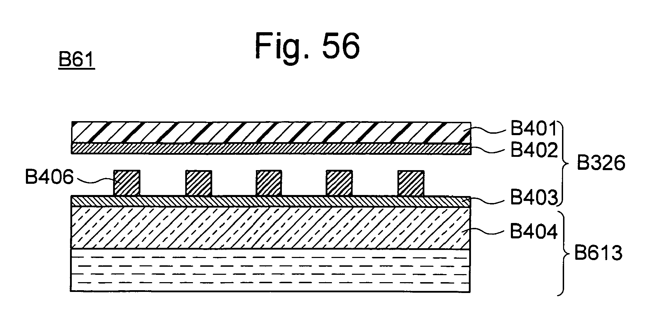

The liquid crystal display B61 of the terminal device B30 is a display device for displaying a game image, and may include a touch panel B326 provided with a selection input function whereby the player inputs selection input information in the game. Fig. 56 shows the configuration of an analog resistance film input panel as an example of the touch panel B326. A touch panel B326 that can preferably be used in the present invention may be realized by the configuration of the analog resistance film input panel described in Fig. 56, may be realized by another configuration, or may be realized by a method other than the one involving an analog resistance film input panel configuration.

Fig. 56 is an enlarged view of the surface of the liquid crystal monitor B613 of the liquid crystal display device B61. A touch panel B326 is disposed on the side facing the front surface of the liquid crystal monitor B613. In other words, a liquid crystal monitor B613 is disposed on the back surface of the touch panel B326. In the touch panel B326, a transparent electroconductive substance (for example, ITO, or indium tin oxide) is formed as a film on the opposing surfaces B402 and B403 of a top film B401 and a bottom glass B404. A dot spacer B406 prevents unwanted contact from being caused by the deflection of the film. In other words, the configuration is such that the transparent electroconductive material makes contact and electricity is conducted when a pressure force is applied to the top film B401. There is a possibility that using such a configuration will cause breakage in the top film B401 which forms the touch panel B326 and in the bottom glass B404 of the liquid crystal monitor B613 disposed on the back surface of the touch panel of the liquid crystal display B61, depending on the amount of pressure applied to the touch panel B326.

The game image displayed on the liquid crystal monitor B613 of the liquid crystal display device B61 is generated based on the game program executed in the CPU B91, and on the input signal from the input operation part B325.

The main terminal device body B30a includes a seat B50, a side unit B60 provided along one side surface of the seat 50, a seat shell B70 attached to the back of the seat B50 and the front of the seat B50, an input operation part B325 which receives input (i.e., a character's actions in the game) from the player and is disposed on the side arm B55 of the seat B50, and a medal collection part B73 that includes, among other things, a medal insertion part B74 to which medals are inserted.

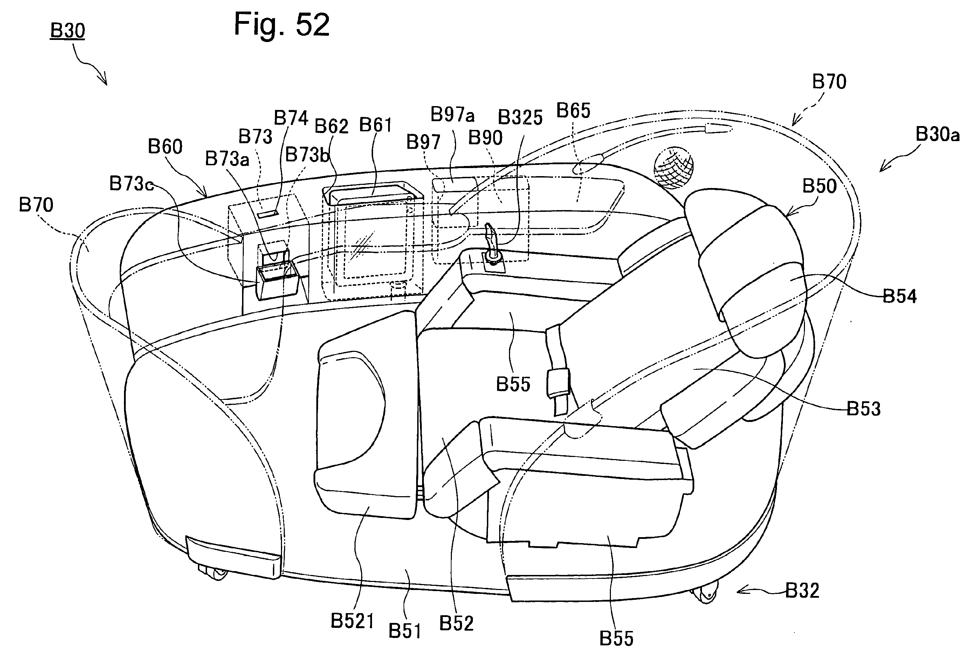

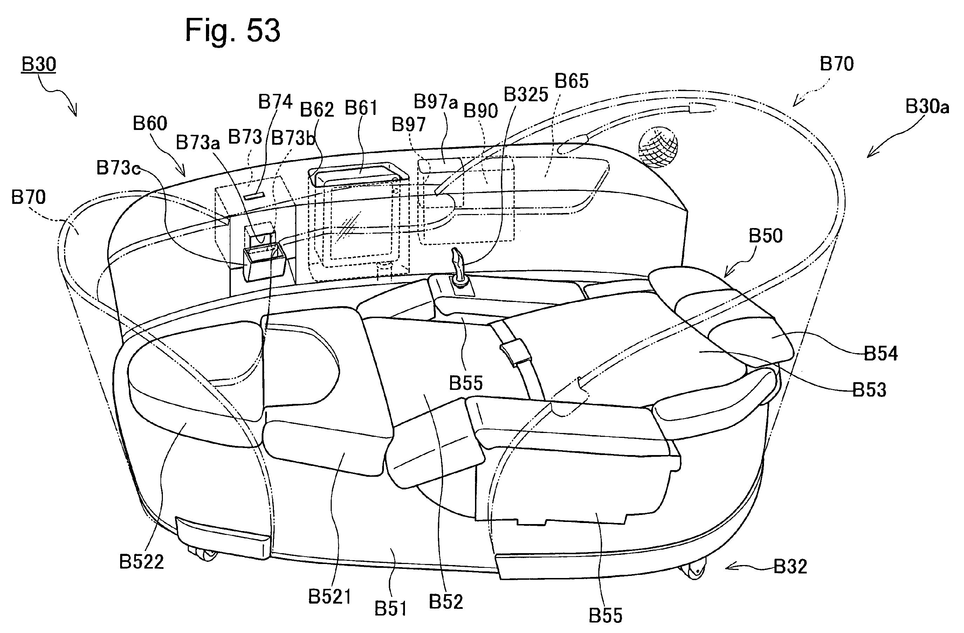

Fig. 52 is a perspective view in the seat mode of the main terminal device body B30a. Fig. 53 is a perspective view in the bed mode of the main terminal device body B30a.

As shown in Figs. 52 and 53, the seat B50 is adjustable to a seat mode and a bed mode. The seat recline angle can be adjusted in multiple steps between the seat mode and the bed mode.

The seat B50 includes a flat base part B51, a seating part B52 provided on top of this base part B51, a back rest B53 attached at a variable angle with respect to this seating part B52, a head rest B54 provided to the top of this back rest B53, and a pair of side arms B55 which are provided on the seat surface of the seating part and at positions on both sides of the back rest B53.

The seating part B52 moves back and forth on the base part B51 when the player operates the touch panel B326. The seat B50 changes shape from the seat mode shown in Fig. 52 to the bed mode shown in Fig. 53, and forms a bed by sliding the seating part B52 forward.

The seating part B52 includes a leg rest B521 which is provided on the front surface side, and a foot rest B522 which is stored in the tip of this leg rest B521. The leg rest B521 turns upward according to the sliding motion when the seating part B52 is slid forward, and becomes a seat surface which continues from the seat surface of the seating part B52. At the same time, the foot rest B522 projects from the leg rest B521 and becomes a seat surface which continues from the leg rest B521.

The back rest B53 reclines backward according to the extension and retraction of the seating part B52 on the base part B51. The front surfaces of the side arms B55 turn slightly upward when the seat B50 is changed to the bed mode.

A bag component, into which air can be injected, is embedded respectively within the seat surface of the seating part B52, the lower part of the back rest B53 (which comes into contact with the lower back of the player) and the head rest B54. When air is injected into these bag components by an air pump, the surface swells and can support the user while accommodating the contours of the body surface of the user.

A liquid crystal monitor storage part B62 which extends in the vertical direction is provided to the side unit B60. The liquid crystal display device B61, which comprises the above-described first support arm B611, second support arm B612, and liquid crystal monitor B613, is stored in the liquid crystal monitor storage part B62.

In addition, a sub-control device B90 connected by wireless LAN to the main control device B80, and a plurality of board storage slots B97 constituting the sub-control device B90 are provided within the side unit B60.

The sub-control device B90 controls the transmitting part B64 for transmitting game images to the liquid crystal display device B61, a liquid crystal monitor driving control device B63 for driving the liquid crystal display device B61, and the traveling part B32 on the basis of instructions from the main control device A80; and transmits signals that have been input through the input operation part B325 and touch screen B326 to the main control device B80. The transmission of the game image from the transmitting part B64 to the liquid crystal display device B61 may be wired or wireless.

In addition, a cover part B97a is provided to open and close freely to the upper part of the board storage slots B97. By opening the cover part B97a and inserting a terminal control board B97b from above, as shown in Fig. 51, the terminal control board B97b can be mounted in the board storage slot B97

The seat shell B70 extends upward in the rear portions of the side surfaces along the back surface of the seat B50, so that the player seated on the seat B50 cannot be seen by other players. In addition, the seat shell B70 can support a back rest B53 and head rest B54. Furthermore, speakers B75 are provided on both sides of the head rest B54 within the seat shell B70.

A table B71 is attached to the upper end of the seat shell B70 from one side surface of the seat B50 to the front surface. The space beneath this table B71 receives the leg rest B521 and foot rest B522 when the seat B50 changes to the bed mode.

A medal payout opening B73a from which medals are paid out from the medal collection part B73 provided within the side unit B60, a medal receiving part B73b for receiving the medals which are paid out, and a medal insertion part B74 to which medals are inserted are provided below the table B71 and in front of the side arm B55. A reception opening (not shown) for attaching a medal holder B73c is provided to the medal receiving part B73b. In addition, a sensor for detecting that a medal is inserted is installed in the medal insertion part B74. The game is started when the insertion of a medal is detected by this sensor and a game start instruction signal is transmitted from the sub-control device B90 to the main control device B80.

The liquid crystal display device B61 includes a first support arm B611 which is supported by the side unit B60, a second support arm B612 which is attached to the tip of the first support arm B611, and a flat, rectangular liquid crystal monitor 613 which is attached to the tip of the second support arm B612 and performs liquid crystal display. In addition, the first support arm B611 and second support arm B612 are driven and controlled by the liquid crystal monitor driving control device B63.

The first support arm B611 can be extended and retracted freely in the direction vertical to the side unit B60. The second support arm B612 can extend and retract freely and can be fixed at an arbitrary angle in relation to the axis direction of the first support arm B611. The liquid crystal monitor B613 can be fixed at an arbitrary angle in relation to the axis direction of the second support arm 612.

The liquid crystal monitor driving control device B63 is controlled by the sub-control device B90. The sub-control device B90 gives instruction to move the liquid crystal monitor B613 to a predetermined position to the liquid crystal monitor driving control device B63 when an instruction signal for the pulling-out of the liquid crystal display device B61 due to the start of a game is received from the main control device B80. The liquid crystal monitor driving control device B63 moves the liquid crystal monitor B613 to the predetermined position when this instruction signal is received. Here, the predetermined position is a position placed facing the player seated in the seat B50, and for example, can be placed at the player's eye level.

A small CCD camera B614 is embedded in the liquid crystal monitor B613. The image taken by the CCD camera B614 is displayed constantly in the liquid crystal display device B61 of the terminal device 30. Because the expressions of the player per se can be viewed during the game in this way, enjoyment increases. In this case, the photographed image can be shown on the entire screen of the liquid crystal monitor B613 or in one section of the screen.

### Configuration of the Sub-Control Device

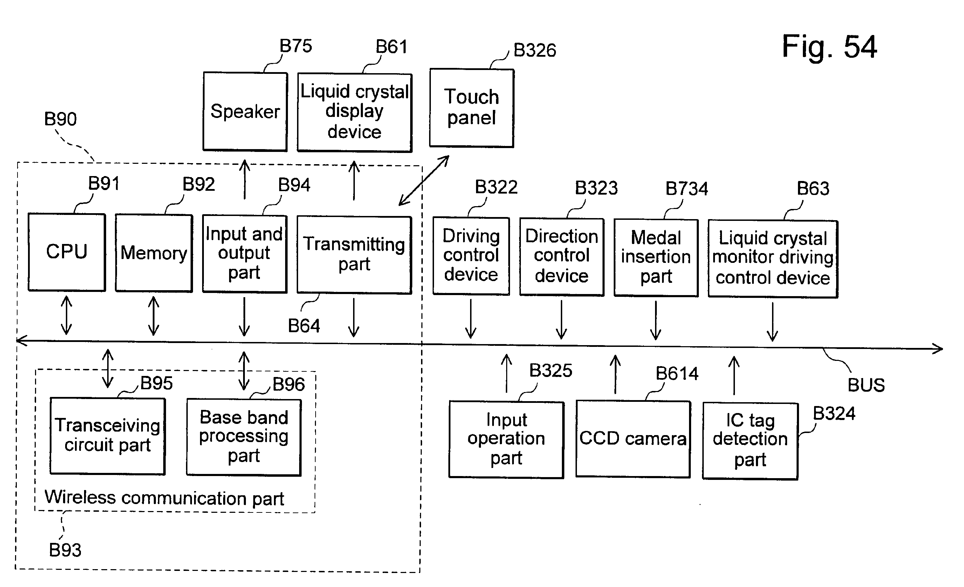

Fig. 54 is a block diagram showing the configuration of the sub-control device B90. The sub-control device B90 has a CPU B91, a memory B92, a wireless communication part B93, an input and output part B94 which is the interface with the speaker B75, and a transmitting part B64 which is the interface with the liquid crystal display device B61, which are connected to a data bus BUS.

The wireless communication part B93 includes a transceiving circuit part (RF) B95 for transmitting and receiving signals with the main control device B80, and a base band processing part B96 for converting RF (Radio Frequency) signals received by the transceiving circuit part B95 into base band signals and also converting base band signals to be transmitted into RF signals. In addition, the sub-control device B90 controls the driving control device B322, the direction control device B323, and the liquid crystal display device B61, based on the input signals from the input operation part B325, the touch panel B326, the medal insertion part B734, the CCD camera B614, and the IC tag detection part B324.

The CPU 91 executes various operations according to the operation programs stored in the memory B92, and controls the respective circuit parts and devices in accordance with the operations.

Image data signals generated by the main control device B80 are output from the liquid crystal monitor B613 through the following procedure. When the RF signal is received from the main control device B80, the transceiving circuit part B95 supplies this signal to the base band processing part B96 and converts this RF signal to a base band signal. The base band processing part B96 outputs this base band signal to the liquid crystal monitor B613 via the transmitting part B64. Then, this base band signal is output from the liquid crystal monitor B613 as an image.

In addition, sound signals from the main control device B80 are output from the speaker B75 in the same way by the foregoing procedure. In other words, when the RF signal is received from the main control device B80, the transceiving circuit part B95 converts this RF signal to a base band signal in the base band processing part B96. The base band processing part B96 outputs this base band signal to the speaker B75 as sound, by outputting from the speaker B75 via the input and output part B94.

Furthermore, after converting various information (e.g., letter information and/or specific selection information, game start and completion information, etc.) that the player inputs by operating the touch panel B326 into packet data, the CPU B91 transmits this to the main control device B80 via the band base processing part B96 and the transceiving circuit part B95. The information that is input by the player via the touch panel B326 may be any information, excluding information input to manipulate an action character within the game. On the other hand, after converting information relating to the movement of an action character that the player inputs by operating the input operation part B325 into packet data, the CPU B91 transmits this to the main control device B80 via the band base processing part B96 and the transceiving circuit part B95. At this time, each terminal device B30 can be identified regardless of the position the terminal devices B30 are placed on the play area B21 by including IP addresses in the packet data. Similarly, the CPU B91 converts positional information read from the IC tag B211 by the IC tag detection part B324 and image information perceived by the CCD camera B614 into packet data, and transmits this to the main control device B80.

On the other hand, when an RF signal to which information converted into packet data is superimposed is transmitted from the main control device B80, the CPU B91 receives this RF signal via the transceiving circuit part B95 and the base band processing part B96, displays it in the liquid crystal display monitor B613 and, in addition, controls the driving control device B322, the direction control device B323, and the liquid crystal monitor driving control device B63 of the traveling part B32.

In other words, when the CPU B91 receives the game program and information expressing the game status corresponding to the time-line in the game field at that time from the main control device B80, the CPU B91 shows various occurrences, such as events, occurring in the game field at this time according to the game program in the liquid crystal display device B61, outputs sound effects from the speaker B75, and moves the main terminal device body B30a after storing the information, such as the game program, transmitted from the main control device B80 in the memory B82.

In addition, by operating the touch panel B326 while viewing the game content (image, letter information, etc.) shown in the liquid crystal monitor B613, the player using respective terminal device B30 can operate the action characters shown on the main display device B22 by operating the input operation part B325, participate in the progress of the game by operations such as selecting from a selection by letters, and move the terminal device B30 to a designated position on the play area B21. Switching of the Input Part According to the Game Progress

In game processing, the player performs a preliminary setup (avatar creation in STB 12) for the game progress before the start of the game (STB 14), as described above. The input part used during this setup may be limited to only the touch panel B326. In other words, the CPU 91 does not process the input signal from the input operation part B325 even if the input signal is received during the preliminary setup for the game progress. According to this aspect, the preliminary setup for the game progress (settings based on the selection input from the player) in which an avatar is created can be performed by input from the touch panel B326, to which selection input can be easily made by the player. In addition, it is possible to avoid situations in which an avatar is set by an erroneous input (for example, erroneous operation resulting from the player's arm slipping when the terminal device B30 moves) through the input operation part B325.

The actual game starts after the player completes the above-described preliminary setup. A mode may also be adopted in which input is received only from the input operation control part B325 without being received from the touch panel B326 simultaneously with the start of the game. In other words, operations to move an action character within a game space based on input from the input operation part B325 are made possible because, when the game starts, the CPU B91 processes only the input signal from the input control part B325 without processing the input signal from the touch panel B326 even if the input signal from the touch panel B326 is received. According to this aspect, input cannot be received from the touch panel B326 after the game starts, making it possible to prevent situations in which the player performs erroneous operations by accidentally making contact with the touch panel B326 as a result of, for example, the terminal device B30 being moved. It is thus possible to adopt an aspect in which the CPU B91 does not receive input signals from the touch panel B326 after the game starts, but the input from the touch panel B326 is received when the player is prompted to make a selection (excluding manipulating an action character) to allow the game to progress. In other words, it is possible to adopt an aspect in which, as an exception, the CPU B91 receives an input signal from the touch panel B326, and a process that corresponds to this input is performed even when the game has started if the player performs a setting operation that corresponds to the above-described preliminary setup (such as an input to adjust the seat B50 or a selection operation within the game space).

Although the embodiments of the present invention are described above, the present invention is not limited to the foregoing embodiments and includes modifications, improvements and the like which achieve the objects of the present invention. In addition, the effects described in the embodiments of the present invention are merely a listing of the most preferable effects attained by the present invention, and the effects of the present invention are not limited to the effects described in the embodiments of the present invention.

## Claims

1. A game machine comprising:
a game controller for receiving input from a player;
a monitor for receiving externally or generating internally and showing a game screen, generated according to a game program;
a control means for executing the game program;
a seat part for seating the player; and
a card reception part for receiving a card for playing a game;
in which said seat part includes a seating detection means for detecting that a player is seated and a notification means for performing notification when a seated player is not detected and said card is inserted into said card reception part.

2. The game machine according claim 1, wherein:
said card comprises a memory for storing credit data to which subtraction processing is performed when said game program is executed;
wherein said control means executes the game program by performing subtraction processing on said credit data read by said card reception part included in said seat part.

3. A game machine comprising:
a main game machine body which comprises a memory means for storing a game program and a main control means for executing said game program stored in said memory means; and
a plurality of terminal devices which comprise an input means and a sub-control means connected to said main game machine body through wireless connection, for transmitting game input data according to input from said input means to main control means of said main game machine body;
a display means for displaying image based on image data output from said main control means,
wherein said main control means receives a plurality of game input data from said plurality of terminal devices, generates a single game data corresponding to each terminal device based on the game input data, and generates and outputs to said display means image data which is shared by all terminal devices based on said single game data;
said terminal device comprises a seat part for enabling the player to be seated;
said seat part comprises a card reception part to which a card storing individual data of said player is inserted, for reading said individual data, and a seat detection part for detecting that said player is seated;
said card reception part includes a card detection part for detecting that a card is inserted into said card reception part;
said sub-control means executes said game program based on the individual data read from said card reception part and/or game input data received by said input means; and
said sub-control means includes a notification means for giving notification when said card detection part detects said card and said seating detection part does not detect seating.

4. The game machine according to claim 3, wherein:
said card comprises a memory for storing credit data to which subtraction processing is performed when the execution of said game program starts;
wherein said sub-control means executes said game program by performing subtraction processing on said credit data read by said card reception part.

5. The game machine according to one of claims 3 and 4, wherein:
said sub-control means comprises a time measurement means for measuring time;
said notification means further comprises a lamp part for emitting light,
a sound output part for performing notification by sound, and
a sub-display part for showing image data generated by said sub-control means;
wherein, when said seating detection part does not detect seating and said card detection part detects said card, said sub-control means transmits a first notification start signal,
said sub-display part shows at least one of the data read by said card reception part in response to receiving said first notification start signal,
said sound output part outputs at least one of the data read by said card reception part in response to receiving said first notification start signal,
said time measurement means measures the time from said first notification start signal, and
after a predetermined amount of time passes, if said seating detection part does not detect seating and said card detection part detects said card, said sub-control means transmits a second notification start signal,
said lamp part is illuminated in response to receiving said second notification start signal, and
said sound output part gives second notification by sound in response to receiving said second notification start signal.

6. The game machine according to claim 5, wherein:
said sub-display part comprises a support part, fixed at one end to said seat part and connected at the other end to said sub-display part, for supporting said sub-display part to enable positional changes, and
a fixation driving mechanism for fixing said sub-display part with said support part so as to face the player in a state enabling viewing;
wherein said sub-control means transmits a sub-display fixation release signal to said fixation driving mechanism if said card detection part does not detect said card in said card reception part, and
said fixation driving mechanism releases fixation of said sub-display part.

7. The game machine according to claim 5, wherein:
said card reception part further comprises a card holding part for holding said card and a card transfer part for transferring said card to said card holding part;
wherein said time measurement means measures the amount of time from said second notification, and
said card transfer part transfers said card to said card holding part, when the time measured by said time measurement means reaches a predetermined amount of time and said card detection part detects the card.

8. The game machine according to claim 7, wherein:
said card holding part comprises a holding detection part for detecting that said card transfer part has transferred said card to said card holding part and transmitting a holding completion signal;
wherein said sub-control means gives notification through said notification means in response to receiving said holding completion signal.

9. The game machine according to claim 5, wherein:
said sub-display part comprises a support part, joined by more than two support bodies, for supporting said sub-display part to enable stretching and contracting, and
a fixation part for fixing a joining part of said more than two support bodies,
wherein said sub-control means transmits a sub-display fixation signal if said sub-control means transmits a game completion signal to said main control means and said card detection part detects said card ;
wherein said fixation part fixes said sub-display part by receiving a sub-display fixation signal;
wherein said sub-control means transmits a sub-display fixation release signal if said card detection part does not detect said card inserted into said card reception part; and
wherein said sub-display part releases fixation by receiving said sub-display fixation release signal.

10. The game machine according to claim 9, wherein:
said card reception part which further includes a card holding part for holding the card and said time measurement means for measuring the amount of time from the second notification, and said card reception part holds the card, after a predetermined amount of time passes and the card detection part detects the card.

11. The game machine according to claim 9, wherein: said terminal devices include a movement means, which is provided on the lower part of the seat part, for moving the seat part; and said sub-control means includes a movement control means for driving said movement means.

12. A game machine comprising:
an input reception part for receiving input from a player; and
a control part for controlling game input data that corresponds to input from said input reception part;
a seat on which said player sits, and a seat shell which surrounds said seat;
a card reception part into which a card provided with memory for storing the individual data of said player is inserted from the outside and which reads said individual data, wherein said seat comprises a leg rest linked to the seating part of said seat and connected via a hinge part;
a card detection part for detecting that said card has not been inserted into said card reception part;
a leg rest driving part for collapsing and storing said leg rest via said hinge part in response to said card detection part detecting that a card has not been inserted; and
a reconfiguring drive part for contracting said seat shell in the longitudinal direction when the leg rest is collapsed and stored by the leg rest driving part.

13. A game machine comprising:
a game controller for receiving input from a player;
a display part for receiving externally or generating internally and showing a game image, generated according to a game program;
a seat part for seating the player;
a control means for executing said game program; and
a lock means which has an anti-theft mechanism for hanging or holding the player's belongings, which is normally in an unlocked state and enters a locked state in response to the start of a game.

14. The game machine according to claim 13, wherein:
said lock means comprises a U-shaped hook part having an upper aperture and connected to said seat part,
a stopper for closing said upper aperture and preventing the object-to-be-hung hooked to said hook part from being removed,
a lock control part for switch-controlling said upper aperture to both closed and open state by engaging said stopper to said upper aperture or releasing the engagement, and
a load detection part for detecting that said object-to-be-hung is hung on said hook part;
wherein said lock control part changes said upper aperture from an open-state to a closed-state by said stopper, in response to said load detection part detecting that said object-to-be-hung is hung on said hook part and a predetermined excessive load is applied.

15. The game machine according to claim 13, wherein:
said lock means comprises a U-shaped hook part having an upper aperture and connected to the seat part,
a stopper for closing said upper aperture and preventing the object-to-be-hung hooked to the hook part from being removed,
a lock control part for switch-controlling said upper aperture to both closed and open state by engaging said stopper to said upper aperture or releasing the engagement;
wherein said game machine comprises a game medium insertion part for inserting a predetermined game medium;
said game medium insertion part includes a game medium insertion detection part for detecting that said predetermined game medium has been inserted;
said seat part includes a seating detection part for detecting that said player is seated; and
said lock control part changes said upper aperture from an open-state to a closed-state by said stopper, in response to said game medium insertion detection part detecting the insertion of said predetermined game medium or said seating detection part detecting that said player is seated.

16. The game machine according to claim 15, wherein:
said seating detection part which transmits a lock release signal when the seating of said player is not detected; and
said lock control part which changes said upper aperture from an open-state to a closed-state by the stopper, in response to receiving said lock release signal.

17. The game machine according to claim 16, comprising:
a time measurement part for measuring time;
wherein said time measurement part measures time in response to the transmission of said lock release signal from said seating detection part, and
said lock control part receives said lock release signal and changes said upper aperture from an open-state to a closed-state by said stopper, in response to the passage of a predetermined amount of time measured by said time measurement part.

18. The game machine according to any one of claims 14 to 17 to wherein:
said seat part comprises a seat shell for covering the surrounding area of said seat part,
wherein said hook part is attached to the outside of said seat shell.

19. The game machine according to any one of claims 14 to 17 comprising:
a photographing means for photographing an image of the object-to-be-hung when said hook part is in a closed-state;
wherein said display part shows the image of the object-to-be-hung taken by said photographing means.

20. The game machine according to any one of claims 13 to 17, wherein:
said seat part comprises a movement means which is provided on the lower part of said seat part, for moving said seat part; and
said control means comprises a movement control means for driving said movement means.

21. A game machine comprising:
a main game machine body having storage means for storing a game program, and main control means for executing said game program stored in said storage means;
a plurality of terminal devices having input means for receiving input from a player, and sub-control means wirelessly connected to the main game machine body and used to transmit to said main control means game input data that corresponds to the input received from said input means; and
display means for displaying an image based on image data output from said main control means; wherein
the main control means receives the plurality of game input data transmitted from said plurality of terminal devices, generates a single piece of game data in accordance with said game program on the basis of the plurality of game input data, generates image data common to all of said plurality of terminal devices based on said single piece of game data, and outputs the image data to the display means;
said terminal devices comprise a seat which allows said input means to be operated while said player is seated, a hook part mounted on said seat, a stopper for blocking a support portion of said hook part, and a lock control part for locking said stopper;
the hook part comprises said support portion, a storage part for storing said lock control part and said stopper disposed on said support portion, and a load detection part for detecting the loading of said hook part;
said stopper is capable of extending from said storage part to the tip of said support portion;
the tip of said stopper has a contact part for making contact with the inside of said support portion;
said load detection part transmits a lock signal when the load detection part has detected that said hook part has been loaded; and
said lock control part extends and locks said stopper in response to receiving said lock signal.

22. The game machine according to claim 21 wherein:
said terminal device has a game medium insertion part for inserting a predetermined game medium;
said game medium insertion part has a game medium insertion detection part for detecting the insertion of said predetermined game medium;
said sub-control means transmits a game start signal to said main game machine body in response to said game medium insertion detection part detecting that said predetermined game medium has been inserted;
the seat has a seating detection part for detecting that said player is seated;
the seating detection part transmits a lock signal in response to detection that said player is seated; and
the game medium insertion detection part transmits a lock signal in response to detection that said game medium has been inserted.

23. The game machine according to one of claims 21 and 22, wherein:
said terminal device has a card insertion part for inserting a card used to activate said terminal device;
said card insertion part has a card insertion detection part for detecting that said card has been inserted;
said sub-control means transmits a game start signal to said main game machine body in response to said card insertion detection part detecting that said card has been inserted; and
said card insertion detection part transmits a lock signal in response to detection that said card has been inserted.

24. The game machine according to one of claims 21 and 22, wherein:
said load detection part transmits a lock release signal when it is not detected that said hook part is loaded;
said seating sensor transmits a lock release signal when it is not detected that said player is seated;
said sub-control means transmits a lock release signal in response to the end of the game; and
said lock control part releases the lock of the stopper in response to any of said lock release signals being received.

25. The game machine according to one of claims 21 and 22, wherein:
said terminal device has a seat shell which covers the area surrounding said main seat body; and
said main hook body is attached to the outside of said seat shell.

26. The game machine according to one of claims 21 and 22, wherein:
said terminal device has movement means attached to the bottom of said main seat body and used to move said seat; and
said sub-control means has movement control means for driving said movement means.

27. A game machine comprising:
an input reception part for receiving input from a player;
a control part for controlling game input data according to input from said input reception part; and
a seat part for seating said player; wherein
said seat part further comprises:
a seating part whose lower side is provided with a pointed hook part;
a hollow holder which is disposed on the bottom of said seating part, which forms a hook reception part capable of receiving said hook part, and which opens on the upper surface;
a hinge part for pivotally supporting said seating part so that said opening can be opened and closed;
an urging part for urging said seating part in the opening direction;
a lock part for fixing said hook part and said hook reception part in a fitted state; and
a lock control part for controlling said lock part and establishing a fixed or unfixed state; and wherein
said control part is capable of transmitting a lock release signal to said lock control part to change said lock part from a fixed state to an unfixed state; and
said lock control part changes said lock part from a fixed state to an unfixed state in response to said lock release signal being received.

28. A game machine comprising:
a game controller for receiving input from a player;
a flat display for receiving externally or generating internally and showing a game image, generated according to a game program; and
a seat for seating the player;
wherein said flat display is provided separately from said game machine, is normally stored within a storage part for storing said flat display, and includes a driving mechanism for moving said flat display to a predetermined position and into a state enabling play when the game is started, and on the other hand, automatically stores said flat display into said storage part when the game is completed.

29. A game machine comprising:
a main game machine body comprising a memory means for storing a game program,
a control means for executing said game program stored in said memory means,
an input means for receiving input from the player, and
a game medium storage means, having a game medium insertion part and a game medium payout part, for storing game media inserted from said game medium insertion part;
a flat display for showing said game image generated by said control means according to input from said input means; and
a transmitting part for transmitting said game image to said flat display; wherein said flat display is provided separately from said main game machine body via a connection device.

30. The game machine according to claim 29, wherein:
a seat for enabling the player to play in a seated state is provided integrally in said main game machine body,
said main game machine body comprises a storage part for storing said flat display; and
said connection device comprises, at the least, a connection rod of which one end is fixed to said main game machine body and the other end is connected to said flat display;
wherein said connection device moves said flat display to a predetermined position and into a state enabling play from a state of storage within said storage part during a normal state, with the reception of a game start signal from said control means as a trigger, and on the other hand, is connected to a driving mechanism for automatically storing said flat display into said storage part, with the reception of a game completion signal from said control means as a trigger.

31. The game machine according to one of claims 29 and 30, wherein:
said game medium storage means comprises a level sensor for transmitting an empty signal, in response to detecting that the storage level of said game media stored within said game medium storage means is below a predetermined level.

32. A game machine comprising:
a main game machine body comprising a memory means for storing a game program, and
a main control means for executing said game program stored in said memory means;
a main terminal device body comprising an input means for receiving input from the player,
a game medium storage means, having a game medium insertion part and a game medium payout part, for storing inserted game media, and
a sub-control means for transmitting game input data according to input from said input means, connected by wireless connection to said main game machine body, to said main control means of said.main game machine body;
a flat display for showing game image generated by said main control means according to input from said input means and said game program and
a transmitting part for transmitting said game image to said flat display; and
a main display means for showing images based on image data output from said main control means;
wherein said main control means receives a plurality of game input data from said plurality of terminal devices, generates a single game data according to said game program, based on said plural game input data, generates image data which is shared with all of said terminal devices, based on said generated single game data, and outputs this data to said main display means; and
said flat display is provided separately from said main terminal device body via a connection device.

33. The game machine according to claim 32, wherein:
a game machine comprising:
a seat for enabling the player to play in a seated state is provided integrally in said main game machine body;
said main game machine body comprising a storage part for storing said flat display;
a connection device comprising, a connection rod of which one end is fixed to said main terminal device body and the other end is connected to said flat display;
wherein said connection device moves said flat display to a predetermined position and into a state enabling play from a state of storage within said storage part during a normal state, with the reception of a game start signal from said main control means as a trigger, and on the other hand, is connected to a driving mechanism for automatically storing the flat display into said storage part, with the reception of a game completion signal from said main control means by said sub-control means as a trigger.

34. The game machine according to one of claims 32 and 33, wherein:
said game medium storage means comprises a level sensor for transmitting an empty signal, in response to detecting that the storage level of the game media stored within said game medium storage means is below a predetermined level.

35. A game machine comprising:
a seating part for seating a player;
storage means for storing a game program;
control means for executing said game program stored in said storage means;
input operation means in which tilting in multiple directions is performed, whereby an input signal that corresponds to said tilting is transmitted to said control means, and the control means makes it possible to move an action character within a game space realized by the execution of said game program; and
a flat display for displaying a game image generated by said control means based on said game program and on the input signal from said input operation means; wherein
a touch panel for receiving selections from said player within the game space based on said game program is further provided on the front surface of said flat display; and
the input operation means is disposed in the vicinity of said seating part and is used to operate the movements of an action character in said game program.
